(19) Europäisches Patentamt / European Patent Office / Office européen des brevets

(11) EP 2 951 216 B1

(12) # EUROPÄISCHE PATENTSCHRIFT

(45) Veröffentlichungstag und Bekanntmachung des Hinweises auf die Patenterteilung:
**18.07.2018 Patentblatt 2018/29**

(21) Anmeldenummer: **14702814.6**

(22) Anmeldetag: **31.01.2014**

(51) Int Cl.:
***C08F 12/28*** *(2006.01)* ***C08L 25/18*** *(2006.01)*
***A01N 33/04*** *(2006.01)*

(86) Internationale Anmeldenummer:
**PCT/EP2014/051955**

(87) Internationale Veröffentlichungsnummer:
**WO 2014/118339 (07.08.2014 Gazette 2014/32)**

(54) **ANTIMIKROBIELLES POLYMER**

ANTI-MICROBIAL POLYMER

POLYMÈRE ANTIMICROBIEN

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.01.2013 EP 13000471**
**28.03.2013 EP 13001644**

(43) Veröffentlichungstag der Anmeldung:
**09.12.2015 Patentblatt 2015/50**

(73) Patentinhaber: **Fachhochschule Münster**
**48565 Steinfurt (DE)**

(72) Erfinder:
- **KREYENSCHMIDT, Martin**
  **49393 Lohne (DE)**
- **LORENZ, Reinhard**
  **48565 Steinfurt (DE)**
- **FISCHER, Björn**
  **48369 Saerbeck (DE)**
- **KREYENSCHMIDT, Judith**
  **53359 Rheinbach (DE)**
- **BRODKORB, Florian**
  **48161 Münster (DE)**
- **KALBFLEISCH, Katrin**
  **48329 Havixbeck (DE)**
- **BLANG, Tobias**
  **48143 Münster (DE)**
- **GESCHWENTNER, Adrian**
  **48565 Steinfurt (DE)**

(74) Vertreter: **Ter Meer Steinmeister & Partner**
**Patentanwälte mbB**
**Nymphenburger Straße 4**
**80335 München (DE)**

(56) Entgegenhaltungen:
**US-A- 4 447 580** **US-A1- 2006 228 966**
**US-A1- 2006 234 059**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 951 216 B1

**Beschreibung**

Die Erfindung betrifft ein antimikrobielles Polymer, das bevorzugt thermoplastisch verarbeitbar ist, ein Verfahren zu dessen Herstellung sowie dessen Verwendung zur antimikrobiellen Ausrüstung. Die Erfindung betrifft ferner Polymerblends enthaltend antimikrobielle Polymere und die Verwendung spezieller Monomere zur Herstellung von antimikrobiellen Polymeren, die thermoplastisch verarbeitbar sind.

Es ist seit langem bekannt, dass Polymeren durch Zugabe geeigneter Zusätze, wie z. B. Silber, Zink oder Kupfer antimikrobielle Eigenschaften verliehen werden können. Dass Silber unter Laborbedingungen antimikrobiell wirkt, ist vielfach nachgewiesen (Carr et al. 1973, Russel & Hugo 1994, Hipler et al. 2006, Kampmann et al. 2008b). Das Wirkprinzip basiert darauf, dass freigesetzte Silberionen mit unterschiedlichen Komponenten der bakteriellen Zelle reagieren. Die antimikrobielle Wirkung ist jedoch hier oft nur mäßig und zeitlich begrenzt, da die antimikrobiell wirkenden Additive häufig aus dem Kunststoff migrieren. Eine entsprechende Anwendung ist in verschiedenen Patentanmeldungen beschrieben.

DE 10 2008 062 824 A1 beschreibt eine antimikrobielle Wundauflage, DE 10 2008 013 143 A1 beschreibt ein silberhaltiges Silansystem zur Beschichtung, DE 10 2007 035 063 A1 beschreibt die Verwendung von Silberorthophosphat in Kunststoffen, DE 10 2006 006 675 A1 beschreibt die Verwendung von Silber-Kupfer-Nanopartikeln in Keramiken.

Des Weiteren sind im Stand der Technik Polymere bekannt, die intrinsisch antimikrobielle Eigenschaften aufweisen, d.h. das Polymer ist "von sich heraus" und ohne externe Zusätze antimikrobiell. Es sind z.B. aus DE 100 24 270 sogenannte kontaktmikrobizide Polymere bekannt. So beschreibt beispielweise DE 197 09 076 antimikrobielle Kunststoffe, die durch Polymerisation von tert.-Butylaminoethylmethacrylat hergestellt wurden und DE 199 21 903 A1 Copolymere auf Basis tert.-Butylaminoethylmethacrylat.

Weitere aus dem Stand der Technik bekannte intrinsisch antimikrobielle Polymere weisen quaternäre Ammonium- oder Phosphoniumstrukturen auf. Hierbei handelt es sich um hydrophile Polymere, die zumeist eine hohe Wasserverträglichkeit in Form von ausgeprägter Quellbarkeit bis hin zur Löslichkeit sowie insgesamt niedrige Wärmeformbeständigkeiten und unzureichende Werkstoffeigenschaften aufweisen. Eine Verwendung dieser Polymere als breit einsetzbare Kunststoffwerkstoffe ist daher nicht gegeben. EP 663 409 A1 beschreibt z.B. antimikrobielle Polymere, die durch Homo- oder Copolymerisation von Monomeren mit quaternären Phosphorverbindungen hergestellt werden. Diese Polymere weisen ein breites antimikrobielles Spektrum auf und wirken selbst bei geringen Kontaktzeiten. Weiterhin wird die Herstellung eines antimikrobiellen Harzes beschrieben, dessen antimikrobielle Wirkung ebenfalls auf quaternären Phosphorverbindungen beruht. Die so gewonnenen Polymere sollen z.B. dazu dienen, Kontaktlinsen und die dafür notwendigen Reinigungs- und Pflegeprodukte sowie die Aufbewahrungsbehälter für Kontaktlinsen antimikrobiell auszustatten und somit einen Befall durch Bakterien und Pilze zu verhindern. Dies ist notwendig, da Kontaktlinsen im direkten Kontakt mit der Hornhaut des Auges stehen, wo Bakterien und Pilze zu schmerzhaften Entzündungen und Schädigungen führen können.

Für die Herstellung der Homo- und Copolymere verwendete Monomere offenbaren beispielweise DE 10 008 177 A1 oder EP 0 611 782 A1. Eine typische Monomerstruktur (siehe EP 0 663 409 A1) ist z.B.:

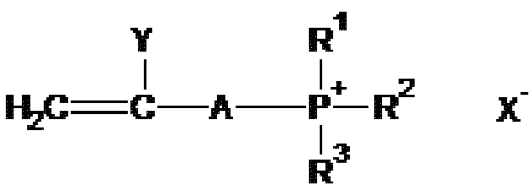

Ein polymeres Quat mit einem Polystyrol-Rückgrat beschreibt z.B. US 4,482,680; die dort eingesetzten Monomere basieren auf Vinylbenzylchlorid (VBC).

Alle offenbarten Kunststoffe weisen jedoch ungenügende mechanische Eigenschaften auf. Ferner zeigen die Kunststoffe eine hohe Hydrophilie und eine geringe Wärmeformbeständigkeit. Weiterhin neigen die neutralen (nicht auf quaternären Verbindungen beruhenden) intrinsisch antimikrobiellen Polymere, die bisher hergestellt wurden, zu oxidativ induzierten Alterungsprozessen, die sich sowohl in einer Verfärbung als auch in einer Reduzierung der Langzeitstabilität widerspiegeln. Aufgrund der ungenügenden Eigenschaften können die bis heute hergestellten intrinsisch antimikrobiellen Polymere nicht mittels thermoplastischer Umformverfahren (Techniken der Kunststofftechnologie wie Extrusion, Spritzguss etc.) zu Produkten verarbeitet werden, die dem Anforderungsprofil herkömmlicher Polymerwerkstoffe genügen und eine breite applikative Nutzung gestatten.

In US 2006/228966 A1 wird beschrieben, wie mit Hilfe von chemischer Gasphasenabscheidung Oberflächen mit antimikrobiellen Poly(diemthylamino)-methylstyrol befilmt werden. Die Schrift offenbart weder eine thermoplastische Verarbeitung noch eine Glastemperatur von 60 bis 200 °C

In US 2006/234059 A1 wird eine modifizierte Elektrode beschrieben, die unter anderem auch ein funktionelles, organisches Material wie Poly(N,N-dibutylamino-methylstyrol) oder Poly(N,N-diethylaminomethylstyrol) umfasst. Die Schrift befasst sich nicht mit thermoplastisch verarbeitbaren Polymeren.
US 4 447580 A bezieht sich auf eine Harzzusammensetzung, die neben einem Polymer (A) wie N-isopropylaminomethylstyrol, N-t-butylaminomethylstyrol, N-pentylaminomethylstyrol ein Polymer (B) mit einer elektronenanziehenden Gruppe und einer dazu benachbarten ethylenischen Doppelbindung enthält, wobei die Zusammensetzung bei höheren Temperaturen quervernetzt und gehärtet wird. Das hergestellte Harz ist nicht thermoplastisch verarbeitbar.
US 4 447 580 A betrifft eine Harzzusammensetzung, welche ein Polymer (A), das eine speziell substituierte Aminogruppe enthält, sowie ein Polymer (B), das eine elektronenanziehende Gruppe und eine ethylenische Doppelbindung in $\alpha$, ß-Stellung dazu enthält, umfasst.
Im Stand der Technik werden somit keine Produkte beschrieben, die sowohl antimikrobiell als auch thermoplastisch verarbeitbar sind.

## Aufgaben der Erfindung

Vor diesem Hintergrund war es Aufgabe der Erfindung, Polymere bereit zu stellen, die einerseits eine antimikrobielle Wirkung, bevorzugt eine intrinsische antimikrobielle Wirkung, und anderseits eine für die werkstoffliche Anwendung ausreichende Wärmeformbeständigkeit ausweisen. Damit soll eine Weiterbearbeitung zu Formkörpern mittels thermischer Umformverfahren ermöglicht werden, ohne dass die Aufbringung auf ein Substrat zwingend erforderlich ist. Ferner sollen Polymere bereitgestellt werden, die die gewünschten Eigenschaften, insbesondere eine ausreichende Wärmeformbeständigkeit, thermische Umformbarkeit in einem Temperaturbereich von 75-350 °C sowie eine geringe Wasseraufnahme über einen langen Zeitraum aufrecht erhalten, selbst bei ständigem Kontakt mit Wasser. Des Weiteren sollen Polymere bereitgestellt werden, die möglichst unempfindlich gegen äußere Krafteinwirkung sind, z.B. weniger kratzempfindlich sind.
Schließlich soll ein Zusatz von externen antimikrobiell wirkenden Mitteln wie z.B. Silberionen, Trichlosan, etc. zum Erreichen der antimikrobiellen Wirkung nicht erforderlich sein.
Die enormen Herausforderungen zur Herstellung entsprechender antimikrobieller Kunststoffe konnten völlig unerwartet durch Polymerisation bzw. Copolymerisation spezieller Monomere zu antimikrobiellen Polymeren gelöst werden. Die erfindungsgemäßen Polymere weisen einerseits eine antimikrobielle Wirkung auf und sind anderseits thermoplastisch verarbeitbar. Darüber hinaus wird weiterhin das bevorzugt erforderliche werkstoffliche Anforderungsprofil sowie bevorzugt eine geringe Wasseraufnahme erfüllt.

## Gegenstände der Erfindung

Gegenstand der Erfindung ist daher ein antimikrobielles Polymer gemäß Anspruch 1, wobei bevorzugt das Polymer thermoplastisch verarbeitbar ist.
Des Weiteren beschreibt die Erfindung ein Verfahren gemäß Anspruch 7 zur Herstellung eines erfindungsgemäßen antimikrobiellen Polymers.
Ein weiterer Gegenstand der Erfindung ist ein antimikrobieller Polymerblend gemäß Anspruch 8.
In dieser Anmeldung wird in der allgemeinen Formel (I) der aliphatische Abstandshalter mit C' bezeichnet, während im Übrigen der Ausdruck "C" für ein Kohlenstoffatom steht.
Außerdem beschreibt die Erfindung die Verwendung eines erfindungsgemäßen Polymers oder eines erfindungsgemäßen Polymerblends zur antimikrobiellen Ausrüstung, zur Herstellung antimikrobieller Erzeugnisse oder zur Herstellung antimikrobieller Verbundelemente, wobei das Polymer oder der Polymerblend thermoplastisch verarbeitbar sind.

## Bestimmung der antimikrobiellen Aktivität

Im Rahmen der vorliegenden Anmeldung wird die antimikrobielle Eigenschaft üblicherweise durch eine Methode bestimmt, welche auf dem japanischen Standard JIS Z 2801:2000 basiert. Als Testmikroorganismus für die Versuche wird bevorzugt der pathogene Keim *Staphylococcus aureus* (bevorzugt Standardkeim; nicht der multiresistente ATCC 6538) verwendet.
Die Bestimmung der antimikrobiellen Aktivität erfolgt üblicherweise durch den Vergleich des Wachstums von *Staphylococcus aureus* auf Referenzoberflächen und auf den Probenmaterialien.
Als Referenzmaterial dienen leere Petrischalen. Die Proben bestehen aus Petrischalen (Durchmesser 90 mm), die mit jeweils etwa 0,250 bis 0,750 g des entsprechenden Polymers beschichtet waren. Die Beschichtung erfolgt gemäß folgendem Vorgehen: Die Polymere werden in einem geeigneten Lösungsmittel gelöst. Die Polymerlösung wird auf die Petrischale aufgegeben und anschließend erfolgt das Abdampfen des Lösungsmittels im Vakuumtrockenschrank. Für jede Versuchsreihe werden drei Referenzplatten sowie drei Probenplatten zur Bestimmung des Oberflächenkeimgehaltes nach der Inkubation herangezogen.

Alle Platten werden mit 400 µl *Staphylococcus aureus* Impfsuspension beimpft, die auf einen Keimgehalt von $5\text{-}8 \cdot 10^5$ KbE/ml eingestellt ist.

Die beimpften Platten werden mit einer sterilen PP-Folie abgedeckt, um Verdunstung zu vermeiden. Unmittelbar nach dem Beimpfen werden die drei Probenplatten und drei Referenzplatten in einen Inkubationsschrank überführt und bei 35 °C und 90% Luftfeuchte für 24 Stunden inkubiert.

Zur Bestimmung des Keimgehalts in der Beimpfungslösung (Anfangskeimgehalt) werden je drei Referenzplatten direkt nach dem Beimpfen, unter Zugabe von 10 ml SCDLP-Bouillon in die Petrischale, ausgewaschen. Die Folie wird mit einer sterilen Pinzette gewendet und mehrmals mit einer 1 ml Pipette über- beziehungsweise unterspült. Die Petrischale wird in Form einer Acht geschwenkt, bevor 1 ml der Auswaschlösung in die erste Verdünnungsstufe pipettiert wird. Nach Anlegen einer Verdünnungsreihe wird der Lebendkeimgehalt mittels Drop-Plate-Verfahren bestimmt. Beim Drop-Plate-Verfahren werden - im Doppelansatz - auf einer Plate-Count-PC-Agar-Platte in jeden Sektor der jeweiligen Verdünnungsstufe 5 Tropfen je 10 µl aufgebracht. Die Bebrütung der Platten erfolgt 24 Stunden bei 37 °C.

Das Auswaschen und die Bestimmung der Lebendkeimzahl auf den Referenz- und Probenplatten nach der Inkubation erfolgt in gleicher Art und Weise wie die Bestimmung des Anfangskeimgehalts. Bei den Probenplatten wird zusätzlich zur Erhöhung der Nachweisgrenze der Keimgehalt der direkten Auswaschlösung im Plattengussverfahren bestimmt. Hierzu wird, ebenfalls im Doppelansatz, je 1 ml der Lösung in eine leere Petrischale gegeben und mit flüssigem, auf 45 °C temperiertem PC-Agar übergossen. Durch Schwenken in Form einer acht werden die Bakterien im Agar verteilt. Die Bebrütung der Platten erfolgt für 48 Stunden bei 37 °C.

Nach der Inkubation werden die Kolonien in der Petrischale gezählt. Dabei wird unterstellt, dass aus jedem Keim eine sichtbare Kolonie geworden ist. Die Kolonien sind nach der Bebrütung mit bloßem Auge sichtbar. Gegebenenfalls kann zur Hilfe ein Lichttisch herangezogen werden, um die Keime besser zu erkennen.

Anhand des Volumens der Beimpfungslösung und der verwendeten Verdünnungsverhältnisse kann auf die Lebendkeimzahl der Mikroorganismen pro Volumeneinheit (d.h. pro ml) Beimpfungslösung rückgeschlossen werden. Die Berechnung erfolgt anhand des gewogenen arithmetischen Mittels mit folgender Formel:

$$\bar{c} = \frac{\sum c}{n_1 \cdot 1 + n_2 \cdot 0{,}1} \cdot d$$

mit

- $\bar{c}$ gewichtetes arithmetisches Mittel,
- $\sum c$ Summe der Kolonien aller Petrischalen oder Sektoren, die zur Berechnung herangezogen werden,
- $n_1$ Anzahl der Petrischalen oder Sektoren der niedrigsten auswertbaren Verdünnungsstufe,
- $n_2$ Anzahl der Petrischalen oder Sektoren der nächst höheren Verdünnungsstufe,
- $d$ Faktor der niedrigsten ausgewerteten Verdünnungsstufe.

Beim Plattengussverfahren sind Petrischalen mit bis zu 300 KbE zählbar. Beim Drop-Plate-Verfahren sind nur Platten bis 150 KbE pro Sektor zählbar.

Bei der Bestimmung der Lebendkeimzahl pro ml muss der Verdünnungsfaktor $F_1$ beachtet werden. Dieser ergibt sich aus der Summe des Volumens der SCDLP-Bouillon und dem Volumen der Bakteriensuspension auf der beimpften Platte.

$$F_1 = \frac{10ml + 0{,}4ml}{0{,}4ml} = 26$$

wobei

- $F_1$ den Verdünnungsfaktor der SCDLP-Bouillon

darstellt.

Für die Gesamtkeimzahl auf den beimpften Proben- beziehungsweise Referenzplatten im Plattengussverfahren ergibt sich somit folgende Formel:

$$KbE = \frac{\sum c}{n_1 \cdot 1 + n_2 \cdot 0{,}1} \cdot d \cdot F_1$$

Beim Drop-Plate-Verfahren ist noch ein weiterer Verdünnungsfaktor relevant, da ein Viertel einer Platte nur mit 50 $\mu$l, also 0,05 ml, beimpft wird. Um auf den Keimgehalt pro ml zu schließen, muss 0,05 ml auf 1 ml umgerechnet werden, indem man mit 20 multipliziert.

$$F_2 = 26 \cdot 20$$

wobei
$F_2$ der Verdünnungsfaktor ist, um die KbE beim Drop-Plate-Verfahren pro ml zu erhalten.

Entsprechend wird die Gesamtkeimzahl der beimpften Proben- beziehungsweise der Referenzplatten für das Drop-Plate-Verfahren unter Berücksichtigung aller Verdünnungsfaktoren nach folgender Formel berechnet:

$$KbE = \frac{\sum c}{n_1 \cdot 1 + n_2 \cdot 0{,}1} \cdot d \cdot F_2$$

Für die Berechnung der antimikrobiellen Aktivität werden in jeder Versuchsreihe die Einzelergebnisse der Lebendkeimzahl für die Platten als einfaches arithmetisches Mittel zusammengefasst und daraus die $\log_{10}$-Reduktion zwischen Proben- und Referenzplatten ermittelt.

Die Berechnung erfolgt mittels nachstehender Formel:

$$\log_{10}\text{-Reduktion} = \log_{10}(KG)_{Ref(x)} - \log_{10}(KG)_{Pr(x)}$$

wobei

| | |
|---|---|
| $(KG)_{Ref(x)}$ | KbE auf den Referenzplatten zum Zeitpunkt x |
| $(KG)_{Pr(x)}$ | KbE auf den Probenplatten zum Zeitpunkt x |

darstellt.

Die antimikrobielle Aktivität des erfindungsgemäßen Polymers wird bevorzugt durch die $\log_{10}$-Reduktion nach 24 h Kontaktzeit angegeben. Die $\log_{10}$-Reduktion beträgt bevorzugt mindestens log 2,0 KbE/ml nach 24 h. Besonders bevorzugt ist eine log-Reduktion, die bis zu einem Restkeimgehalt von log 1 od. 10 koloniebildenden Einheiten (der Nachweisgrenze des Verfahrens) führt.

Laut JIS Z 2801:2000 ist eine antimikrobielle Aktivität bei einer Log-Reduktion von mindestens 2,0 nach 24 Stunden Einwirkzeit gegeben. Sind auf den Agar-Platten der Proben bei der niedrigsten Verdünnungsstufe im Plattengussverfahren keine auszählbaren Kolonien vorhanden, wird das Ergebnis mit <10 KbE/ml angegeben, entsprechend der Vorgabe im Teststandard.

## Detaillierte Beschreibung der Erfindung

Das antimikrobielle Polymer der Erfindung ist durch eine Polymerisation eines Monomers erhältlich, wobei das Monomer durch die Strukturformeln (IIa bis IIc) oder Mischungen daraus dargestellt wird,

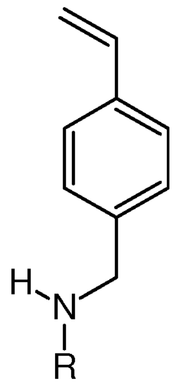
IIa

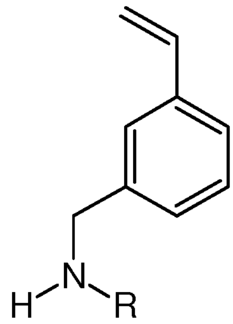
IIb

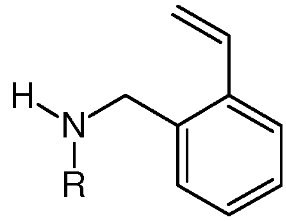
IIc

und wobei der Rest R Ethyl, Propyl, Butyl, Pentyl, Hexyl und Heptyl, Cyclopropyl, Cyclobutyl, Cyclopentyl oder Cyclohexyl Isopropyl, sec-Butyl, iso-Butyl, tert-Butyl, 2-Pentyl (sec-Pentyl), 3-Pentyl, 2-Methyl-butyl, 3-Methyl-butyl (Isopentyl), 3-Methyl-but-2-yl, 2-Methylbut-2-yl, 2,2-Dimethylpropyl (Neopentyl), 2-Methylpentyl, 3-Methylpentyl, 2,3-Dimethylbutyl, 2,2-Dimethylbutyl (Neohexyl) oder 3-Ethylpentyl ist,

wobei die Glastemperatur des antimikrobiellen Polymers 60°C bis 200 °C beträgt, und wobei bevorzugt das Polymer thermoplastisch verarbeitbar ist.

Bevorzugt ist ein Monomer gemäß Formel (IIa).

Alternativ bevorzugt ist eine Mischung aus zwei Monomeren, vorzugsweise der Monomere gemäß der Formeln IIa und IIb.

In einer bevorzugten Ausführungsform kann die Polymerisation der radikalisch polymerisierbaren Vinylgruppe eine photochemisch initiierte radikalische Polymerisation sein. Bei der photochemisch initiierten radikalischen Polymerisation wird im Allgemeinen eine Verbindung eingesetzt, die beim Absorbieren von Licht, bevorzugt im Bereich von 300-450 nm, eine Photoreaktion durchläuft. Bei dieser Reaktion wird die reaktive Spezies erzeugt, die mit der radikalisch polymerisierbaren Gruppe reagiert und damit die Polymerisation einleitet.

In einer besonders bevorzugten Ausführungsform kann die Polymerisation der radikalisch polymerisierbaren Gruppe eine thermisch initiierte radikalische Polymerisation mit oder ohne Initiator sein. Eine Initiierung der radikalischen Polymerisation kann z. B. rein thermisch (ohne Initiator) oder durch peroxidische Initiatoren, Azo-Initiatoren, Redox-Systeme oder auf photochemischem Weg erfolgen.

Bevorzugte Initiatoren für die Polymerisation der Vinylgruppe werden nachstehend im Abschnitt "Bevorzugte Initiatoren" beschrieben.

**Bevorzugte Ausführungsformen der Gruppe R in den Formeln (IIa bis IIc)**

Generell kann R ein beliebiger organischer Rest sein. R ist bevorzugt Isopropyl, sec-Butyl, iso-Butyl, tert.-Butyl, 2-Pentyl (sec-Pentyl), 3-Pentyl, 2-Methyl-butyl, 3-Methylbutyl (Isopentyl), 3-Methyl-but-2-yl, 2-Methylbut-2-yl, 2,2-Dimethylpropyl (Neopentyl), 2-Methyl-3-pentyl, 3-Methyl-3-pentyl, 2,3-Dimethylbutyl, 2,2-Dimethylbutyl (Neohexyl), 3-Ethyl-3-pentyl. Mehr bevorzugt ist R Isopropyl, sec-Butyl, iso-Butyl, tert.-Butyl, 3-Methyl-but-2-yl, 2-Methylbut-2-yl, 2-Methyl-3-pentyl, 3-Methyl-3-pentyl, 2,3-Dimethylbutyl und 3-Ethyl-3-pentyl. Noch mehr bevorzugt als R sind tert.-Butyl, 2-Methylbut-2-yl, 3-Methyl-3-pentyl und 3-Ethyl-3-pentyl. Ganz besonders bevorzugt als R ist 2-Methylbut-2-yl. Ganz besonders bevorzugt als R ist 3-Methyl-3-pentyl. Ganz besonders bevorzugt als R ist 3-Ethyl-3-pentyl. Insbesonders bevorzugt als R ist tert.-Butyl.

Insbesondere bevorzugt ist Formel (IIa) mit R = tert.-Butyl. Das aus diesem Monomer erhältliche Polymer wird kurz als TBAMS bezeichnet und ist ein besonders bevorzugtes erfindungsgemäßes antimikrobielles Polymer.

In einem alternativen Aspekt der Erfindung ist das antimikrobielle Polymer erhältlich durch Polymerisation durch ein Monomer, das durch die folgende Formel (I) dargestellt wird:

A-B-C'-D (Formel I),

wobei A, B, C' und D wie nachstehend bei Formel (I) definiert sind. Alle Erläuterungen zu bevorzugten Ausführungsformen der Polymere gemäß Formel II wie z.B. Glastemperatur etc. finden auch für Polymere gemäß der Formel I Anwendung.

**Bevorzugte Ausführungsformen in Hinblick auf die Glastemperatur**

Die Glastemperatur des erfindungsgemäßen antimikrobiellen Polymers beträgt üblicherweise 60 °C bis 200 °C, bevorzugt 70 °C bis 180 °C, besonders bevorzugt 75 °C bis 140 °C und insbesondere bevorzugt 80 °C bis 130 °C. In alternativen bevorzugten Ausführungsformen beträgt die Glastemperatur 85 bis 125 °C oder 90 bis 120 °C. Ebenfalls sind Mischungen dieser Temperaturbereiche möglich. Die Glastemperatur kann von einem Fachmann durch entsprechende Wahl der Verfahrensparameter eingestellt werden, d.h. Ausgangstoffe und Verfahrensparameter wie Polymerisationstemperatur, Polymerisationszeit, Art und Menge des Katalysators werden so gewählt, dass die gewünschte Glastemperatur erreicht werden kann.

Die Glastemperatur hat im Allgemeinen einen maßgeblichen Einfluss sowohl auf die Verarbeitbarkeit, als auch auf die Werkstoffeigenschaften eines Polymers. Die Glastemperatur ist dadurch gekennzeichnet, dass bei dieser Temperatur der Übergang vom festen, glas- oder energieelastischen Zustand des im Wesentlichen amorphen Polymers zu einem viskoelastischen gummi- oder entropieelastischen Zustand oder umgekehrt stattfindet. Unterhalb der Glastemperatur ist das Polymer im Wesentlichen hart und spröde (glasartig), während es oberhalb der Temperatur anfängt, zäh und viskoelastisch zu werden. Die Begriffe "Glastemperatur" und "Glasübergangstemperatur" werden häufig synonym verwendet.

Die Bestimmung der Glastemperaturen der erfindungsgemäßen Polymere erfolgt bevorzugt durch dynamische Differenzkalometrie (DSC) Messung. Hierzu werden bevorzugt ca. 10 mg Polymer in einen 40 μl Aluminium-DSC-Tiegel eingewogen, der dann in die Messzelle einer METTLER Toledo 821$^e$ eingesetzt wird. Danach wird ein Heiz/Kühlprogramm gestartet, das in drei identische Zyklen unterteilt ist. Ein Zyklus ist dabei wie folgt aufgebaut: Zuerst wird mit einer Rate von 10 °C/min von 25 °C auf 250 °C aufgeheizt und anschließend mit einer Rate von -10 °C/min von 250 °C auf 25 °C abgekühlt. Im Anschluss daran beginnen der zweite und dritte Zyklus. Die Ermittlung der Glastemperatur erfolgt durch die Bildung des Mittelwertes der ermittelten Glasübergangstemperaturen aller Aufheizvorgänge.

Folgende Einstellungen im Mettler Toledo 821 sind bevorzugt:

- Stickstoffstrom 8,3 N/h
- Stickstoffkühlung, kein Gascontroller
- Modul Standby-Temperatur 20 °C,
- Keramiksensor SRS5 high
- Star Excellence Software Version 9.10, Routinefenster, DSC-Auswertung

Eine Kalibrierung erfolgt bevorzugt mit der vom Hersteller gelieferten In-Probe (6,27 mg) vom 3.12.2005.

In einer bevorzugten Ausführungsform ist das antimikrobielle Polymer ein Homopolymer.

In einer besonders bevorzugten Ausführungsform ist das antimikrobielle Polymer ein Homopolymer, erhältlich durch Polymerisation der Verbindung gemäß Formel (IIa). Die Verbindungen der Formel (IIa-IIc) können durch Umsetzung der Verbindung der Formel $H_2C=CH$-Phenylen-$CH_2$-Cl mit $H_2N$-R hergestellt werden. In den Formeln IIa-IIc und in Formel $H_2N$-R ist R bevorzugt wie vorstehend definiert.

Ein entsprechendes bevorzugtes Monomer wird zum Beispiel wie folgt hergestellt: In einen 1000 ml Kolben werden 200 ml Wasser und 42 g (1,05 mol) NaOH vorgelegt und nach vollständigem Lösen 1,05 mol des entsprechenden Amins zugefügt. Unter Rühren wird der Kolben auf 60-85 °C aufgeheizt und innerhalb von etwa 75 Minuten eine Lösung aus 53,42 g (0,35 mol) Chlormethylstyrol und 150 ml THF zugetropft. Nach vollständigem Zutropfen wird der Reaktionskolben bis zu einer Gesamtreaktionszeit von 4-120 h unter ständigem Rühren im Ölbad belassen. Dabei sind die Reaktionszeit und die Reaktionstemperatur vom verwendeten Amin abhängig. Die Aufreinigung kann durch Vakuumdestillation erfolgen.

In einer bevorzugten Ausführungsform ist das Polymer der vorliegenden Erfindung ein Homopolymer, bevorzugt ein Homopolymer, welches aus einem der Monomere (IIa), (IIb) oder (IIc) oder Gemischen daraus aufgebaut ist. Als Homopolymere werden Polymere bezeichnet, bei denen die Makromoleküle ausschließlich aus Monomeren der gleichen Art aufgebaut sind.

**Bevorzugte Ausführungsformen von erfindungsgemäßen Copolymeren**

In einer weiteren bevorzugten Ausführungsform ist das antimikrobielle Polymer gemäß der vorliegenden Anmeldung ein Copolymer. Das erfindungsgemäße Copolymer ist üblicherweise erhältlich durch Copolymerisation eines Monomers der Formel (IIa), (IIb) oder (IIc) mit einem weiteren Monomer. Bevorzugt ist somit das erfindungsgemäße Copolymer erhältlich durch die Umsetzung mindestens eines Monomers gemäß den Formeln (IIa-IIc) und mindestens einem weiteren Monomer, wobei das weitere Monomer bevorzugt umfasst:

a) alkalische Monomere und/oder

b) saure Monomere und/oder
c) assoziierende Monomere und /oder
d) Standardmonomere,

wobei üblicherweise die Glastemperatur $T_G$ des Copolymers 65 °C bis 230 °C beträgt, bevorzugt 70 °C bis 200 °C, besonders bevorzugt 75 °C bis 160 °C und insbesondere bevorzugt 80 °C bis 150 °C. In weiteren bevorzugten Ausführungsformen kann die Glastemperatur des Copolymers 85 bis 145 °C, 90 °C bis 140 °C oder 95 °C bis 135 °C betragen. Ebenfalls sind Mischungen dieser Temperaturbereiche möglich.

Bevorzugte Ausführungsformen der weiteren Monomere a) - d), die zur Herstellung der erfindungsgemäßen Copolymere eingesetzt werden können:
Alkalische Monomere (a) sind ausgewählt aus Vinylimidazole wie 1-Vinylimidazol, 2-Methyl-1-vinylimidazol, N-Vinyloxazolidon, N-tert.-Butylaminoethyl-methacrylat, N,N-Dimethylaminoethylmethacrylat, N,N-Diethylaminoethylmethacrylat, N,N-Diisopropylaminoethylmethacrylat, 2-Vinylpyridin, 3-Vinylpyridin, 4-Vinylpyridin, N-Vinyltriazol, Aminalkylvinylether, sowie Gemische daraus.

Mehr bevorzugt sind N-tert.-Butylaminoethylmethacrylat, N,N-Dimethylaminoethylmethacrylat, N,N-Diethylaminoethylmethacrylat, N,N-Diisopropyl-aminoethyl-methacrylat, 2-Vinylpyridin, 3-Vinylpyridin, 4-Vinylpyridin, sowie Gemische daraus, insbesondere N-tert.-Butylaminoethylmethacrylat, 2-Vinylpyridin, 3-Vinylpyridin, 4-Vinylpyridin sowie Gemische daraus.

Die basischen Monomere werden normalerweise in einer Menge von 0 bis 95 mol%, bevorzugt von 10 bis 80 mol%, mehr bevorzugt von 20 bis 70 mol%, insbesondere von 25 bis 60 mol%, bezogen auf den Gesamtmonomergehalt, eingesetzt.

Die sauren Monomere b) werden ausgewählt aus Acrylsäure, Chloracrylsäure, Cyanacrylsäure, Methacrylsäure, Itaconsäure und deren Anhydrid, Mesaconsäure, Citraconsäure, Crotonsäure, Fumarsäure, Maleinsäure, Vinylbenzoesäure und deren Isomeren, Zimtsäure, Stilbendicarbonsäure, Vinylphosphonsäure, Vinylbenzylphosphonsäure, Vinylbenzylsulfonsäure, Vinylsulfonsäure, 2-Styrolsulfonsäure, 3-Styrolsulfonsäure, 4-Styrolsulfonsäure, 2-Styrolphosphonsäure, 3-Styrolphosphonsäure, 4-Styrol-phosphonsäure sowie Gemischen daraus.

Besonders bevorzugt sind Acrylsäure, Chloracrylsäure, Cyanacrylsäure, Methacrylsäure, Itaconsäure und deren Anhydrid, Mesaconsäure, Citraconsäure, Fumarsäure, Maleinsäure, Vinylbenzoesäure und deren Isomeren, Zimtsäure, Vinylbenzylphosphonsäure, Vinylbenzylsulfonsäure, sowie Gemische daraus, insbesondere Chloracrylsäure, Cyanacrylsäure, Methacrylsäure, Itaconsäure und deren Anhydrid, Mesaconsäure, Citraconsäure, Vinylbenzoesäure und deren Isomeren, sowie Gemische daraus.

Die sauren Monomere werden üblicherweise einer Menge 0 bis 50 mol%, bevorzugt von 1 bis 40 mol%, mehr bevorzugt von 2 bis 30 mol%, insbesondere von 3 bis 20 mol% eingesetzt, bezogen auf den Gesamtmonomergehalt.

Die assoziierenden Monomere c) werden ausgewählt aus Acrylnitril, Methacrylnitril, alkylsubstituierte Acrylamide wie Acrylamid, Methacrylamid, N,N-Dimethylacrylamid, N-Ethylacrylamid, N-tert.-Butylacrylamid, Vinyl-Methylacetamid, N-tert.-Octylacrylamid, Methylcyanacrylat, Dicyanoethylen, 1-Nitrovinylen, 1-Nitro-1-Methylvinyliden, Vinylpyrrolidon, Vinylcaprolactam, und Vinylbenzonitril und dessen Isomeren sowie Gemischen daraus.

Besonders bevorzugt sind Acrylnitril, Methacrylnitril, Methylcyanacrylat, Dicyanoethylen, Vinylpyrrolidon, Vinylcaprolactam und Vinylbenzonitril und dessen Isomeren sowie Gemische daraus, insbesondere Acrylnitril, Methacrylnitril, und Vinylbenzonitril und dessen Isomeren sowie Gemische daraus.

Die assoziierenden Monomere liegen in einem Bereich von 0 bis 95 mol%, bevorzugt von 10 bis 85 mol%, mehr bevorzugt von 15 bis 80 mol%, insbesondere von 20 bis 70 mol% vor, bezogen auf den Gesamtmonomergehalt.

Die Standardmonomere d) werden ausgewählt aus Ethylen, Butadien, Isopren, Chloropren, substituiertes Styrol, Methacrylester, Acrylester, Vinylether (z.B. Ethylvinylether, Isobutylvinylether, tert.-Butylvinylether, Methylvinylether, Butylvinylether, Cyclohexylvinylether), Vinylcarbazol, Vinylthioether, Vinylester, Vinylcyclohexan Vinylmethylchlorid, Vinylidenfluorid, Vinylacetat, Vinylsilan, Vinylchlorid, Vinylfluorid, Vinylidenchlorid Vinylbenzylchlorid, Vinylbenzylbromid, Diester der Fumarsäure, Diamide der Fumarsäure, Imide der Maleinsäure sowie Gemischen daraus.

Besonders bevorzugt sind Butadien, Isopren, Chloropren, substituiertes Styrol, Vinylether (z.B. Ethylvinylether, Isobutylvinylether, tert.-Butylvinylether, Methylvinylether, Butylvinylether, Cyclohexylvinylether), Vinylcarbazol, Vinylester, Vinylidenfluorid, Vinylacetat, Vinylsilan, Vinylchlorid, Vinylfluorid, Vinylidenchlorid Vinylbenzylchlorid, Vinylbenzylbromid, Diester der Fumarsäure, Diamide der Fumarsäure, Imide der Maleinsäure sowie Gemische daraus, insbesondere bevorzugt sind Butadien, Isopren, Chloropren, Vinylchlorid, Methacrylester, Vinylcarbazol sowie Gemische daraus.

Die Standardmonomere liegen in einem Bereich von 0 bis 70 mol%, bevorzugt von 2 bis 55 mol%, mehr bevorzugt von 3 bis 40 mol%, insbesondere von 4 bis 30 mol%, ganz besonders von 4 bis 25mol% vor, bezogen auf den Gesamtmonomergehalt.

Es mag in der Natur der "weiteren" Monomere liegen, dass gegebenenfalls ein Monomer in mehrere der Klassen a) bis d) einteilbar ist. Zur Abgrenzung gilt daher, dass jedes Monomer nur einer der Gruppen a) - d) zugeordnet werden darf. Ist ein Monomer X zum Beispiel bereits als assoziierendes Monomer im erfindungsgemäßen Copolymer oder im

erfindungsgemäßen Polymerblend vorhanden, so darf es nicht auch noch als Standardmonomer verwendet werden.

Die Copolymere können alternierende Copolymere, Blockcopolymere oder statistische Copolymere sein. Ebenfalls umfasst der Ausdruck "Copolymere" auch die gemeinsame Polymersation von drei oder mehr unterschiedlichen Monomeren, d.h. zum Beispiel auch Terpolymere.

Es konnte unerwartet festgestellt werden, dass durch die Zugabe mindestens eines weiteren Monomers aus den oben genannten Gruppen weiterer Monomere eine verbesserte Verarbeitbarkeit (z. B reduzierte Anhaftung an den Metalloberflächen der Schnecken bei der Extrusion) sowie verbesserte Werkstoffeigenschaften (Wärmeformbeständigkeit, geringere Wasseraufnahme) des resultierenden Copolymers, bei weiterhin hervorragenden antimikrobiellen Eigenschaften, erreicht werden konnte.

Unerwartet konnte festgestellt werden, dass bei den bevorzugt ausgewählten (beschriebenen Monomeren) durch Verwendung der bevorzugt beschrieben Comonomere die Verarbeitungseigenschaften verbessert und die Glastemperatur angehoben werden konnte, jedoch überraschenderweise die antimikrobiellen Eigenschaften (gemäß des beschriebenen Testverfahrens) nicht herabgesetzt wurden.

Die erfindungsgemäßen Copolymere sind, wie vorstehend beschrieben, erhältlich durch Umsetzung von erfindungsgemäßen Monomeren mit weiteren Monomeren. In einer bevorzugten Ausführungsform sind die Copolymere bevorzugt erhältlich durch Umsetzung von 1 bis 99 mol-%, mehr bevorzugt 15 bis 95 mol-%, besonders bevorzugt 40 bis 90 mol-% erfindungsgemäßer Monomere gemäß Formel (IIa bis IIc) mit den weiteren Monomeren aus den Klassen der a) alkalische Monomere und/oder b) saure Monomere und/oder, c) assoziierende Monomere und/oder d) Standardmonomere. Die weiteren Monomere werden bevorzugt in einer Menge von 1 bis 99 mol-%, mehr bevorzugt 5 bis 70 mol-%, besonders bevorzugt 10 bis 70 mol-% im Copolymer eingesetzt.

**Besonders bevorzugte Ausführungsformen von erfindungsgemäßen Copolymeren**

In einer besonders bevorzugten Ausführungsform handelt es sich bei dem erfindungsgemäßen antimikrobiellen Polymer um ein Copolymer, erhältlich durch Polymerisation von einem Monomer gemäß Formel (IIa bis IIc), insbesondere von Formel (IIa) mit **Acrylnitril.** Das Copolymer ist bevorzugt erhältlich durch Umsetzung von 1 bis 99mol-%, mehr bevorzugt 30 bis 95 mol-%, besonders bevorzugt 40 bis 90 mol-% Monomere gemäß Formel (IIa bis IIc), insbesondere Formel (IIa) und 1 bis 99 mol-%, mehr bevorzugt 5 bis 70 mol-%, besonders bevorzugt 10 bis 60 mol-% Acrylnitril. In der vorliegenden Ausführungsform kann das erfindungsgemäße Polymer ausschließlich aus Monomeren gemäß Formel (IIa bis IIc), insbesondere Formel (IIa) und Acrylnitril hergestellt worden sein. Gegebenenfalls können der Polymerisation auch noch 0 bis 60 mol-%, bevorzugt 0 bis 40 mol-%, der vorstehend beschriebenen weiteren Monomere zugesetzt worden sein.

In einer besonders bevorzugten Ausführungsform handelt es sich bei dem erfindungsgemäßen antimikrobiellen Polymer um ein Copolymer, erhältlich durch Polymerisation von einem Monomer gemäß Formel (IIa bis IIc), insbesondere von Formel (IIa) mit Methacrylnitril. Das Copolymer ist bevorzugt erhältlich durch Umsetzung von 1 bis 99 mol-%, mehr bevorzugt 30 bis 95 mol-%, besonders bevorzugt 40 bis 90 mol-% Monomere gemäß Formel (IIa bis IIc), insbesondere Formel (IIa) und 1 bis 99 mol-%, mehr bevorzugt 5 bis 70 mol-%, besonders bevorzugt 10 bis 60 mol-% Methacrylnitril. In der vorliegenden Ausführungsform kann das erfindungsgemäße Polymer ausschließlich aus Monomeren gemäß Formel (IIa bis IIc), insbesondere Formel (IIa) und Methacrylnitril hergestellt worden sein. Gegebenenfalls können der Polymerisation auch noch 0 bis 60 mol-%, bevorzugt 0 bis 30 mol-%, der vorstehend beschriebenen weiteren Monomere zugesetzt worden sein.

In einer besonders bevorzugten Ausführungsform handelt es sich bei dem erfindungsgemäßen antimikrobiellen Polymer um ein Copolymer, erhältlich durch Polymerisation von einem Monomer gemäß Formel (IIa bis IIc), insbesondere von Formel (IIa) mit Vinylpyridin, insbesondere 4-Vinylpyridin. Das Copolymer ist bevorzugt erhältlich durch Umsetzung von 1 bis 99 mol-%, mehr bevorzugt 30 bis 95 mol-%, besonders bevorzugt 40 bis 90 mol-% Monomere gemäß Formel (IIa bis IIc), insbesondere Formel (IIa) und 1 bis 99 mol-%, mehr bevorzugt 5 bis 70 mol-%, besonders bevorzugt 10 bis 60 mol-% Vinylpyridin, insbesondere 4-Vinylpyridin. In der vorliegenden Ausführungsform kann das erfindungsgemäße Polymer ausschließlich aus Monomeren gemäß Formel (IIa bis IIc), insbesondere Formel (IIa) und Vinylpyridin, insbesondere 4-Vinylpyridin hergestellt worden sein. Gegebenenfalls können der Polymerisation auch noch 0 bis 30 mol-% der vorstehend beschriebenen weiteren Monomere zugesetzt worden sein.

In einer besonders bevorzugten Ausführungsform handelt es sich bei dem erfindungsgemäßen antimikrobiellen Polymer um ein Copolymer, erhältlich durch Polymerisation von einem Monomer gemäß Formel (IIa bis IIc), insbesondere von Formel (IIa) mit Acrylsäure und/oder Methacrylsäure und/oder p-Vinylbenzoesäure. Das Copolymer ist bevorzugt erhältlich durch Umsetzung von 1 bis 99 mol-%, mehr bevorzugt 30 bis 97 mol-%, besonders bevorzugt 70 bis 96 mol-% Monomere gemäß Formel (IIa bis IIc), insbesondere Formel (IIa) und 1 bis 99 mol-%, mehr bevorzugt 3 bis 70 mol-%, besonders bevorzugt 4 bis 30 mol-% Acrylsäure und/oder Methacrylsäure. In der vorliegenden Ausführungsform kann das erfindungsgemäße Polymer ausschließlich aus Monomeren gemäß Formel (IIa bis IIc), insbesondere Formel (IIa) und Acrylsäure und/oder Methacrylsäure hergestellt worden sein. Gegebenenfalls können der Polymerisation auch

noch 0 bis 30 mol-% der vorstehend beschriebenen weiteren Monomere zugesetzt worden sein.

In einer besonders bevorzugten Ausführungsform handelt es sich bei dem erfindungsgemäßen antimikrobiellen Polymer um ein Copolymer, erhältlich durch Polymerisation von einem Monomer gemäß Formel (IIa bis IIc), insbesondere von Formel (IIa) mit Vinylbenzoesäure, insbesondere 4-Vinylbenzoesäure. Das Copolymer ist bevorzugt erhältlich durch Umsetzung von 1 bis 99 mol-%, mehr bevorzugt 30 bis 95 mol-%, besonders bevorzugt 40 bis 90 mol-% Monomere gemäß Formel (II), insbesondere Formel (IIa) und 1 bis 99 mol-%, mehr bevorzugt 5 bis 70 mol-%, besonders bevorzugt 10 bis 60 mol-% Vinylbenzoesäure, insbesondere 4-Vinylbenzoesäure. In der vorliegenden Ausführungsform kann das erfindungsgemäße Polymer ausschließlich aus Monomeren gemäß Formel (II), insbesondere Formel (IIa) und Vinylbenzoesäure, insbesondere 4-Vinylbenzoesäure hergestellt worden sein. Gegebenenfalls können der Polymerisation auch noch 0 bis 30 mol-% der vorstehend beschriebenen weiteren Monomere zugesetzt

**Bevorzugte Initiatoren**

Die erfindungsgemäßen Polymere werden im Allgemeinen durch Polymerisation der beschriebenen Monomere hergestellt. Der Polymerisationsreaktion werden bevorzugt Initiatoren zugesetzt.

Vorzugsweise finden Initiatoren ausgewählt aus der Klasse der Peroxide, der Disulfide, der Tetrazene, der Azoverbindungen, der Acylalkylsulfonylperoxide der Diperoxyketale und Gemische daraus Verwendung.

Geeignete Peroxide sind beispielsweise Didekanoylperoxid, 2,5-Dimethyl-2,5-di(2-ethylhexanoylperoxy)hexan, tert.-Amylperoxy-2-ethylhexanoat, Dibenzoylperoxid, tert.-Butylperoxy-2-ethylhexanoat, tert.-Butylperoxydiethylacetat, tert.-Butylperoxy-diethylisobutyrat, 1,4-Di(tert.-butylperoxycarbonyl)cyclohexan als Isomerengemisch, tert.-Butylperisononanoat, 1,1-Di-(tert.-butylperoxy)-3,3,5-trimethylcyclohexan, 1,1-Di-(tert.-butylperoxy)-cyclohexan, Methyl-isobutylketonperoxid, tert.-Butylperoxy-isopropylcarbonat, 2,2-Di-(tert.-butylperoxy)butan oder tert.-Butylperoxyacetat; tert.-Butylperoxybenzoat, Di-tert.-amylperoxid, Dicumylperoxid, die isomeren Di-(tert.-butylperoxyisopropyl)benzole, 2,5-Dimethyl-2,5-di-tert.-butylperoxyhexan, tert.-Butylcumylperoxid, 2,5-Dimethyl-2,5-di(tert.-butylperoxy)-hex-3-in, Di-tert.-butylperoxid, 1,3-Diisopropylbenzol-monohydroperoxid, Cumolhydroperoxid oder tert.-Butylhydroperoxid.

Beispiele für geeignete Initiatoren der Azoverbindungen sind 2,2'-Azobis(isobutyronitril), 2,2'-Azobis(2-methylpropion-amidin)dihydrochlorid und 2,2'-Azobis(4-methoxy-2,4-dimethylvaleronitril), Azodi(cyclohexylcarbonitril),

2,2'-Azobis{2-methyl-N-[1,1-bis(hydroxymethyl)-2-hydroxyethl]propionamid}, 2,2'-Azobis[2-methyl-N-(2-hydroxyethyl)propionamid], 2,2'-Azobis[N-(2-carboxyethyl)-2-methylpropionamidin]hydrat, 2,2'-Azobis[2-(2-imidazolin-2-yl)propan]dihydrochlorid, 2,2'-Azobis[2-(2-imidazolin-2-yl)propan]disulfat-dihydrat, 2,2'-Azobis(2-methylpropionamidin)dihydrochlorid, 2,2'-Azobis{2-[1-(2-hydroxyethyl)-2-imidazolin-2-yl]propan}dihydrochlorid, 2,2'-Azobis[2-(2-imidazolin-2-yl)propan], 2,2'-Azobis(1-imino-1-pyrrolidino-2-ethylpropan)dihydrochloride, 2,2'-Azobis(2-cyano-2-butan), Dimethyl-2,2'-azobisdimethyl-isobutyrat, 4,4'-Azobis(4-cyanopentansäure), 2-(tert.-Butylazo)-2-cyanopropan, 2,2'-Azobis(N,N-dimethylenisobutyramidine) dihydrochlorid, 2,2'-Azo-bis(N,N'-dimethylenisobutyramin), 2,2'-Azobis(2-methyl-N-[1,1-bis(hydroxymethyl)-2-hydroxyethyl]propionamid), 2,2'-Azo-bis(2-methyl-N-[1,1-bis(hydroxymethyl)ethyl]-propionamid), 2,2'-Azobis[2-methyl-N-(2-hydroxyethyl)propionamid], 2,2'-Azobis(iso-butyramid)dihydrat, 2,2'-Azobis(2,2,4-trimethylpentan) und 2,2'-Azobis(2-methyl-propan).

Üblicherweise werden die Inititiatoren, vorzugsweise die Azo-Initiatoren, in einer Menge $10^{-4}$ bis $10^{-1}$ mol/l, bevorzugt in einer Menge von $10^{-3}$ bis $10^{-2}$ mol/l eingesetzt.

Die Initiierung der radikalischen Polymerisation kann auch photochemisch wie im Folgenden beschrieben erfolgen: Hierzu wird dem Reaktionsgemisch ein Photoinitiator zugesetzt, welcher durch Bestrahlung mittels Licht geeigneter Wellenlänge angeregt wird und eine radikalische Polymerisation initiiert.

Als photochemische-Initiatoren können beispielsweise die Folgenden eingesetzt werden: Benzophenon, 2-Methylbenzophenon, 3,4-Dimethylbenzophenon, 3-Methylbenzophenon, 4,4'-Bis(diethylamino)benzophenon, 4,4'-Dihydroxy-benzophenon, 4,4'-Bis[2-(1-propenyl)phenoxy]benzophenon, 4-(Diethylami-no)benzophenon, 4-(Dimethylamino)benzophenon, 4-Benzoylbiphenyl, 4-Hydroxy-benzophenon, 4-Methylbenzophenon, Benzophenon-3,3',4,4'-tetracarboxyldianhydrid, 4,4'-Bis(dimethylamino)-benzophenon, Acetophenon, 1-Hydroxycyclohexyl-phenylketon, 2,2-Diethoxyacetophenon, 2,2-Dimethoxy-2-phenylacetophenon, 2-Ben-zyl-2-(dimethylamino)-4'-morpholinobutyrophenon, 2-Hydroxy-2-methyl-propiophenon, 2-Hydroxy-4'-(2-hydroxyethoxy)-2-methytpropiophenon, 3'-Hydroxy-acetophenon, 4'-Ethoxyacetophenon, 4'-Hydroxy-acetophenon, 4'-Phenoxyacetophenon, 4'-tert-Butyl-2',6'-dimethylacetophenon, 2-Methyl-4'-(methylthio)-2-morpholino-propiophenon, Diphenyl-(2,4,6-trimethylbenzoyl)-phosphinoxid, Phenylbis(2,4,6-trimethylbenzoyl)phosphinoxid, Methylbenzoylformat, Benzoin, 4,4'-Dimethoxybenzoin, Benzoinmethylether, Benzoinethylether, Benzoinisopropylether, Benzoinisobutylether, 4,4'-Dimethylbenzil, Hexachlorocyclopentadiene, Campherchinon oder Kombinationen daraus. Bei den Benzophenonderivaten und Campherchinon kann zusätzlich ein Amin z.B. Methyl-bis(hydroxyethyl)amin verwendet werden.

Weiterhin sind Kombinationen dieser Photoinitiatoren mit den genannten Azoverbindungen und Peroxiden möglich.

In einer alternativ bevorzugten Ausführungsform der Erfindung kann die lichtinduzierte Polymerisation auch

ohne Starter durchgeführt werden. In einem solchen Fall kann in Schritt iii) des Verfahrens zur Herstellung eines erfindungsgemäßen, antimikrobiellen die Polymerisation der Monomere bevorzugt ohne Zugabe des Polymerisationsinitiators durchgeführt werden.

## Bevorzugte Ausführungsformen in Hinblick auf physikalische Eigenschaften

In einer bevorzugten Ausführungsform beträgt das zahlenmittlere Molekulargewicht des erfindungsgemäßen antimikrobiellen Polymers gemäß der Erfindung $M_n$ 4’500 bis 2’000’000 Dalton, bevorzugt 6’000 bis 1’500’000 Dalton, mehr bevorzugt 7’000 bis 1’000’000 Dalton, noch mehr bevorzugt 8’000 bis 500’000, insbesondere 10’000 bis 200’000 Dalton, bestimmt mit Hilfe der Gelpermeationschromatographie.

Die Formel zur Berechnung des zahlenmittleren Molekulargewichts lautet:

$$M_n = \frac{\sum N_i M_i}{\sum N_i}$$

wobei $N_i$ die Zahl der Moleküle mit der Molmasse M ist.

Die angegebenen Molekulargewichte betreffen bevorzugt sowohl die vorstehend beschriebenen erfindungsgemäßen Homopolymere als auch die vorstehend beschriebenen erfindungsgemäßen Copolymere. Ferner betreffen die angegebenen Molekulargewichte auch den nachstehend beschriebenen Polymerblend.

In einer bevorzugten Ausführungsform des erfindungsgemäßen antimikrobiellen Polymers werden während oder nach der Polymerisation eine Säuregruppen enthaltende Verbindung oder eine Säuregruppen bildende Verbindung zugegeben.

In einer weiteren bevorzugten Ausführungsform beträgt die Wasseraufnahme der erfindungsgemäßen antimikrobiellen Polymere maximal 35 Gew.-%, bevorzugt 0,01 Gew.-% bis 25 Gew.-%, mehr bevorzugt 0,05 Gew.-% bis 20 Gew.-%, noch mehr bevorzugt 0,1 Gew.-% bis 15 Gew.-%, insbesondere 1 bis 10 Gew.-%, bezogen auf das Gewicht des Polymers. Die Wasseraufnahme wird im Rahmen der vorliegenden Anmeldung nach ISO 62:2008 (deutsche Fassung EN ISO 62:2008) bestimmt. Hierzu wird das unter Punkt 6.3 benutzte Verfahren 1 *"Bestimmung der Wasseraufnahme nach dem Eintauchen in Wasser von 23 °C"* angewendet. Durch die geringe Wasseraufnahme der Polymeren der vorliegenden Erfindung werden die eingangs beschriebenen Aufgaben unerwartet vorteilhaft gelöst.

Bei den erfindungsgemäßen Polymeren handelt es sich somit bevorzugt um "hydrophobe Polymere". Im Gegensatz dazu sind viele aus dem Stand der Technik bekannte antimikrobielle Polymere hydrophile Polymere.

In einer bevorzugten Ausführungsform ist das erfindungsgemäße antimikrobielle Polymer ein Thermoplast. Thermoplasten sind im Allgemeinen aus der Schmelze, d.h. thermoplastisch verarbeitbar. Gemäß EN ISO 472:2001 sind unter Thermoplasten Kunststoffe oder Polymere zu verstehen, die in einem für sie typischen Temperaturbereich wiederholt in der Wärme erweichen, beim Abkühlen erhärten und im erweichten Zustand wiederholt durch Fließen (z.B. als Extrudat) zu Gegenständen formbar sind. Unter "thermoplastisch verarbeitbar" ist bevorzugt zu verstehen, dass das Polymer bei einer Temperatur von 60-360 °C, bevorzugt von 80 bis 200 °C, mehr bevorzugt 85 bis 150 °C verformbar ist, sich aber nicht zersetzt.

In einer bevorzugten Ausführungsform weisen die erfindungsgemäßen Polymere einen Schmelzindex MFI von 0,01 bis 70g /10 min, mehr bevorzugt 0,1 bis 50 g/10min, besonders bevorzugt 0,15 bis 30 g/10min, insbesondere 0,5 bis 20 g/10min oder alternativ 1,0 bis 15 g/10 min auf.

Der Schmelzindex (engl. **MFI = *Melt Flow Index bzw.* MFR = *Melt Flow Rate)*** dient zur Charakterisierung des Fließverhaltens eines Thermoplasten. Der MFR wird in dieser Anmeldung bevorzugt nach ISO 1133 ermittelt.

## Bevorzugte Ausführungsformen zur Herstellung der erfindungsgemäßen Polymeren

Ein weiterer Gegenstand der vorliegenden Erfindung ist ein Verfahren zur Herstellung eines Polymers gemäß der vorliegenden Anmeldung, umfassend die Schritte

(i) Bereitstellen von Monomeren gemäß Formel (IIa bis IIc),,

(ii) gegebenenfalls Bereitstellen mindestens eines weiteren Monomers, und

(iii) Polymerisation der Monomere mit oder ohne Zugabe eines Polymerisationsinitiators.

Die Polymerisationsbedingungen werden bevorzugt so gewählt, dass das resultierende Polymer die oben

genannte Glastemperatur aufweist.

Alle vorstehend aufgeführten Erläuterungen zu den erfindungsgemäßen Polymeren finden bevorzugt auch für das erfindungsgemäße Verfahren Anwendung. Somit ist das nachstehend beschriebene Verfahren zur Herstellung von Polymeren, umfassend Monomere gemäß Formel (IIa-IIc) geeignet.

In Schritt (i) des vorliegenden Verfahrens werden Monomere gemäß der Formel (IIa-IIc) in Lösung, Suspension, Emulsion oder in Masse, bevorzugt in Lösung, Emulsion oder Suspension, bereitgestellt.

In einer besonders bevorzugten Ausführungsform werden die Monomere gemäß der Formel (IIa-IIc) vorzugsweise unter Zugabe von Stabilisatoren (Schutzkolloiden) und/oder Tensiden in einem wässrigen Medium durch Rühren suspendiert.

In einer alternativ bevorzugten Ausführungsform werden die Monomere in einem Lösungsmittel gelöst, bevorzugt vollständig gelöst. Weiterhin wird bevorzugt auch das entstehende Polymer in dem Lösungsmittel gelöst, bevorzugt, vollständig gelöst. Das Lösungsmittel ist bevorzugt ein organisches Lösungsmittel, mehr bevorzugt ein inertes, organisches Lösungsmittel. Beispiele für polare, organische Lösungsmittel sind Ethanol, Isopropanol, Aceton, Methylethylketon, THF.

In dem optionalen Schritt (ii) des erfindungsgemäßen Verfahrens kann gegebenenfalls mindestens ein weiteres Monomer bereitgestellt werden. Dieses mindestens eine weitere Monomer kann bevorzugt aus der Gruppe bestehend aus a) alkalischen Monomeren, b) sauren Monomeren, c) assoziierenden Monomeren und d) Standardmonomeren ausgewählt werden. Bezüglich Auswahl und Mengen der weiteren Monomere wird auf die vorstehenden Erläuterungen verwiesen.

Im Schritt (iii) des vorliegenden Verfahrens werden die Monomere mit oder ohne Zugabe eines Polymerisationsinitiators polymerisiert, besonders bevorzugt durch einen Initiator, der Kohlenstoff-zentrierte Radikale bildet. In einer weiteren bevorzugten Form wird die Polymerisation als lebende radikalische Polymerisation durchgeführt; hierfür besonders geeignet sind Nitroxylradikale oder das RAFT-Verfahren. Der Polymerisationsinitiator ist bevorzugt ein Photoinitiator oder eine Substanz zur thermisch initiierten radikalischen Polymerisation, bevorzugt eine Substanz zur thermisch initiierten radikalischen Polymerisation.

Es werden bevorzugt vorstehend erläuterte Inititatoren verwendet.

Vorstehend wurde das erfindungsgemäße antimikrobielle Polymer beschrieben. Dieses kann als Homopolymer oder als Copolymer vorliegen. Das antimikrobielle Polymer kann mit einem weiteren Polymer (hier auch als Blend-Polymer, kurz BLEPO genannt) zu einem Polymerblend verarbeitet werden.

Ein weiterer Gegenstand der Erfindung ist somit ein antimikrobieller Polymerblend, enthaltend ein antimikrobielles Polymer erhältlich durch Polymerisation eines Monomers mit Struktur gemäß Formel (I)

A-B-C'-D (I),

wobei das Polymer ein Homopolymer oder ein Copolymer ist, erhältlich durch die Umsetzung mindestens eines Monomers gemäß Formel (I), wobei

A eine radikalisch polymerisierbare Gruppe mit der Formel $-CR^{V1}=CR^{V2}R^{V3}$ist, wobei $R^{V1}$, $R^{V2}$ und $R^{V3}$ unabhängig voneinander Wasserstoff, Methyl, Chlorid-, Cyano- oder Estergruppen sind,
B ein aromatischer Abstandshalter ist,
C' ein aliphatischer Abstandshalter mit der Formel $-CR^{S1}R^{S2}$-ist, wobei $R^{S1}$ und $R^{S2}$unabhängig voneinander Wasserstoff oder Methyl sind, und
D ein Amin mit der Formel $-NR^{A1}R^{A2}$ ist, wobei
$R^{A1}$ eine nicht aromatische Gruppe mit 2 bis 7 Kohlenstoffatomen ist, und
$R^{A2}$ Wasserstoff, Methyl oder eine nicht aromatische Gruppe mit 2 bis 7 Kohlenstoffatomen, ist, oder wobei $R^{A1}$ und $R^{A2}$ miteinander verbunden sind und einen Ring zusammen mit dem Stickstoff bilden, wobei der Ring 3 bis 6 Kohlenstoffatome enthält, wobei der gebildete Ring bis zu 4 Methylgruppen tragen kann"
und gegebenenfalls mindestens einem weiteren Monomer, bevorzugt umfassend

a) alkalische Monomere ausgewählt aus Vinylimidazolen wie 1-Vinylimidazol, 2-Methyl-1-vinylimidazol, N-Vinyloxazolidon, N-tert.-Butylaminoethylmethacrylat, N,N-Dimethyl-aminoethylmethacrylat, N,N-Diethylaminoethylmethacrylat, N,N-Diisopropylamino-ethylmethacrylat, 2-Vinylpyridin, 3-Vinylpyridin, 4-Vinylpyridin, N-Vinyltriazol, Aminalkylvinylether, sowie Gemischen daraus und/oder
b) saure Monomere ausgewählt aus Acrylsäure, Chloracrylsäure, Cyanacrylsäure, Methacrylsäure, Itaconsäure und deren Anhydrid, Mesaconsäure, Citraconsäure, Crotonsäure, Fumarsäure, Maleinsäure, Vinylbenzoesäure und deren Isomeren, Zimtsäure, Stilbendicarbonsäure, Vinylphosphonsäure, Vinylbenzylphosphonsäure, Vinylbenzylsulfonsäure, Vinylsulfonsäure, 2-Styrolsulfonsäure, 3-Styrolsulfonsäure, 4-Styrolsulfonsäure, 2-Styrolphosphonsäure, 3-Styrolphosphonsäure, 4-Styrolphosphonsäure sowie Gemischen daraus und/oder

c) assoziierende Monomere ausgewählt aus Acrylnitril, Methacrylnitril, N,N-Dimethylacrylamid, N-Ethylacrylamid, N-tert.-Butylacrylamid, Vinyl-Methylacetamid, N-tert.-Octylacrylamid, Methylcyanacrylat, Dicyanoethylen, 1-Nitrovinylen, 1-Nitro-1-Methylvinyliden, Vinylpyrrolidon, Vinylcaprolactam, und Vinylbenzonitril und dessen Isomeren sowie Gemischen daraus und /oder
d) Standardmonomere ausgewählt aus Ethylen, Butadien, Isopren, Chloropren, Methacrylester, Acrylester, Vinylether (z.B. Ethylvinylether, Isobutylvinylether, tert.-Butylvinylether, Methylvinylether, Butylvinylether, Cyclohexylvinylether), Vinylcarbazol, Vinylthioether, Vinylester, Vinylcyclohexan Vinylmethylchlorid, Vinylidenfluorid, Vinylacetat, Vinylsilan, Vinylchlorid, Vinylfluorid, Vinylidenchlorid, Vinylbenzylchlorid, Vinylbenzylbromid, Diester der Fumarsäure, Diamide der Fumarsäure, Imide der Maleinsäure sowie Gemischen daraus,

wobei bevorzugt die Glastemperatur $T_G$ des Copolymers 65 °C bis 230°C beträgt, und mindestens ein weiteres Polymer (BLEPO), und
wobei der antimikrobielle Polymerblend thermoplastisch verarbeitbar ist.

**Bevorzugte Ausführungsformen von Gruppe "A"**

A ist eine radikalisch polymerisierbare Gruppe mit der Formel $-CR^{V1}=CR^{V2}R^{V3}$, wobei $R^{V1}$, $R^{V2}$ und $R^{V3}$ unabhängig voneinander Wasserstoff, Methyl-, Chlorid-, Cyano- oder eine Estergruppe, sind.

In einer besonders bevorzugten Ausführungsform sind entweder $R^{V1}$ oder $R^{V2}$ oder $R^{V3}$ jeweils ausgewählt aus, Methyl-, Chlorid-, Cyano- oder einer Estergruppe, so dass eine zweifachsubstituierte vinylische Doppelbindung vorliegt.

In einer weiteren besonders bevorzugten Form sind $R^{V2}$ und $R^{V3}$ jeweils Wasserstoff und $R^{V1}$ ist ausgewählt aus der Gruppe Methyl, Cyano, Chlorid und-$COOCH_3$.

In einer bevorzugten Ausführungsform kann die Polymerisation der radikalisch polymerisierbaren Gruppe A eine photochemisch initiierte radikalische Polymerisation sein.

Bei der photochemisch initiierten radikalischen Polymerisation wird im Allgemeinen eine Verbindung eingesetzt, die beim Absorbieren von Licht, bevorzugt im Bereich von 300-450 nm, eine Photoreaktion durchläuft. Bei dieser Reaktion wird die reaktive Spezies erzeugt, die mit der radikalisch polymerisierbaren Gruppe reagiert und damit die Polymerisation einleitet. Beispiele für Photoinitiatoren sind 2,2-Dimethoxy-2-phenlyacetophenon (DMPA), 1-Hyroxycyclohexylphenylketon und 2,4,6-Trimethylbenzoyldiphenylphosphinoxid.

In einer besonders bevorzugten Ausführungsform kann die Polymerisation der radikalisch polymerisierbaren Gruppe eine thermisch initiierte radikalische Polymerisation mit oder ohne Initiator sein.

Eine Initiierung der radikalischen Polymerisation kann z. B. rein thermisch (ohne Initiator) oder durch peroxidische Initiatoren, Azo-Initiatoren, Redox-Systeme oder auf photochemischem Weg erfolgen.

Bevorzugte Initiatoren für die Polymerisation von A werden nachstehend im Abschnitt "Bevorzugte Initiatoren" beschrieben.

**Bevorzugte Ausführungsformen der Gruppe "B"**

In Formel (I) ist B ein aromatischer Abstandshalter. Der aromatische Abstandhalter ist zwischen der radikalisch polymerisierbaren Doppelbindung und dem aliphatischen Abstandshalter angeordnet.

Der aromatische Abstandshalter B kann jede aromatische Gruppe sein, d.h. jede Gruppe, die der Regel 4n+2 Pi-Elektronen folgt, wobei n 0 oder eine natürliche Zahl ist. Der aromatische Abstandshalter kann im aromatischen System Heteroatome, wie Stickstoff, Sauerstoff, Schwefel, Phosphor enthalten.

Bevorzugt enthält B Strukturelemente der Gruppe der Phenylene, Naphthylene, Phenanthrene, Antracene, Fluorene, Pyridine, Pyrimidine, Triazine, Chinoline, Isochinoline, Acridine, Imidazole, Pyridazine, Pyrazine, Carbazole, Indole, Pyrazole.

Die aromatischen Abstandshalter können neben den Gruppen A und C' weiterhin zusätzliche Substituenten oder funktionalisierte Substituenten enthalten. Als Beispiele seien genannt: Alkyl-, Aryl-, Ester-, Ether-, Hydroxy-, Cyano-, Aldehyd-, Keton-, Halogen-, organische Säure-, Harnstoff-, Urethan-, Amid-, Imid-, Amin-, Nitro-, Sulfonsäuregruppen, bevorzugt Ester-, mehr bevorzugt Methylester-, Keto- und Cyanogruppen, insbesondere Cyanogruppen.

In einer bevorzugten Ausführungsform ist der aromatische Abstandshalter nicht weiter substituiert. Bevorzugt ist B ausgewählt aus einem Phenylen-, Naphthylen-, Pyridyl-oder Carbazolsystem, besonderes bevorzugt aus einem Phenylen- oder Naphthylensystem, insbesondere ein Phenylensystem.

**Bevorzugte Ausführungsformen der Gruppe "C'"**

In Formel (I) ist C' ein aliphatischer Abstandshalter mit der Formel $-CR^{S1}R^{S2}-$, wobei $R^{S1}$ und $R^{S2}$ unabhängig

Wasserstoff oder Methyl sein können.

Der aliphatische Abstandshalter C' ist zwischen dem aromatischen Abstandshalter B und dem Amin D angeordnet. Es hat sich herausgestellt, dass bei der Verwendung eines substituierten oder unsubstituierten Methylens als aliphatischer Abstandshalter eine verbesserte Verarbeitbarkeit sowie eine gesteigerte antimikrobielle Wirkung des resultierenden Polymers erzielt werden kann.

Ferner kann der Abstandhalter C' mit der daran gebundenen Gruppe D ein- oder auch mehrfach am aromatischen Abstandshalter substituiert vorliegen, bevorzugt jedoch 1-3-fach, besonders bevorzugt 1-2-fach. Die Lage der Gruppe C' zur polymerisierbaren Gruppe A im aromatischen Abstandhalter ist darüber hinaus bevorzugt positionsunabhängig, besonders bevorzugt sind bei zwei Substituenten jedoch Substitutionsmuster in denen sich die Gruppen direkt oder diagonal gegenüber stehen, z.B. bei einem Phenylabstandshalter die para-Position oder beim Naphthylenabstandshalter in der 1,4 bzw. 2,6 oder 1,5 Position.

**Bevorzugte Ausführungsformen der Gruppe "D"**

In einer bevorzugten Ausführungsform der Formel (I) ist D ein Amin mit der Formel $-NR^{A1}R^{A2}$, wobei $R^{A1}$ eine nicht aromatische Gruppe mit 2 bis 7 Kohlenstoffatomen ist und $R^{A2}$ Wasserstoff, Methyl oder eine nicht aromatische Gruppe mit 2 bis 7 Kohlenstoffatomen ist. Alternativ sind $R^{A1}$ und $R^{A2}$ miteinander verbunden und bilden einen Ring zusammen mit dem Stickstoff, wobei der Ring 3 bis 6 Kohlenstoffatome enthält, wobei der gebildete Ring zusätzlich bis zu 4 Methylgruppen tragen kann.

In einer bevorzugten Ausführungsform ist die nicht aromatische Gruppe RA1 bevorzugt eine lineare, verzweigte oder zyklische aliphatische Gruppe mit 2 bis 7 Kohlenstoffatomen, bevorzugt eine verzweigte oder zyklische aliphatische Gruppe mit 3 bis 7 Kohlenstoffatomen, besonders bevorzugt eine verzweigte aliphatische Gruppe mit 3 bis 7 Kohlenstoffatomen.

Beispiele für lineare aliphatische Gruppen sind Ethyl, Propyl, Butyl, Pentyl, Hexyl und Heptyl, bevorzugt Ethyl, Propyl und Butyl.

Die zyklische Gruppe kann Cyclopropyl, Cyclobutyl, Cyclopentyl oder Cyclohexyl sein, bevorzugt Cyclopentyl oder Cyclohexyl.

In einer besonders bevorzugten Ausführungsform ist $R^{A1}$ eine verzweigte aliphatische Gruppe mit 3 bis 7 Kohlenstoffatomen.

Bevorzugte verzweigte aliphatische Gruppen $R^{A1}$ sind Isopropyl, sec-Butyl, iso-Butyl, tert.-Butyl, 2-Pentyl (sec-Pentyl), 3-Pentyl, 2-Methyl-butyl, 3-Methylbutyl (Isopentyl), 3-Methyl-but-2-yl, 2-Methylbut-2-yl, 2,2-Dimethylpropyl (Neopentyl), 2-Methyl-3-pentyl, 3-Methyl-3-pentyl, 2,3-Dimethylbutyl, 2,2-Dimethylbutyl (Neohexyl), 3-Ethyl-3-pentyl.

Mehr bevorzugt als $R^{A1}$ sind Isopropyl, sec-Butyl, iso-Butyl, tert.-Butyl, 3-Methyl-but-2-yl, 2-Methylbut-2-yl, 2-Methyl-3-pentyl, 3-Methyl-3-pentyl, 2,3-Dimethylbutyl und 3-Ethyl-3-pentyl.

Noch mehr bevorzugt als $R^{A1}$ sind tert.-Butyl, 2-Methylbut-2-yl, 3-Methyl-3-pentyl und 3-Ethyl-3-pentyl.

Ganz besonders bevorzugt als $R^{A1}$ ist 2-Methylbut-2-yl. Ganz besonders bevorzugt als $R^{A1}$ ist 3-Methyl-3-pentyl. Ganz besonders bevorzugt als $R^{A1}$ ist 3-Ethyl-3-pentyl. Ganz besonders bevorzugt als $R^{A1}$ ist tert.-Butyl.

In einer bevorzugten Ausführungsform ist die Gruppe $R^{A2}$ Wasserstoff, Methyl oder eine nicht aromatische Gruppe mit 2 bis 7 Kohlenstoffatomen, bevorzugt Wasserstoff oder Methyl, besonders bevorzugt Wasserstoff.

In einer alternativen Ausführungsform ist die Gruppe $R^{A2}$ bevorzugt eine lineare, verzweigte oder zyklische aliphatische Gruppe mit 2 bis 7 Kohlenstoffatomen. Beispiele für solche Gruppen entsprechen den vorstehend aufgezeigten Gruppen von $R^{A1}$.

In einer bevorzugten Ausführungsform ist $R^{A1}$ eine nicht aromatische verzweigte Gruppe mit 3 bis 7 Kohlenstoffatomen und $R^{A2}$ Wasserstoff, eine Methylgruppe oder eine nicht aromatische Gruppe mit 2 bis 3 Kohlenstoffatomen.

In einer mehr bevorzugten Ausführungsform ist $R^{A1}$ eine nicht aromatische verzweigte Gruppe mit 3 bis 7 Kohlenstoffatomen und $R^{A2}$ Wasserstoff oder eine Methylgruppe.

In einer ganz besonders bevorzugten Ausführungsform ist $R^{A1}$ eine nicht aromatische verzweigte Gruppe mit 3 bis 7 Kohlenstoffatomen und $R^{A2}$ Wasserstoff.

In einer bevorzugten Ausführungsform sind $R^{A1}$ und $R^{A2}$ miteinander verbunden und bilden zusammen mit dem Stickstoff einen Ring, wobei der Ring 3 bis 6 Kohlenstoffatomen enthält, wobei der gebildete Ring zusätzlich bis zu 4 Methylgruppen tragen kann.

**Bevorzugte Kombinationen der Gruppen A, B, C' und D**

In einer bevorzugten Ausführungsform der vorliegenden Erfindung ist die radikalisch polymerisierbare Gruppe A $-CCN{=}CH_2$, $-CCH_3{=}CH_2$, $-CCl{=}CH_2$, $-CH{=}CH_2$ oder $-C(COOCH_3){=}CH_2$ ist und/oder der aromatische Abstandshalter B enthält ein Phenylen-, Pyridyl-, Naphthylen- oder Carbazolsystem und/oder der nicht aromatische Abstandshalter C' ist $-CH_2-$, $CHCH_3$ oder $C(CH_3)_2$ und der Rest $R^{A1}$ ist in der Gruppe D Wasserstoff oder eine verzweigte aliphatische

Gruppe mit 3 bis 7 Kohlenstoffatomen und der Rest $R^{A2}$ ist in der Gruppe D eine verzweigte aliphatische Gruppe mit 3 bis 7 Kohlenstoffatomen und/oder $R^{A1}$ und $R^{A2}$ sind miteinander verbunden und bilden zusammen mit dem Stickstoff einen Ring, wobei der Ring 4 bis 6 Kohlenstoffatome enthält, wobei der gebildete Ring bis zu vier Methylgruppen tragen kann.

In einer besonders bevorzugten Ausführungsform ist das antimikrobielle Polymer in dem erfindungsgemäßen Polymerblend ein Polymer, welches erhältlich ist durch Polymerisation von Monomeren gemäß den Strukturformeln (IIa bis IIc) oder Mischungen daraus:

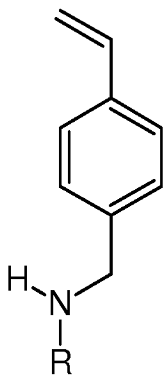

IIa

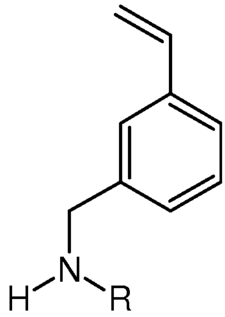

IIb

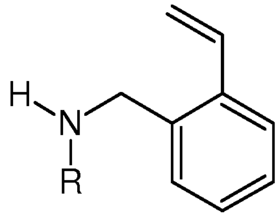

IIc

wobei der Rest R wie vorstehend bei den Formeln IIa-c beschrieben definiert ist.

Bevorzugt ist ein Monomer gemäß Formel (IIa).

In einer bevorzugten Ausführungsform des antimikrobiellen Polymerblends ist das antimikrobielle Polymer ein Copolymer, durch die Umsetzung eines Monomers gemäß Formel (I), wobei die Gruppen A, B, C' und D wie in Anspruch 10 definiert sind, und mindestens einem weiteren Monomer, bevorzugt umfassend

a) alkalische Monomere und/oder
b) saure Monomere und/oder
c) assoziierende Monomere und /oder
d) Standardmonomere,

wobei bevorzugt die Glastemperatur $T_G$ des Copolymers 65 °C bis 230°C beträgt.

Alle vorstehend gegebenen Erläuterungen zu den a) alkalischen Monomeren, b) sauren Monomeren, c) assoziierenden Monomeren und d) Standardmonomeren sowie deren Bereiche auf den Gesamtmonomerengehalt gelten auch für die Copolymere im Polymerblend.

Weiterhin gelten alle vorstehend gegebenen Erläuterungen zu den antimikrobiellen Polymeren (bevorzugt auch für den erfindungsgemäßen antimikrobiellen Polymerblend. Das gilt insbesondere für die Definition der Reste in den Formeln (IIa-IIc), sowie für die physikalischen Eigenschaften, wie antimikrobiellen Eigenschaften, thermoplastische Verarbeitbarkeit, Wasseraufnahme, Molekulargewicht und Glastemperatur.

Zu den bevorzugten Polymeren (BLEPO) mit denen das antimikrobielle Polymer oder Copolymer gemäß Fromel (I) zu einem Polymerblend verarbeitet werden können zählen u. a.: Polyvinylpyridin und dessen Copolymere, Polyvinylpyrrolidin, Polyvinylimidazol, Polymethylaminoethylmethacrylate sowie deren Copolymere, Polyvinylcarbazol und dessen Copolymere, aromatisches und aliphatisches thermoplastisches Polyurethan (TPU), Polypyrrol, Polyacrylsäure (PAA), Polymethacrylsäure (PMAA), Polymethylmethacrylat (PMMA), MSA gepfropftes Polyethylen (MSA-PE), Polychloracrylsäure, und Polycyanacrylsäure, Polyacrylnitril (PAN), Polystyrol-co-Acrylnitril (SAN), Polyacrylnitril-butadien-Styrol (ABS), Polyacrylnitrilbutadien, Polyester, Polybutylentherephthalate (PBT), Polyethylentherephthalate (PET), Acrylnitril-Butadien-Kautschuk (NBR), Styrol-Butadien-Kautschuk (SBR), Methylmethacrylat-Acrylnitril-Butadien-Styrol (MABS), unterschiedliche Polyamide (PA) z.B. (PA 6, PA4/6, PA66, PA6/66, PA66/610, PA11, PA12, PA12/MACMI etc., Polyarylamide, Polyethylenvinylalkohol (EVOH), Polyimide, Polyvinylamid, Polyacrylamide (PARA), Polyvinylbenzonitril, Polyamidimid (PAI), Polyether-Blockamide (PEBA), Polyimidsulfone (PISU), Polyphthalamide (PPA), Polyvinylchloridacetat (PVCA), Polyetherimid (PEI), Polyesteramid (PEA), High Impact Polystyrol (HIPS), Polyolefine wie z. B. Polyethylene (PE, LDPE, LLDPE, HDPE, MDPE), Polypropylene (PP), Poly(4-Methyl-1-penten) (PMP), Ethylen-Propylen-Copolymer (EPM), Ethylen-Propylen-Dienkautschuk (EPDM), Polyoxymethylen (POM), Polyvinylchloride (PVC), Polyvinylacatet (PVA), Polyethylenvinylacetat (EVA), Polyetherketone, Polyphenylenether (PPE, PPO), Copolymere

von Ethen und Vinylacatet (EVM), Polycarbonate (PC), Butadienkautschuk (BR), Ethylen-Propylen-Kautschuk (EPM), Polyisopren (NR, IR), Polyethersulfone (PES), Polyvinylidenchlorid (PVDC), Poly(2,6-diphenyl-phenylenoxid), TPEs, Acrylat-Butadien Kautschuke (ABR), Polyarylether (PAE), Polyarylsulfone (PASU), Poly-a-methylstyrol-co-acrylnitril (AMSAN), Poly-a-Methylstyrole (PAMS), Polycyclohexylendimethylenterephthalat (PCT), Polydimethylsiloxan (PDMS), Polyetheretherketone (PEEK), Polyetherketonetherketonketone (PEKEKK), Polyetherketonketone (PEKK), Polyethylennaphthalate (PEN), Polymeth-acrylmethylimid (PMMI), Perfluoralkoxypolymer (PFA), Polyperfluoropolyether (PFPE), Polytetrafluorethylen (PTFE), Acrylnitrilmethylmetacrylat (AMMA), Polyvinylchloridethylen (VCE), Polyvinylchloridethylen-methyl Acrylat (VCEMA), Polyvinylchlorid-Methylacrylat (VCMA), Polyvinylchloridvinylidenchlorid (VCVDC), Acrylnitril-chloriniertespolyethylen-Styrol-Terpolymer (ACS), Acrylester-Styrol-Acrylnitril (ASA), Acrylnitril-Butadien-Acrylat (ABA), Celluloseester (CA, CAB, CP), Cellulosenitrat (CN), Cycloolefincopolymere (COC), Ethylenacrylat-Copolymer, Polyhydroxyalkanoate (PHA), Polyhydroxybutyrate (PHB), Polyvinylidenfluorid, Methylcellulose (MC) sowie Gemische daraus.

Besonders bevorzugt sind Polyvinylpyridin und dessen Copolymere, Polyvinylpyrrolidin, Polyvinylimidazole, sowie deren Copolymere, Polyvinylcarbazol und dessen Copolymere, aromatisches und aliphatisches thermoplastisches Polyurethan (TPU), Polypyrrol, Polyacrylsäure (PAA), Polymethacrylsäure (PMAA), Polymethylmethacrylat (PMMA), MSA gepfropftes Polyethylen (MSA-PE), Polychloracrylsäure, und Polycyanacrylsäure, Polyester, Polybutylentherephthalat (PBT), Polyethylentherephthalat (PET), unterschiedliche Polyamide (PA) z.B. (PA 6, PA4/6, PA66, PA6/66, PA66/610, PA66, PA 12,), Polyarylamide, Polyimide, Polyacrylamide (PARA), Polyamidimid(PAI), Polyether-Blockamide (PEBA), Polyphthalamide (PPA), Polyesteramid (PEA), Polyoxymethylen (POM), Polyetherketone, Polyphenylenether (PPE, PPO), Polyamide, Polycarbonate (PC), Polyethersulfone,), Poly(2,6-diphenyl-phenylen-oxid), Polyarylether (PAE), Polyarylsulfone (PASU), Polycyclohexylendimethylenterephthalat (PCT), Polyethersulfone (PES), High Impact Polystyrol (HIPS), Polyolefine wie z. B. Polyethylene (LDPE, LLDPE, HDPE, MDPE) Polypropylene (PP), Ethylen-Propylen-Copolymer (EPM), Ethylen-Propylen-Dienkautschuk (EPDM), Polyoxymethylen (POM), Polyvinylchloride (PVC), Polyvinylacatet (PVA), Polyethylenvinylacate (EVA), Acrylnitril-Styrol-Copolymer (SAN), Acrylnitril-Butadien-Styrol (ABS), Acrylester-Styrol-Acrylnitril (ASA), Acrylnitril-Butadien-Acrylat (ABA) und Gemische daraus.

Noch mehr bevorzugt sind Polyolefine, insbesondere PE und PP.

Beispiele von bevorzugten Polyolefinen sind Polyethylene, z. B. Polyethylen hoher Dichte (HDPE, Dichte grösser als 0,944g/$cm^3$ bis max. 1,2 g/cm3), Polyethylen mittlerer Dichte (MDPE, Dichte 0,926-0,940 g/$cm^3$), lineares Polyethylen mittlerer Dichte (LMDPE, Dichte 0,926-0,940 g/$cm^3$), Polyethylen niedriger Dichte (LDPE, Dichte 0,910-0,925 g/$cm^3$) und lineares Polyethylen niedriger Dichte (LLDPE, Dichte 0,916-0,925 g/$cm^3$), bzw. Gemische derselben, Polypropylene, amorphes oder kristallines Polypropylen, ataktisches oder isotaktisches Polypropylen oder Gemische dieser Polypropylene, axial oder biaxial orientiertes Polypropylen oder gegossenes (cast) Polypropylen, Poly-1-buten, Poly-3-methylbuten, Poly-4-methylpenten und Copolymere davon, wie z. B. von Polyethylen mit Vinylacetat, Vinylalkohol, Acrylsäure, z.B. Ionomerharze, wie Copolymerisate von Ethylen mit etwa 11 % Acrylsäure, Methacrylsäure, Acrylestern, Tetrafluorethylen oder Polypropylen, sowie statistische Copolymere, Block-Copolymere oder Olefinpolymer-Elastomer-Mischungen. Alternativ bevorzugt sind ABS, Polyamide und PS. Weiterhin alternativ bevorzugt ist thermoplastisches Polyurethan (TPU).

In einer bevorzugten Ausführungsform enthält der erfindungsgemäße Polymerblend 1 bis 99 mol-%, bevorzugt 5 bis 95mol-%, mehr bevorzugt 10 bis 90 mol-%, noch mehr bevorzugt 15 bis 85 mol-%, insbesondere 30 bis 80 mol-% erfindungsgemäßes Homopolymer gemäß Formel (I) oder gemäß Formel (IIa bis IIc) und 1 bis 99 mol-%, bevorzugt 5 bis 95 mol-%, mehr bevorzugt 10 bis 90 mol-%, noch mehr bevorzugt 15 bis 85 mol-%, insbesondere 20 bis 70 mol-% weiteres Polymer (BLEPO) oder beliebigen Gemischen der Polymere.

In einer alternativ bevorzugten Ausführungsform enthält der erfindungsgemäße Polymerblend 1 bis 40 mol-%, bevorzugt 3 bis 35 mol-%, mehr bevorzugt 5 bis 30 mol-%, noch mehr bevorzugt 7 bis 25 mol-%, insbesondere 8 bis 30 mol-% antimikrobielles Polymer gemäß Formel (I) und 30 bis 90 mol-%, bevorzugt 40 bis 85 mol-%, mehr bevorzugt 45 bis 80 mol-% weiteres Polymer (BLEPO).

In einer alternativ bevorzugten Ausführungsform enthält der erfindungsgemäße Polymerblend 1 bis 40 Gew.-%, bevorzugt 3 bis 35 Gew.-%, mehr bevorzugt 5 bis 30 Gew.-%, noch mehr bevorzugt 7 bis 25 Gew.-%, insbesondere 8 bis 30 Gew.-% antimikrobielles Polymer gemäß Formel (I) oder gemäß Formel (IIa bis IIc) und 30 bis 90 Gew.-%, bevorzugt 40 bis 85 Gew.-%, mehr bevorzugt 45 bis 80 Gew.-% weiteres Polymer (BLEPO).

Für den Fall, dass der erfindungsgemäße Polymerblend auf den antimikrobiell auszurüstenden Gegenstand in geringen Mengen aufgetragen wird, beispielsweise in Form eines Films, enthält der Polymerblend üblicherweise 3 bis 99 Gew.-%, bevorzugt 5 bis 95 Gew.-%, insbesondere 8 bis 80 Gew.-% antimikrobielles Polymer gemäß Formel I oder gemäß Formel (IIa bis IIc) und 1 bis 60 Gew.-%, bevorzugt 2 bis 30 Gew.-%, mehr bevorzugt 5 bis 10 Gew.-% weiteres Polymer (BLEPO). In einer bevorzugten Ausführungsform weist der Film eine Dicke von 1 nm bis 100 $\mu$m. In einer alternativen Ausführungsform weist der Film, wenn er beispielsweise über ein Extrusionsverfahren aufgetragen wird, eine Dicke von 1 bis 100 $\mu$m, bevorzugt 1 bis 50 $\mu$m, mehr bevorzugt 1 bis 20 $\mu$m, auf. In einer weiteren alternativen Ausführungsform weist der Film, wenn er beispielsweise über ein Druck- oder Lackierverfahren aufgetragen wird, eine

Dicke von 1 nm bis 15 µm, bevorzugt 5 nm bis 1 µm, mehr bevorzugt 5 bis 500 nm auf.

In einer bevorzugten Ausführungsform enthält der erfindungsgemäße Polymerblend 1 bis 99 mol-%, bevorzugt 30 bis 95 mol-%, mehr bevorzugt 50 bis 90 mol-% erfindungsgemäßes Copolymer und 1 bis 99 mol-%, bevorzugt 5 bis 70 mol-%, mehr bevorzugt 10 bis 50 mol-% weiteres Polymer oder beliebige Gemische der Polymere.

In einer alternativ bevorzugten Ausführungsform enthält der erfindungsgemäße Polymerblend 1 bis 40 mol-%, bevorzugt 3 bis 35 mol-%, mehr bevorzugt 5 bis 30 mol-%, noch mehr bevorzugt 7 bis 25 mol-%, insbesondere 8 bis 30 mol-% antimikrobielles Copolymer und 30 bis 90 mol-%, bevorzugt 40 bis 85 mol-%, mehr bevorzugt 45 bis 80 mol-% weiteres Polymer (BLEPO).

In einer alternativ bevorzugten Ausführungsform enthält der erfindungsgemäße Polymerblend 1 bis 40 Gew.-%, bevorzugt 3 bis 35 Gew.-%, mehr bevorzugt 5 bis 30 Gew.-%, noch mehr bevorzugt 7 bis 25 Gew.-%, insbesondere 8 bis 30 Gew.-% antimikrobielles Coolymer und 30 bis 90 Gew.-%, bevorzugt 40 bis 85 Gew.-%, mehr bevorzugt 45 bis 80 Gew.-% weiteres Polymer (BLEPO).

Das antimikrobielle Polymer und das mindestens eine weitere Polymer (BLEPO) liegen bevorzugt als ein- oder mehrphasige Mischung im Polymerblend vor, wobei ein Compatibilizer zum Einsatz kommen kann.

Die Blends können, wie oben beschrieben, thermoplastisch verarbeitet werden.

## Bevorzugte Ausführungsformen von optionalen Additiven

In einer bevorzugten Ausführungsform können sowohl das antimikrobielle Homopolymer und/ oder Copolymer (als auch der antimikrobielle Polymerblend der Erfindung bevorzugt die in der Polymerchemie gängigen Additive enthalten. Beispiele für Additive sind unter anderem Füllstoffe, Haftvermittler, Weichmacher, Stabilisatoren, wie Antioxidantien, Lichtschutz- und Flammschutzmittel, UV-Absorber, Quencher, Schlagzähigkeitsverbesserer, Verstärkungsstoffe (Kugeln, Fasern, etc.), Antistatika, Metalldeaktivatoren, Antifogzusätze, Farbmittel, Gleitmittel, Treibmittel, Formtrennmittel und Verarbeitungshilfsmittel.

Im Allgemeinen werden Füllstoffe als Funktionsadditive oder als Streckmittel eingesetzt. Beispiele für Füllstoffe sind Titanoxid, Aluminiumhydroxid, Siliziumoxid, Aluminiumsilikate, Calciumcarbonat, Calciumsulfat, Bariumsulfat, Wolframoxid, Chromoxid, Vanadiumoxid, Molybdänoxid, Talkum, Ruß und Stärke. Füllstoffe können in einer Menge von 0 bis 80 Gew.-%, bevorzugt 5 bis 30 Gew.-%, bezogen auf das Gesamtgewicht des erfindungsgemäßen Polymers oder des erfindungsgemäßen Polymerblends, enthalten sein.

## Haftvermittler

In einer bevorzugten Ausführungsform enthält der erfindungsgemäße Blend neben dem antimikrobiellen Polymer und dem weiteren Polymer (BLEPO) noch Haftvermittler (wie nachstehend beschrieben). Bevorzugt wird der Haftvermittler während der Compoundierung zugesetzt.

Haftvermittler sind vorzugsweise mit reaktiven Gruppen ausgestattet und können mit dem antimikrobiellen Polymer reagieren. Hierdurch kann die Migration des antimikrobiellen Polymers aus dem Blend verhindert und/oder eine Anbindung an eine weitere Polymerschicht erreicht werden. Beispiele für Haftvermittler sind gepfropfte Polymere wie gepfropftes LDPE, gepfropftes LLDPE, gepfropftes HDPE und gepfropftes Polypropylen. Bevorzugt sind die Polymere mit Maleinsäureanhydrid gepfropft. Weiterhin können als Haftvermittler zwischen den Kunststofffolien und Trägermaterialien beispielsweise Vinylchlorid-Copolymerisate, polymerisierbare Polyester, Vinylpyridin-Polymerisate, Vinylpyridin-Polymerisate in Kombination mit Epoxidharzen, Butadien-Arylnitril-Methacrylsäure-Co-polymerisate, Phenolharze, Kautschukderivate, Acrylharze, Acrylharze mit Phenol bzw. Epoxidharzen, siliziumorganische Verbindungen, wie Organosilane, modifizierte Polyolefine, wie säuremodifizierte Polyolefine oder Ethylenacrylsäure (EAA) verwendet werden. Bevorzugt werden EAA (Ethylenacrylsäure) oder modifizierte Polyolefine, wie z.B. modifizierte Polypropylene. Ein bevorzugtes modifiziertes Polypropylen ist ein Addukt aus Maleinsäureanhydrid und einem Ethylen-Propylen-Copolymer. Ganz besonders bevorzugt werden Dispersionen von modifizierten Polyolefinen. Ein Beispiel einer Dispersion eines modifizierten Polypropylens ist Morprime (Markenname der Firma Morton International of Norton Norwich Products, Inc.). Weitere geeignete Haftvermittler sind Klebstoffe wie Nitrilkautschuk-Phenolharze, Epoxide, Acrylnitril-Butadien-Kautschuk, urethanmodifizierte Acryle, Polyester-co-Polyamide, Heißschmelzpolyester, mit Heißschmelzpolyester vernetzte Polyisocyanate, polyisobutylenmodifizierte Styrol-Butadien-Kautschuke, Urethane, Ethylen-Acrylsäure-Mischpolymere und Ethylenvinylacetat-Mischpolymere. Haftvermittler können z.B. in einer Menge von 0,01 bis 25 Gew.-%, bevorzugt von 0,5 bis 5 Gew.-% verwendet werden. Die Haftvermittler werden gewöhnlich in einer Dicke von 1 bis 10 µm aufgetragen.

## Kleber

Als Kleber werden gewöhnlich Stoffe/Stoffgemische bezeichnet, die zum Verkleben verschiedener Werkstoffe

geeignet sein. Bevorzugt können Kleber ein Reaktivsystem aufweisen. Werden als Kleber beispielsweise Kaschierkleber angewendet, so können die Kaschierkleber lösungsmittelhaltig oder lösungsmittelfrei und auch wasserhaltig sein. Beispiele sind lösungsmittelhaltige, lösungsmittelfreie oder wässrige Acrylatkleber oder Polyurethan-Kleber (1 oder 2 Komponenten PU-Kleber) oder Epoxidharz-Kleber.

Als wässrige Dispersionsklebstoffe können Dispersionsklebstoffe zum Einsatz kommen. Diese können auf der Basis der für Klebstoffe üblicherweise verwendbaren Bindemittel, wie Polykondensate, Copolymerisate und Polyadditionsprodukte beruhen, soweit diese sich als wässrige Zusammensetzung verarbeiten lassen. Derartige Verbindungen sind beispielsweise Acryl- und Methacrylsäureester-Polymerisate; Copolymere von ethylenisch ungesättigten Verbindungen wie Ethylen, Propylen, Styren, Vinylacetat, Vinylidenchlorid, Maleinsäureanhydrid und Ester der Maleinsäure; Polyester und Polyurethane. Bevorzugt werden eingesetzt Klebstoffe auf der Basis von OH-funktionellen Polyurethanen oder Poly(meth)acrylaten. Die wässrigen Dispersionen können lösemittelfrei sein oder geringe Anteile an üblichen organischen Lösemitteln enthalten. Bevorzugt sind die wässrigen Dispersionen frei von organischen Lösemitteln. Kleber können z.B. in einer Menge von 0,01 bis 25 Gew.-%, bevorzugt von 0,5 bis 5 Gew.-% verwendet werden. Die Kleber werden bevorzugt in einer Dicke von 0,05 bis 10 μm aufgetragen.

**Weichmacher**

Weichmacher sind Substanzen, welche die Sprödigkeit und Härte des Kunststoffs verringern. Beispiele für Weichmacher sind schwerflüchtige Ester (wie aliphatische Di-oder Polycarbonsäureester, Ester des Pentaerythrits oder Dipentaerythrits, oder Polyester der Adipin-, Sebacin- und Azelainsäure, mit Molmassen: 550 - 3500 g/mol), fette Öle, Weichharze, Sulfonamide, oder Campher. Weichmacher können in einer Menge von 0 bis 40 Gew.-%, bevorzugt 0,1 bis 25 Gew.-%, mehr bevorzugt 0,5 bis 15 Gew.-% bezogen auf das Gesamtgewicht des erfindungsgemäßen Polymers oder des erfindungsgemäßen Polymerblends, enthalten sein.

Die Stabilisatoren dienen zur Verbesserung der chemischen Eigenschaften und schützen den Kunststoff gegen Oxidation, starke (Licht)-strahlung und Brand. Stabilisatoren können in einer Menge von 0 bis 25 Gew.-%, bevorzugt 0,1 bis 15 Gew.-%, bezogen auf das Gesamtgewicht des erfindungsgemäßen Polymers oder des erfindungsgemäßen Polymerblends, enthalten sein.

Die Antioxidantien sind Substanzen, die freie Radikale einfangen, Hydroperoxide reduzieren und so einen Abbau des Kunststoffs (Molmassenabbau, Verfärbung, Rissbildung) verhindern. Beispiele für Antioxidantien sind alkylierte Phenole, Amine (HALS, HAS) und Phosphite. Antioxidantien können in einer Menge von 0 bis 20 Gew.-%, bevorzugt 0,1 bis 10 Gew.-%, bezogen auf das Gesamtgewicht des erfindungsgemäßen Polymers oder des erfindungsgemäßen Polymerblends, enthalten sein.

Lichtschutzmittel schützen den Kunststoff vor Schädigung durch starke Lichteinstrahlung, insbesondere energiereiches UV-Licht. Als Lichtschutzmittel können beispielsweise Ruß, o-Hyroxybenzophenone, Hydroxyabenztriazole, Zimtsäurederivate, und Dialkyl- Dithiocarbamate eingesetzt werden. Lichtschutzmittel können in einer Menge von 0 bis 20 Gew.-%, bevorzugt 0,1 bis 5 Gew.-%, bezogen auf das Gesamtgewicht des erfindungsgemäßen Polymers oder des erfindungsgemäßen Polymerblends, enthalten sein.

Quencher nehmen die durch Chromophore absorbierte Strahlungsenergie auf und geben diese in Form von Wärme oder Fluoreszenz- bzw. Phosphoreszenzstrahlung ab und schützen das Polymer so vor energiereicher UV-Strahlung. Quencher können in einer Menge von 0 bis 15 Gew.-%, bevorzugt 0,1 bis 3 Gew.-%, bezogen auf das Gesamtgewicht des erfindungsgemäßen Polymers oder des erfindungsgemäßen Polymerblends, enthalten sein.

Flammschutzmittel verhindern entweder den weiteren Sauerstoffzutritt zum Brandort oder die chemischen Reaktionen (Radikalkettenreaktion) bei der Verbrennung. Beispiele für Flammschutzmittel sind Aluminiumhydroxid, polybromierte Substanzen in Verbindung mit Antimonoxid sowie phosphorhaltige Verbindungen, Ammoniumpolyphosphate, Borverbindungen. Flammschutzmittel können in einer Menge von 0 bis 70 Gew.-%, bevorzugt 0,1 bis 30 Gew.-%, bezogen auf das Gesamtgewicht des erfindungsgemäßen Polymers oder des erfindungsgemäßen Polymerblends, enthalten sein.

Verstärkungsstoffe sind organische oder anorganische Substanzen, welche die Kunststoffmatrix verstärken und eine Verbesserung der mechanischen und physikalischen Eigenschaften bewirken. Beispiele für flächige Verstärkungsstoffe sind Gelege, Gewebe, Gestricke und Gewirke, ebenso kommen geschnittene Fasern zum Einsatz. Beispiele für faserförmige Verstärkungsstoffe sind Kohlenstoff, Aramid, Glas, Polyester und Flachs. Beispiele für teilchenförmige Verstärkungsstoffe sind Talkum und Glimmer- und Glaskugeln. Verstärkungsstoffe können in einer Menge von 0 bis 50 Gew.-%, bevorzugt 1 bis 35 Gew.-%, bezogen auf das Gesamtgewicht des erfindungs-gemäßen Polymers oder des erfindungsgemäßen Polymerblends, enthalten sein.

Antistatika sind Substanzen, die eine elektrostatische Aufladung eines Kunststoffs entweder abschwächen oder verhindern. Beispiele für Antistatika sind quartäre Ammoniumverbindungen. Antistatika können in einer Menge von 0 bis 20 Gew.-%, bevorzugt 0,1 bis 5 Gew.-%, bezogen auf das Gesamtgewicht des erfindungsgemäßen Polymers oder des erfindungsgemäßen Polymerblends, enthalten sein.

Gleitmittel und Verarbeitungshilfsmittel verhindern die Belagbildung auf heißen Stahloberflächen und verbessern das rheologische Verhalten der Polymerschmelze. Dies wird unter anderem dadurch erreicht, dass eine Anhaftung auf den Stahloberflächen vermieden wird, weil sich eine wandgleitende Pfropfenströmung einstellt.

Farbmittel verleihen dem farblosen Kunststoff seine Farbe. Bei den Farbmitteln wird zwischen Farbstoffen und Pigmenten unterschieden. Farbmittel können in einer Menge von 0 bis 20 Gew.-%, bevorzugt 0,01 bis 10 Gew.-%, bezogen auf das Gesamtgewicht des erfindungsgemäßen Polymers oder des erfindungsgemäßen Polymerblends, enthalten sein.

Formtrennmittel sind oberflächenaktive Substanzen, die die Entformung aus dem Werkzeug erleichtern oder erstmöglich machen. Formtrennmittel können in einer Menge von 0 bis 10 Gew.-%, bevorzugt von 0,5 bis 5 Gew.-% bezogen auf das Gesamtgewicht des erfindungsgemäßen Polymers oder des erfindungsgemäßen Polymerblends, enthalten sein.

Treibmittel sind organische oder anorganische Substanzen, die es erlauben geschäumte Kunststoffprodukte herzustellen. Sie zersetzen sich während der thermoplastischen Verarbeitung unter Gasbildung und erzeugen so eine Schaumstruktur in der Polymermatrix. Treibmittel können vor oder während der thermoplastischen Verarbeitung in einer Menge von 0 bis 20 Gew.-%, bevorzugt von 0,1 bis 8 Gew.-% bezogen auf das Gesamtgewicht des erfindungsgemäßen Polymers oder des erfindungsgemäßen Polymerblends, zugesetzt werden.

In einer bevorzugten Ausführungsform enthalten die erfindungsgemäßen Polymere oder der erfindungsgemäße Polymerblend Verbindungen, die eine oder mehrere Säuregruppen oder Säureanhydridgruppen aufweisen.

Bei den Säuregruppen aufweisenden Verbindungen handelt es sich bevorzugt um Verbindungen, die Carbonsäure-, Sulfonsäure-, Phosphonsäuregruppen enthalten.

Beispiele sind Alkandisäuren sowie deren Anhydrid wie Glutarsäure, Bernsteinsäure, Adipinsäure, Dodecandisäure, Cyclohexandicarbonsäure, Alkylmalonsäure, Maleininsäure, Fumarsäure, Äpfelsäure, Weinsäure, Citronensäure. Beispiele für Anhydride und substituierte Anhydride sind Glutarsäureanhydrid, Bernsteinsäureanhydrid, Alkylbernsteinsäureanhydride wie Dodecylbernsteinsäureanhydrid, Maleinsäureanhydrid, etc. Weitere Beispiele bilden aromatische Disäuren wie Phthalsäure, Terephthalsäure, Benzoldisulfonsäure, Polyphosphorsäure, etc. und Gemische daraus sowie Polyester aus diesen Säuren, die als Endgruppen oder in der Kette Säuregruppen tragen. Beispiele für Polysäuren sind Polyacrylsäure, Polymethacrylsäure (PMAA), Polychloracrylsäure, Polycyanacrylsäure, Polyphosphorsäure, Polyvinylphosphonsäure, Polyvinylsulfonsäure. Beispiel für Polyanhydride sind u.a. MSA gepfropftes Polyethylen (MSA-PE).

Bevorzugt sind die Verbindungen, die eine oder mehrere Säuregruppen oder Säureanhydridgruppen in einer Menge von 0 bis 60 Gew.-%, mehr bevorzugt 0.1 bis 30 Gew.-%, besonders bevorzugt 0,5 bis 15 Gew.-% und insbesondere 1,0 bis 10 Gew.-%, bezogen auf das Gesamtgewicht des erfindungsgemäßen Polymers oder des erfindungsgemäßen Polymerblends aufweisen, enthalten.

Die genannten Verbindungen (Additive) können den erfindungsgemäßen Polymeren vor, während oder nach der Polymerisation zugesetzt werden.

Alternativ können die genannten Verbindungen (Additive) dem erfindungsgemäßen Polymerblend vor, während und nach der Compoundierung der Polymerkomponenten zugesetzt werden.

Weiterhin ist Gegenstand der vorliegenden Anmeldung die Verwendung eines Polymers erhältlich durch Polymerisation eines Monomers mit Struktur gemäß Formel (I)

A-B-C'-D (I),

wobei die Gruppen A, B, C' und D wie vorstehend definiert sind,

wobei bevorzugt die Glastemperatur $T_G$ des Polymers 60 °C bis 200 °C beträgt; und/oder

eines Copolymers, wie vorstehend beschrieben,

und/oder eines Polymerblends wie vorstehend beschrieben,

zur antimikrobiellen Ausrüstung, zur Herstellung antimikrobieller Erzeugnisse oder zur Herstellung antimikrobieller Verbundelemente, wobei das Polymer (d.h. Homopolymer oder Copolymer) oder der Polymerblend thermoplastisch verarbeitbar sind. Die erfindungsgemäße Verwendung umfasst somit thermoplastische Verfahren und die nachstehend beschriebenen Verfahren des Aufbringens auf Substrate durch Drucken, Tauchen, Sintern, Aufsprühen, Kaschieren, Laminieren, Kleben (z. B durch Aufheizen des Polymers und Andrücken an den Träger) und/oder Lackieren, z. B. durch Aufbringen einer Lösung, Emulsion oder Suspension.

Es gelten alle vorstehend gegebenen Erläuterungen zu den antimikrobiellen Polymeren bevorzugt auch für den erfindungsgemäßen antimikrobiellen Polymerblend. Das gilt insbesondere für die Definition der Reste A, B, C' und D und die Definition der a) alkalischen Monomere, der b) sauren Monomere, der c) assoziierenden Monomere und /oder der d) Standardmonomere.

So können beispielsweise Oberflächen von Gegenständen mit einem antimikrobiellen Polymer oder Polymerblend gemäß der Erfindung ausgerüstet werden. Insbesondere können die erfindungsgemäßen antimikrobiellen Polymere bzw. die Polymerblends als Beschichtung oder Eigenschicht verwendet werden, beispielsweise aus der Schmelze, z. B. durch Extrusion bzw. Coextrusion. Der Term "Eigenschicht" umfasst auch Bauteile, die ausschließlich aus dem erfindungsgemäßen antimikrobiellen Polymer oder Polymerblend aufgebaut sind, d.h. aus diesen bestehen.

Des Weiteren können die erfindungsgemäßen antimikrobiellen Polymere und/oder Polymerblends zur antimikrobiellen Ausrüstung verwendet werden (wobei die Polymere/Polymerblends an sich thermoplastisch verarbeitbar sind), wobei aber ein Aufbringen auf Substrate durch Tauchen, Sintern, Aufsprühen und/oder Lackieren z.B. aus Lösung oder Suspension erfolgt.

Sofern die erfindungsgemäßen antimikrobiellen Polymere bzw. die erfindungsgemäßen Blends als Beschichtung verwendet werden, so ist grundsätzlich die Schichtdicke nicht beschränkt. In einer bevorzugten Ausführungsform weist die Beschichtung eine Dicke von 1 nm bis 1 cm, bevorzugt von 10 nm bis 100 $\mu$m. In einer alternativen Ausführungsform weist die Beschichtung, wenn sie beispielsweise über ein Extrusionsverfahren aufgetragen wird, eine Dicke von 1 bis 100 $\mu$m, bevorzugt 1 bis 50 $\mu$m, mehr bevorzugt 1 bis 20 $\mu$m, auf. In einer weiteren alternativen Ausführungsform weist die Beschichtung, wenn sie beispielsweise über ein Druck- oder Lackierverfahren aufgetragen wird, eine Dicke von 1 nm bis 15 $\mu$m, bevorzugt 5 nm bis 1 $\mu$m, mehr bevorzugt 5 bis 500 nm auf.

Das erfindungsgemäße Polymer kann also weiterhin z. B. mittels Druckverfahren auf einen Träger (vorzugsweise eine Folie) aufgebracht werden. Druckverfahren sind beispielsweise Flexodruck, Siebdruck oder Tiefdruck. Beim Drucken wird das erfindungsgemäße Polymer vorzugsweise in einem Lösungsmittel gelöst oder suspendiert und aus diesem appliziert, beispielsweise in Form eines Lackes. Als Lösungsmittel können organische Lösungsmittel, beispielsweise Ethylacetat verwendet werden.

Weiterhin kann das erfindungsgemäße Polymer und/oder Polymerblends auch über Rakeln oder Walzen auf Folien oder andere Körper aufgetragen werden.

Weiterhin können die erfindungsgemäßen Polymere und Polymerblends in neutralisierter oder teilneutralisierter Form kataphoretisch auf metallische und leitfähige Oberflächen aufgebracht werden.

Des Weiteren lassen sich die erfindungsgemäßen antimikrobiellen Polymere und/oder Polymerblends auch als Additive und Komponenten für die Formulierung von Polymerblends, Farben, Lacken und Bioziden einsetzen.

Im Falle der erfindungsgemäßen Polymere und/oder Polymerblends ist eine besonders vorteilhafte Verarbeitung durch die Extrusion, Spritzguss, Pressen, Kalandrieren sowie durch eine Coextrusion mit weiteren Polymeren möglich.

Weitere Gegenstände der vorliegenden Erfindung sind die Verwendung der erfindungsgemäßen antimikrobiellen Polymere und/oder Polymerblends zur Herstellung von antimikrobiell wirksamen Erzeugnissen.

Solche Erzeugnisse können entweder aus den erfindungsgemäßen antimikrobiellen Polymere bzw. Polymerblends hergestellt werden oder basieren auf Kombinationen der erfindungsgemäßen antimikrobiellen Polymere bzw. Polymerblends und Trägermaterialien. Sofern die erfindungsgemäßen antimikrobiellen Polymere bzw. Polymerblends auf Trägermaterialien aufgebracht werden sie als Verbundelemente bezeichnet.. Die Verbundelemente umfassen folglich bevorzugt ein Trägermaterial und eine Beschichtung enthaltend das erfindungsgemäße antimikrobielle Polymer bzw. den erfindungsgemäßen Polymerblend. Bevorzugt weist die Beschichtung die oben genannte Dicke auf. In einer bevorzugten Ausführungsform können in einem Verbundelement zwischen den verschiedenen Schichten Haftvermittler und/oder Kleber vorliegen. Generell gilt für Haftvermittler und Kleber das vorstehend Beschriebene. Haftvermittler und/oder Kleber können bevorzugt in einer Dicke von 1 bis 10 $\mu$m verwendet werden.

Beispiele für Trägermaterialien sind Polystyrol, Polyacrylnitril, Polystyrol-co-Acrylnitril (SAN), Polymetylmethacrylat (PMMA), Polyacryl-nitrilbutadienstyrol (ABS), aliphatisches und aromatisches thermoplastischen Polyurethan (TPU), Polyurethane (Weichschäume, Halbhartschäume, Hartschäume, Elastomere, Coatings, Vergußmassen, Integralschäume etc.), Polyester , Polyacrylate, Polybutylenterephthalate (PBT), Polyethylenterephthalate (PET), Polycarbonate (PC), Polyvinylchloride (PVC), Acrylnitril-Butadien Acrylate (ABAK), Acrylat-Butadien Kautschuke (ABR), Polyvinylacatet (PVA), Copolymere von Ethen und Vinylacatet (EVM), TPE, Ethylenvinylacetat und PVC (EVAPVDC), MSA gepfropftes Polyethylen (MSA-PE), Methylmethacrylat-Acrylnitril-Butadien-Styrol (MABS), Polyvinyliden-chlorid (PVDC), Polyphenylenether (PPE), Poly(2,6-diphenyl-phenylenoxid) (PPO), Polyarylamide, Polyethylenvinylacate (EVA), Polyethylenvinylalkohol (EVOH), Polyoxymethylen (POM), Ethylen-Propylen-Terpolymer (EPDM), Butadienkautschuk (BK), Polyisopren, Acrylnitril-Butadien-Kautschuk (NBR), Styrol-Butadien-Kautschuk (SBR), Ethylen-Propylen-Kautschuk (EPM) und Gemische daraus, Polyvinylpyridin und dessen Copolymere, Polyvinylpyrrolidin, Polyvinylimidazole, Polyalkylaminoethylmethacrylate sowie deren Copolymere, Polyvinylcarbazol und dessen Copolymere, Polypyrrol, Polyacrylsäure (PAA), Polymethacrylsäure (PMAA), Polychloracrylsäure, Polycyanacrylsäure, basisches aliphatisches

Polyurethan (ATPU), Polyacrylnitrilbutadien, Acrylnitril-Butadien Acrylate (ABAK), Methylmethacrylat-Acrylnitril-Butadien-Styrol (MABS), unterschiedliche Polyamide (PA) z.B. (PA 6, PA46, PA66, PA6/66, PA66/610, PA610, PA12, PA12/MACMI, PA6/6T, PA6/12 etc.), Polyarylamide, Polyimide, Polyvinylamid, Polyacrylamide (PARA), Polyvinyl-benzonitril, Polyamidimid (PAI), Polyether-Blockamide (PEBA), Polyimidsulfone (PISU), Polyphthalamide (PPA), Polyvinylchloridacetat (PVCA), Polyetherimid (PEI), Polyesteramid (PEA), High Impact Polystyrol (HIPS), Polyolefine (z. B. Polyethylene, Polypropylene), Poly(4-Methyl-1-penten) (PMP), Ethylen-Propylen-Copolymer (EPM), Ethylen-Propylen-Dienkautschuk (EPDM), Polyetherketone, Acrylat-butadien Kautschuke (ABR), Polyarylether (PAE), Polyarylsulfone (PASU), Poly-a-Methylstyrole (PAMS), Polycyclohexylendimethylen Terephthalat (PCT), Polydimethylsiloxan (PDMS), Polyetheretherketone (PEEK), Polyetherketonetherketonketone (PEKEKK), Polyetherketonketone (PEKK), Polyethylennaphthalate (PEN), Polyethersulfone (PES), Polymethacrylmethylimid (PMMI), Perfluoroalkoxypolymer (PFA), Polyperfluoropolyether (PFPE), Polytetrafluorethylen (PTFE), Acrylnitril-Methylmetacrylat (AMMA), Polyvinylchloridethylen (VCE), Polyvinylchloridethylenmethylacrylat (VCEMA), Polyvinylchlorid-Methylacrylat (VCMA), Polyvinylchloridvinylidenchlorid (VCVDC), Acrylnitril-chloriniertes Polyethylen-Styrol-Terpolymer (ACS), Acrylnitril-Butadien-Acrylat (ABA), Celluloseacetat (CA), Cellulosenitrat (CN), Cycloolefincopolymere (COC), Ethylen-Ethylacrylat-Copolymer (E/EA), Polyhydroxyalkanoate (PHA), Polyhydroxybutyrate (PHB), Polyvinylidenfluorid, Methylcelulose (MC), und Gemischen daraus sowie Trägermaterialien aus Metallen, Halbmetallen, Hölzern, Papier, Kartonagen, Gläsern und Keramiken sowie Mischformen dieser Träger. In einer alternativen Ausführungsform kann das Trägermaterial ein Blech mit einer Dicke von 60 $\mu$m bis 6 mm sein. Das Blech kann Metall, wie beispielsweise Stahl oder Aluminium enthalten oder daraus bestehen.

Gegenstand der Erfindung ist somit ein Verbundelement, enthaltend Trägermaterial, bevorzugt ausgewählt aus vorstehend genannten Trägermaterialien, und erfindungsgemäßes antimikrobielles Polymer, sowie optional Haftvermittler. Alternativ ist es auch möglich, dass ein Erzeugnis oder Bauteil allein aus dem antimikrobiellen Polymer oder Polymerblend hergestellt wird. Gegenstand der Erfindung ist somit ein Erzeugnis oder Bauteil umfassend oder bestehend aus dem erfindungsgemäßen antimikrobiellen Polymer oder Polymerblend.

Erfindungsgemäße antimikrobielle Erzeugnisse oder Verbundelemente sind beispielsweise:

- Antimikrobielle Kunststoffverpackungen für Kosmetik- und Hygieneartikel, Medizinartikel, Medikamente, künstliche Nahrung sowie Verpackungen für Lebensmittel oder den Futtermittelsektor, wie Folien, Mehrschichtfolien, Schalen, MAP-Verpackungen, Becher, Flaschen, Siegelschalen, Tuben, Einmalschalen und Gläser, Flaschen, Tetrapack, Kühltaschen, Kaffeebeutel, Mehrschichtverpackungen aus unterschiedlichen Materialien, Kappen, Verschlüsse, Ausgusssysteme, Eisverpackungen etc.

- Antimikrobielle Bauteile wie Transportboxen für Lebensmittel, LKW-Aufbauten, Containerauskleidungen, Ausrüstung von Lebensmittellagern und Lagersystemen, Auskleidung von Transportsystemen Trinkwasserbehälter, Anwendungen im Schlachtbereich und Schlachthäusern, der Getränkeabfüllung, Produkte in der Viehhaltung, Produkte in der Abfüllung und Herstellung von z.B. Medikamente, Getränke, Kosmetik, Lebensmittel, etc.), Maschinenteile und Fördersysteme, Trinkwassersysteme, Komponenten in Wassersystemen, Wasserfilter, Ionentauscher, Kühlschränke und Gefrierschränke
  Ausrüstung von Kühlschmierstofftanks und -behältern

- Antimikrobielle Bauteile für die Klimatechnik, wie z.B. Klimaanlagen, Luftfilter, etc.

- Bauteile von Küchengeräten, Küchenoberflächen, Schneidbretter, und weitere Küchenartikel, etc.

- Halbzeuge, Bedachungen, Spielwaren, Kunststoffbauteile und Beschichtungen in Schwimmbädern, etc.

- Kunststoffbauteile in öffentlichen Verkehrsmitteln, in Saunen und Bädern, und Transportsystemen (Flugzeug, Bus, Krankentransport, alle Arten von Bahn, Taxi, Schiffen),

- Bauteile von Wassertransport- und Duschsystemen, Filtersysteme, Brauchwasser, Solaranlagen, Wärmetauscher, Membranen , etc.

- Komponenten von Sanitäreinrichtungen, Abwassertransportsysteme und Anlagen in öffentlichen Toiletten, Toilettensitze, Badezimmerartikel etc.

- Gebrauchsgegenstände, wie Zahnbürsten, Kämme, Schwämme, Putztücher für Küche- und Haushalt, Duschvorhänge, Toilettenartikel etc.

- Kunststoffbauteile für Möbel- Raumausstattungen und Geräte bzw. deren Oberflächen in Krankenhäusern, medizinischen und zahnärztlichen Praxen insbesondere in Räumen für medizinische Eingriffe und in Isolierstationen für kritische Infektionsfälle, in Pflegestationen, insbesondere im Bereich der Intensivpflege und der Kleinstkinder-Pflege, in der Veterinärmedizinischen Praxen und Einrichtungen, (z.B. Fußböden, Tür- und Haltegriffe, Lichtschalter, Auflagen Stühle, Liegen) etc.

- Gebrauchsgegenstände in der medizinischen Anwendung oder Pflegeversorgung, wie Verpackungen für sterile medizinische Instrumente, Katheder, Infusionsbeutelbeutel, Schläuche, Membranen, Implantate, Abdeckfolien, chirurgische Bestecke, Einmalhandschuhe, Windeln, Krankenhausschuhe und Bekleidung, Verbandmaterial, Pflaster, Blutbeutel, Drainagen, Führungsdrähte und Operationsbestecke, Folien für Touchpanels für unterschiedlichste Apparate in der Medizin oder Pflegendenversorgung, etc.

- Medizintechnikprodukte, wie z. B. Kontaktlinsen, Membranen, Implantate

- Funktionskleidung für den Hygienebereich (beispielsweise im Krankenhaus oder Schlachtbereich oder in der Lebensmittelverarbeitung) etc.

- Kunststoffbauteile für den Reha-Bereich, Liegen, Prothesen, Übungs- und Sportgeräte, Dekubitusunterlagen und Kissen, Matratzenbezüge, Rollstühle, Inkontinenzauflagen, etc.

- Systeme für die Notfallversorgung (Wasseraufbereitungsanlagen, Wasserlagerung, Trinkgefäße, Lagerungssysteme für Lebensmittel, mobile Krankenhäuser und Bauteile für diesen Bereich, Gebrauchsartikel, Auflagen für Liegen und Krankenhausbetten, bei der schnellen medizinischen und hygienischen Versorgung etc.) bei Naturkatastrophen, Kriegseinsätzen etc.

- Produkte für den Laborbereich im Medizinsektor sowie in der Life-Science und Industrie, wie Stopfen und Sterilstopfen, Kappen, Abstrichbestecke, Impfösen und Impfnadeln, Spatel, Vorratsgefäße, Röhrchen, Schutzanzüge, Einwegproberöhrchen, Schalen, Membranen, Pepetierspitzen, Versiegelungsfolien, Objektträger, Reagenzgläser bzw. Zentrifugenröhrchen, Tapes, Klebebänder, Einmalhandschuhe, Pipetten, Desinfektionszubehör, Desinfektionstücher, Kolben, Schraubverschlüsse, Dispenser, Hand-Dispenser, Dosiersysteme, Filter, Spritzenvorsatzfilter, Dialyseschlauch, Dialysesysteme. Medizinische Geräte bzw. Bauteile für medizinische Geräte, Filterpapiere, sterile Filtration, Beutelanschlüsse, Einbettkassetten, und Verschlussfolien, etc.

- Ausrüstungen für die Tier- und Haustierhaltung z. B. Fressnäpfe, Klos, Körbe, Bauteile für Stallausrüstungen wie z.B. Futtertransportsysteme, Futtertröge und Futterdosiersysteme, Wasserdosiersysteme, Boxenabkleidungen, Lüftungssysteme, Komponenten von Tierkäfigen und -behausungen, etc.

- Folien für Biogasanlagen, Bioreaktoren, Silagefolien, Agrarfolien, Zeltplanen, textiles Gewebe, Tapeten etc.

- Dichtungsmaterialien und Dichtungswerkstoffe z. B. Fugenmassen, Dichtmassen Flachdichtungen, Mehrschichtdichtungen, faserverstärkte Dichtungen, Formdichtungen, Profildichtungen, etc.

- ein- und mehrschichtige Kabelummantelungen

- Konstruktions- und Gehäusewerkstoffe für z. B.: Elektrogeräten, Bedienelemente (Touch Panel, Tastaturen, Computer Mouse), Mobiltelefone, Oberflächen von Türen, Teppichboden, Tapeten, Hafenanlagen, Bojen, Bohrplattformen, Ballastwassertanks, Keller, Wände, Fassaden, etc.

- Auskleidungen von Behältern und Tanks und Filtermatten (Lebensmittel, Öl und Heizöl, Medikamente, Wasser), etc.

- in Farben und Lacken bzw. zur Behälterauskleidung von Farben und Lacken, zur Verkleidung in Isolationssystemen und Fassaden etc.

Die Erfindung soll durch die nachfolgenden Beispiele veranschaulicht werden:

**Beispiel 1** (Homopolymer)

Die verwendete Polymerisationsapparatur bestand aus einem 500 ml 3-Halsrundkolben, einem Intensivkühler,

einer Magnetrührplatte, einer Inertgasspülung und einem über die Kolbeninnentemperatur geregelten Silikonölbad.

In einen 500 ml 3-Halskolben wurden 27,60 g tert.-Butylaminomethylstyrol (meta/para-Isomerengemisch, hergestellt aus Vinylbenzylchlorid der Fa. Dow) und 40 ml Ethanol gegeben. Anschließend wurden 0,185 g Azo-bis-(isobutyronitril) in 5 ml Methylethylketon gelöst und dem Kolben zugeführt. Daran gefolgt wurde unter starkem Rühren 30 min mit Stickstoff gespült und der Kolben anschließend in ein Ölbad mit einer Temperatur von 55°C getaucht. Unter mäßigem Rühren und leichtem kontinuierlichen Stickstoffstrom wurde die Temperatur nach 5 h auf 60°C erhöht und der Kolben für weitere 22,5 h im Ölbad belassen. Die erhaltene Reaktionslösung des Polymerisationsansatzes wird in ein 1 Liter Becherglas überführt und die Lösung mit einem mechanischen Rührwerk oder Magnetrührer in Bewegung gehalten. Unter intensivem Rühren werden tropfenweise 200 ml Wasser zudosiert, wobei das Polymer aus der Lösung ausfällt. Das Polymer wird abfiltriert und erneut unter Erwärmen und kontinuierlichem Rühren in Ethanol aufgenommen. Diese Lösung wird wiederum tropfenweise mit 150 ml Wasser versetzt, wobei das Polymer ausfällt und abgetrennt wird. Dieser Schritt wird 3 Mal wiederholt, um das Polymer vollständig von Restmonomeren zu reinigen.

Abschließend erfolgte die Trocknung des Polymers für 5 Stunden bei 100°C im Vakuumtrockenschrank ($p < 20$ mbar). Die Charakterisierung des Polymers erfolgte durch Bestimmung der Glastemperatur mittels DSC sowie durch die Bestimmung der antimikrobiellen Wirksamkeit.

Die Extraktionsschritte sowie die Trocknung des Polymers sind erforderlich, um im Polymer enthaltenes Restmonomer, niedermolekulare Bestandteile sowie Restlösungsmittel weitestgehend vollständig zu entfernen. Ohne diese Aufarbeitung können die mittels DSC bestimmten Glastemperaturen bis zu 25°C geringer ausfallen.

Die mittels DSC bestimmte Glastemperatur des Polymers betrug 65°C. Die log-Reduktion nach 24 Stunden betrug 6,7 [Beimpfungskeimgehalt 5,5 (log KbE/ml), Referenzkeimgehalt 7,9 (log KbE/ml), Restkeimgehalt 1,0 entspricht NWG (log KbE/ml)].

**Beispiel 2** (Homopolymer)

In einen 500 ml 3-Halskolben wurden 27,60 g tert.-Butylaminomethylstyrol (para-Isomer; hergestellt aus 4-Vinylbenzylchlorid der Fa. TCI) und 40 ml Ethanol gegeben. Anschließend wurden 0,185 g Azo-bis-(isobutyronitril) in 5 ml Methylethylketon gelöst und dem Kolben zugeführt; die Polymerisationsapparatur entsprach der in Beispiel 1 beschriebenen. Daran gefolgt wurde unter starkem Rühren 30 min mit Stickstoff gespült und der Kolben anschließend in ein Ölbad mit einer Temperatur von 55 °C getaucht. Unter mäßigem Rühren und leichtem kontinuierlichen Stickstoffstrom wurde die Temperatur nach 5 h auf 60°C erhöht und der Kolben für weitere 22,5 h im Ölbad belassen. Anschließend wurde der Polymerisationsansatz wie in Beispiel 1 beschrieben weiter aufgearbeitet und charakterisiert.

Die mittels DSC bestimmte Glastemperatur des Polymers betrug 90°C. Die log-Reduktion nach 24 Stunden betrug 6,9 [Beimpfungskeimgehalt 5,5 (log KbE/ml), Referenzkeimgehalt 7,9 (log KbE/ml), Restkeimgehalt 1,0 entspricht NWG (log KbE/ml)].

**Beispiel 3** (Homopolymer)

Die verwendete Polymerisationsapparatur identisch zu der aus den oben genannten Beispielen.

In einen 500 ml 3-Halskolben wurden 28,90 g (2-Methylbutyl-2yl)-aminomethylstyrol (para-Isomer; hergestellt aus 4-Vinylbenzylchlorid der Fa. TCI) und 35 ml Ethanol gegeben. Anschließend wurden 0,180 g Azo-bis-(isobutyronitril) in 5 ml Methylethylketon gelöst und dem Kolben zugeführt. Daran gefolgt wurde unter starkem Rühren 40 min mit Stickstoff gespült und der Kolben anschließend in ein Ölbad mit einer Temperatur von 55 °C getaucht. Unter mäßigem Rühren und leichtem kontinuierlichen Stickstoffstrom wurde die Temperatur nach 5 h auf 60°C erhöht und der Kolben für weitere 22,5 h im Ölbad belassen. Anschließend wurde der Polymerisationsansatz wie in Beispiel 1 beschrieben weiter aufgearbeitet und charakterisiert. Abschließend erfolgte die Trocknung des Polymers für 4 Stunden bei 100°C im Vakuumtrockenschrank ($p < 20$ mbar). Die Charakterisierung des Polymers erfolgte durch Bestimmung der Glastemperatur mittels DSC sowie durch die Bestimmung der antimikrobiellen Wirksamkeit.

Die mittels DSC bestimmte Glastemperatur des Polymers betrug 75°C. Die log-Reduktion nach 24 Stunden betrug 7,0 [Beimpfungskeimgehalt 6,8 (log KbE/ml), Referenzkeimgehalt 7,9 (log KbE/ml), Restkeimgehalt 1,0 entspricht NWG (log KbE/ml)].

**Beispiel 4** (Copoylmer)

In einen 500 ml 3-Halskolben wurden 13,80 g tert.-Butylaminomethylstyrol (meta/para-Isomerengemisch, hergestellt aus Vinylbenzylchlorid der Fa. Dow), 3,87 g Acrylnitril und 40 ml Ethanol gegeben. Anschließend wurden 0,185 g Azo-bis-(isobutyronitril) in 5 ml Methylethylketon gelöst und dem Kolben zugeführt; die Polymerisationsapparatur entsprach der in Beispiel beschriebenen. Daran gefolgt wurde unter starkem Rühren 30 min mit Stickstoff gespült und der Kolben anschließend in ein Ölbad mit einer Temperatur von 55°C getaucht. Unter mäßigem Rühren und leichtem

kontinuierlichen Stickstoffstrom wurde die Temperatur nach 5 h auf 60°C erhöht und der Kolben für weitere 22,5 h im Ölbad belassen. Anschließend wurde der Polymerisationsansatz wie in Beispiel 1 beschrieben weiter aufgearbeitet und charakterisiert.

Die mittels DSC bestimmte Glastemperatur des Polymers betrug 80°C. Die log-Reduktion nach 24 Stunden betrug 6,9 [Beimpfungskeimgehalt 5,5 (log KbE/ml), Referenzkeimgehalt 7,9 (log KbE/ml), Restkeimgehalt 1,0 entspricht NWG (log KbE/ml)].

**Beispiel 5** (Copoylmer)

In einen 500 ml 3-Halskolben wurden 20,70 g tert.-Butylaminomethylstyrol (para-Isomer; hergestellt aus 4-Vinylbenzylchlorid der Fa. TCI), 7,34 g Methacrylnitril und 60 ml Ethanol gegeben. Anschließend wurden 0,278 g Azo-bis-(isobutyronitril) in 7 ml Methylethylketon gelöst und dem Kolben zugeführt; die Polymerisationsapparatur entsprach der in Beispiel beschriebenen. Daran gefolgt wurde unter starkem Rühren 30 min mit Stickstoff gespült und der Kolben anschließend in ein Ölbad mit einer Temperatur von 55°C getaucht. Unter mäßigem Rühren und leichtem kontinuierlichen Stickstoffstrom wurde die Temperatur nach 5 h auf 60°C erhöht und der Kolben für weitere 22,5 h im Ölbad belassen. Anschließend wurde der Polymerisationsansatz wie in Beispiel 1 beschrieben weiter aufgearbeitet und charakterisiert.

Die mittels DSC bestimmte Glastemperatur des Polymers betrug 85°C. Die log-Reduktion nach 24 Stunden betrug 6,7 [Beimpfungskeimgehalt 5,5 (log KbE/ml), Referenzkeimgehalt 7,9 (log KbE/ml), Restkeimgehalt 1,0 entspricht NWG (log KbE/ml)].

**Beispiel 6** (Copoylmer)

In einen 500 ml 3-Halskolben wurden 21,70 g (2-Methylbutyl-2yl)-aminomethylstyrol (para-Isomer; hergestellt aus 4-Vinylbenzylchlorid der Fa. TCI), 7,36 g Methacrylnitril und 60 ml Ethanol gegeben. Anschließend wurden 0,282 g Azo-bis-(isobutyronitril) in 6 ml Methylethylketon gelöst und dem Kolben zugeführt; die Polymerisationsapparatur entsprach der in Beispiel beschriebenen. Daran gefolgt wurde unter starkem Rühren 35 min mit Stickstoff gespült und der Kolben anschließend in ein Ölbad mit einer Temperatur von 55°C getaucht. Unter mäßigem Rühren und leichtem kontinuierlichen Stickstoffstrom wurde die Temperatur nach 5 h auf 60°C erhöht und der Kolben für weitere 22,5 h im Ölbad belassen. Anschließend wurde der Polymerisationsansatz wie in Beispiel 1 beschrieben weiter aufgearbeitet und charakterisiert.

Die mittels DSC bestimmte Glastemperatur des Polymers betrug 80°C. Die log-Reduktion nach 24 Stunden betrug 6,9 [Beimpfungskeimgehalt 5,7 (log KbE/ml), Referenzkeimgehalt 7,8 (log KbE/ml), Restkeimgehalt 1,0 entspricht NWG (log KbE/ml)].

**Beispiel 7** (Copoylmer)

In einen 500 ml 3-Halskolben wurden 20,11 g (2-Methylbutyl-2yl)-aminomethylstyrol (para-Isomer; hergestellt aus 4-Vinylbenzylchlorid der Fa. TCI), 8,7 g Methacrylnitril und 50 ml Ethanol gegeben. Anschließend wurden 0,277 g Azo-bis-(isobutyronitril) in 6 ml Methylethylketon gelöst und dem Kolben zugeführt; die Polymerisationsapparatur entsprach der in Beispiel beschriebenen. Daran gefolgt wurde unter starkem Rühren 45 min mit Stickstoff gespült und der Kolben anschließend in ein Ölbad mit einer Temperatur von 55°C getaucht. Unter mäßigem Rühren und leichtem kontinuierlichen Stickstoffstrom wurde die Temperatur nach 5 h auf 60°C erhöht und der Kolben für weitere 24 h im Ölbad belassen. Anschließend wurde der Polymerisationsansatz wie in Beispiel 1 beschrieben weiter aufgearbeitet und charakterisiert.

Die mittels DSC bestimmte Glastemperatur des Polymers betrug 84°C. Die log-Reduktion nach 24 Stunden betrug 7,1 [Beimpfungskeimgehalt 5,9 (log KbE/ml), Referenzkeimgehalt 7,9 (log KbE/ml), Restkeimgehalt 1,0 entspricht NWG (log KbE/ml)].

**Beispiel 8** (Terpolymer)

In einen 500 ml 3-Halskolben wurden 17,14 g tert.-Butylaminomethylstyrol (meta/para-Isomerengemisch; hergestellt aus Vinylbenzylchlorid der Fa. Dow), 6,07 g Methacrylnitril, 2,33 g 4-Vinylbenzoesäure und 55 ml Ethanol gegeben. Anschließend wurden 0,25 g Azo-bis-(isobutyronitril) in 7 ml Methylethylketon gelöst und dem Kolben zugeführt; die Polymerisationsapparatur entsprach der in Beispiel beschriebenen. Daran gefolgt wurde unter starkem Rühren 30 min mit Stickstoff gespült und der Kolben anschließend in ein Ölbad mit einer Temperatur von 55°C getaucht. Unter mäßigem Rühren und leichtem kontinuierlichen Stickstoffstrom wurde die Temperatur nach 5 h auf 60°C erhöht und der Kolben für weitere 22,5 h im Ölbad belassen. Anschließend wurde der Polymerisationsansatz wie in Beispiel 1 beschrieben weiter aufgearbeitet. Abschließend erfolgte die Trocknung des Polymers für 4 Stunden bei 120°C im Vakuumtrockenschrank (p < 20 mbar). Die Charakterisierung erfolgte analog zu Beispiel 1.

Die mittels DSC bestimmte Glastemperatur des Polymers betrug 115°C. Die log-Reduktion nach 24 Stunden betrug 6,5 [Beimpfungskeimgehalt 5,6 (log KbE/ml), Referenzkeimgehalt 7,5 (log KbE/ml), Restkeimgehalt 1,0 entspricht NWG (log KbE/ml)].

**Beispiel 9** (Terpolymer)

In einen 500 ml 3-Halskolben wurden 17,14 g tert.-Butylaminomethylstyrol (para-Isomer; hergestellt aus 4-Vinylbenzylchlorid der Fa. TCI), 9,52 g 4-Vinylpyridin, 1,36 g Methacrylsäure und 55 ml Ethanol gegeben. Anschließend wurden 0,25 g Azo-bis-(isobutyronitril) in 7 ml Methylethylketon gelöst und dem Kolben zugeführt; die Polymerisationsapparatur entsprach der in Beispiel beschriebenen. Daran gefolgt wurde unter starkem Rühren 30 min mit Stickstoff gespült und der Kolben anschließend in ein Ölbad mit einer Temperatur von 55°C getaucht. Unter mäßigem Rühren und leichtem kontinuierlichen Stickstoffstrom wurde die Temperatur nach 5 h auf 60°C erhöht und der Kolben für weitere 22,5 h im Ölbad belassen. Anschließend wurde der Polymerisationsansatz wie in Beispiel 1 beschrieben weiter aufgearbeitet. Abschließend erfolgte die Trocknung des Polymers für 3 Stunden bei 130°C im Vakuumtrockenschrank (p < 20 mbar). Die Charakterisierung erfolgte analog zu Beispiel 1.

Die mittels DSC bestimmte Glastemperatur des Polymers betrug 120°C. Die log-Reduktion nach 24 Stunden betrug 6,5 [Beimpfungskeimgehalt 5,6 (log KbE/ml), Referenzkeimgehalt 7,5 (log KbE/ml), Restkeimgehalt 1,0 entspricht NWG (log KbE/ml)].

**Beispiel 10** (Terpolymer)

In einen 500 ml 3-Halskolben wurden 19,22 g (2-Methylbutyl-2yl)-aminomethylstyrol (para-Isomer; hergestellt aus 4-Vinylbenzylchlorid der Fa. TCI), 10,02 g 4-Vinylpyridin, 1,41 g Methacrylsäure und 50 ml Ethanol gegeben. Anschließend wurden 0,27 g Azo-bis-(isobutyronitril) in 6 ml Methylethylketon gelöst und dem Kolben zugeführt; die Polymerisationsapparatur entsprach der in Beispiel beschriebenen. Daran gefolgt wurde unter starkem Rühren 45 min mit Stickstoff gespült und der Kolben anschließend in ein Ölbad mit einer Temperatur von 55°C getaucht. Unter mäßigem Rühren und leichtem kontinuierlichen Stickstoffstrom wurde die Temperatur nach 5 h auf 60°C erhöht und der Kolben für weitere 22,5 h im Ölbad belassen. Anschließend wurde der Polymerisationsansatz wie in Beispiel 1 beschrieben weiter aufgearbeitet. Abschließend erfolgte die Trocknung des Polymers für 4 Stunden bei 110°C im Vakuumtrockenschrank (p < 20 mbar). Die Charakterisierung erfolgte analog zu Beispiel 1.

Die mittels DSC bestimmte Glastemperatur des Polymers betrug 104°C. Die log-Reduktion nach 24 Stunden betrug 7,1 [Beimpfungskeimgehalt 5,8 (log KbE/ml), Referenzkeimgehalt 7,9 (log KbE/ml), Restkeimgehalt 1,0 entspricht NWG (log KbE/ml)].

**Beispiel 11: Herstellung von antimikrobiellen Polymerblends**

Zur Herstellung wurden folgende antimikrobielle Polymere eingesetzt:

(1) Es wurde das erfindungsgemäßes Homopolymer aus tert.-Butylaminomethylstyrol eingesetzt: "TBAMS"

(2) Es wurden Copolymere mit einem molaren Mischungsverhältnis der beiden Monomere "TBAMS" und "AN" (Acrylnitril) von 1:0,1 und 1:0,2 sowie 1:0,3 eingesetzt: "TBAMS-AN-01", "TBAMS-AN-02" bzw. "TBAMS-AN-03"

(3) Es wurden ein Terpolymer auf Basis tert.-Butylaminomethylstyrol "TBAMS", Vinylpyridin "VPy" sowie Methacrylsäure "MAS" im molaren Verhältnis 1:0,3:0,05 verwendet: "TBAMS-VPy-03-MAS-005". Tert.-Butylaminomethylstyrol liegt jeweils meta/para Isomerengemisch vor.

(4) Als weitere thermoplastische Polymere (= BLEPO) wurden LDPE, PP, PS, ABS, aliphatischer Polyester TPU, aromatischer Polyester TPU und/oder EVA eingesetzt.

Versuche: Compoundieren in der Schmelze (CiS):

Die Polymerblends der Versuche V1 bis V19 wurden aus den erfindungsmäßen antimikrobiellen Polymeren/Copolymeren und weiteren Polymeren in einem Collin Doppleschneckenextruder (Model Teachline) mit einem Ausstoß von 1,5kg/Stunde hergestellt. Der Schmelzestrang wurde in einem Wasserbad abgekühlt und mit einem Granulator von der Firma Collin zerschnitten.

Versuche: Mischen in Lösung (MiS):

Für die Herstellung der Polymermerblends der Versuche V20 bis V26 wurde in einem Rührkessel eine dekalinische Lösung aus dem antimikrobiellen Polymer/Coplymer und dem Thermoplasten hergestellt in einem Lösungsmittel. Anschließend wurde das Lösungsmittel im Vakuum bei leicht erhöhter Temperatur unter Ölpumpenvakuum entfernt.

Die erhalten Polymerblendmassen wurden soweit mechanisch zerkleinert, dass Sie mittels einer Spritzgussmaschine zu Formteilen verarbeitet werden konnten. Aus den erhaltenen Polymerblend wurden mittels einer Laborspritzgussmaschine (Babyplast 6/10P von der Firma Isoplast) kreisrunde Formkörper mit 1,5 mm Stärke und 40mm Durchmesser hergestellt (Polymere Untersuchungskörper PUK. Weiterhin wurden aus einzelnen Blends mittels eines Amoco Extruder "Plasticizer" (Einstellungen: Motor 5 A, 50rpm, Heizzone 1: 160°C, Heizzone 2-3: 210°C, Heizzone 4: 215°C, Abzug 25ft/min, 200Düsen, Durchmesser 700mm) Fasern hergestellt. Darüber hinaus wurden aus einzelnen Blends Amoco Extruder "Plasticizer") (Motor 5 A, 50rpm, Heizzone 1 120°C, Heizzone 2-4: 190°C, Abzug 10ft/min, über Walzen an Luft gekühlt) CAST Folien hergestellt.

Die Formkörper, Folien sowie Fasern wurden gemäß dem in der Anmeldung beschriebenen Testverfahren auf ihre antimikrobielle Wirksamkeit untersucht. Bei einer Reduktion um 2 log-Stufen gegenüber dem Anfangskeimgehalt gilt das Material als antimikrobiell wirksam. In der folgenden Tabelle wird die antimikrobielle Wirksamkeit entweder mit "bakterielle Aktivität unter der Nachweisgrenze" (UNWG) (keine koloniebildenden Einheiten mehr nachweisbar oder durch die Zahl der Log Stufenreduktion gekennzeichnet).

| | Herstellung Polymer-blend | BLEPO | Erfindungsgemäßes antimikrobielles Polymer | Anteil antimikrobieller Polymer in %, bezogen auf Masse Polymerblend | Form | Anti-mikrobielle Wirksamkeit |
|---|---|---|---|---|---|---|
| V1 | piS | LDPE | TBAMS | 5 | PUK | UNWG |
| V2 | CiS | LDPE | TBAMS-AN-01 | 15 | PUK | UNWG |
| V3 | CiS | LDPE | TBAMS-VPy-03 | 15 | PUK | 3 |
| V4 | CiS | LDPE | TBAMS | 15 | PUK | NWG |
| V5 | CiS | LDPE | TBAMS | 15 | Faser | UNWG |
| V6 | CiS | LDPE | TBAMS | 10 | Folie | UNWG |
| V7 | CiS | LDPE | TBAMS-AN-01 | 20 | Faser | UNWG |
| V8 | CiS | PP | TBAMS | 30 | Faser | 4 |
| V9 | CiS | PS | TBAMS | 20 | PUK | 4 |
| V10 | CiS | PS | TBAMS-AN-01 | 20 | PUK | UNWG |
| V11 | CiS | ABS | TBAMS-VPy-03-MAS-005 | 25 | PUK | UNWG |
| V12 | CiS | ABS | TBAMS | 15 | PUK | UNWG |
| V13 | CiS | Aliph. TPU | TBAMS | 10 | PUK | UNWG |
| V14 | CiS | Aliph. TPU | TBAMS-AN-03 | 25 | PUK | UNWG |
| V15 | CiS | Arom. Polyester TPU | TBAMS | 10 | PUK | UNWG |
| V16 | CiS | Arom. Polyester TPU | TBAMS-AN-02 | 15 | PUK | UNWG |
| V17 | CiS | LLDPE | TBAMS | 10 | PUK | UNWG |
| V17a | Cis | Arom TPU Polyether | TBAMS | 12 | PUK | UNWG |
| V18 | CiS | EVA | TBAMS | 25 | PUK | UNWG |
| V19 | CiS | EVA | TBAMS-VPy-03 | 25 | PUK | UNWG |

(fortgesetzt)

| | Herstellung Polymer-blend | BLEPO | Erfindungsgemäßes antimikrobielles Polymer | Anteil antimikrobieller Polymer in %, bezogen auf Masse Polymerblend | Form | Anti-mikrobielle Wirksamkeit |
|---|---|---|---|---|---|---|
| V20 | MiS | LDPE | TBAMS | 10 | PUK | 4 |
| V21 | MiS | LDPE | TBAMS | 15 | PUK | UNWG |
| V22 | MiS | LDPE | TBAMS-AN-01 | 20 | PUK | 4 |
| V23 | MiS | Aliph.TPU (A1185) | TBAMs | 15 | PUK | 3 |
| V24 | MiS | Aliph.TPU (A1185) | TBAMS | 25 | PUK | UNWG |
| V25 | MiS | Aliph.TPU (A1185) | TBAMS-AN-01 | 15 | PUK | 3 |
| V26 | MiS | Aliph.TPU (A1185) | TBAMS-AN-01 | 25 | PUK | UNWG |

Wie aus den Versuchen V1 bis V26 zu sehen ist, zeigen alle gezeigten Polymerblends eine ausgezeichnete antimikrobielle Wirkung.

**Beispiel 16: Bedrucken auf Folien**

Erfindungsgemäße antimikrobielle Polymere wurden in Ethylacetat gelöst (30%ige Lösung) und in einem UV härtenden Bedruckungslack eingerührt. Die UV Härtung wurde sowohl unter Umgebungsluft als auch unter Ausschluss von Sauerstoff (unter Verwendung von Stickstoff) auf eine Foliendruckmaschine nach dem Flexodruckverfahren vorgenommen.

Weiterhin wurden erfindungsgemäße antimikrobiellen Polymere (30%ige Lösung in Ethylacetat) in UV Druckfarben eingearbeitet, die mit Elektronenstrahlen Offsetdruckverfahren aufgetragen und ausgehärtet wurden.

Die bedruckten Folienseiten wurden gemäß dem in der Anmeldung beschriebenen Testverfahren auf ihre antimikrobielle Wirksamkeit untersucht. Bei einer Reduktion um 2 log- Stufen gegenüber dem Anfangskeimgehalt gilt das Material als antimikrobiell wirksam. In der folgenden Tabelle wird die antimikrobielle Wirksamkeit entweder mit "bakterielle Aktivität unter der Nachweisgrenze" (UNWG) (keine koloniebildenden Einheiten mehr nachweisbar oder durch die Zahl der Log Stufenreduktion gekennzeichnet).

| | Druckverfahren | Bedruckungsmedium: Mehrschichtverbund; oberste Schicht | Zugesetztes erfindungsgem. Polymer; 30%ige Lösung in Ethylacetat; Mischung mit Lack im Verhältnis | Form | antimikrobielle Wirksamkeit |
|---|---|---|---|---|---|
| V1D | Flexodruck | Corona aktiviertes LDPE | TBAMS (1:0,2) | Folie | UNWG |
| V2D | Flexodruck | Corona aktiviertes LDPE | TBAMS-AN-01 (1:0,3) | Folie | UNWG |
| V3D | Flexodruck | Corona aktiviertes LDPE | TBAMS-AN-03 (1:0,3) | Folie | UNWG |
| V4D | Flexodruck | Corona aktiviertes LDPE | TBAMS-AN-03 (1:0,5) | Folie | UNWG |
| V5D | Flexodruck | MSA gepfropftes LDPE | TBAMS | Folie | UNWG |
| V6D | Flexodruck | MSA gepfropftes LDPE | TBAMS-AN-02 (1:0,3) | Folie | UNWG |
| V7D | Flexodruck | Corona aktiviertes PP | TBAMS (1:0,7) | Folie | UNWG |
| V8D | Flexodruck | Corona aktiviertes PP | TBAMS-AN-02 (1:0,7) | Folie | UNWG |
| V9D | Elektronenstrahlen Offsetdruck | Corona aktiviertes LDPE | TBAMS | Folie | UNWG |

(fortgesetzt)

| | Druckverfahren | Bedruckungsmedium: Mehrschichtverbund; oberste Schicht | Zugesetztes erfindungsgem. Polymer; 30%ige Lösung in Ethylacetat; Mischung mit Lack im Verhältnis | Form | antimikrobielle Wirksamkeit |
|---|---|---|---|---|---|
| V10D | Elektronenstrahlen Offsetdruck | Corona aktiviertes LDPE | TBAMS-AN-03 (1:0,3) | Folie | UNWG |
| V11D | Elektronenstrahlen Offsetdruck | Corona aktiviertes PP | TBAMS | Folie | UNWG |
| V12D | Elektronenstrahlen Offsetdruck | Corona aktiviertes PP | TBAMS-AN-02 (1:0,3) | Folie | UNWG |

Wie aus den Versuchen V1D bis V12D zu sehen ist, zeigen alle Folien eine ausgezeichnete antimikrobielle Wirkung.

**Patentansprüche**

1. Antimikrobielles Polymer, erhältlich durch Polymerisation eines Monomers, wobei das Monomer durch die Strukturformeln (IIa bis IIc) oder Mischungen daraus dargestellt wird,

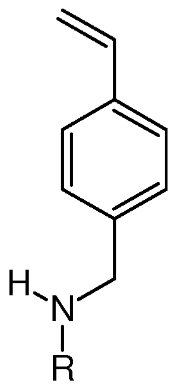
IIa

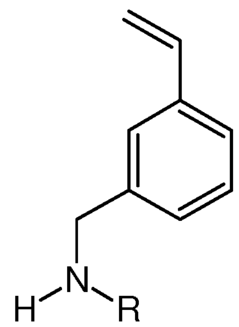
IIb

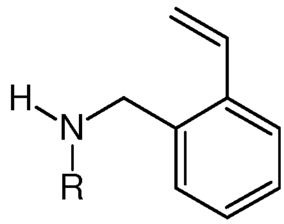
IIc

und wobei der Rest R Ethyl, Propyl, Butyl, Pentyl, Hexyl und Heptyl, Cyclopropyl, Cyclobutyl, Cyclopentyl oder Cyclohexyl Isopropyl, sec-Butyl, iso-Butyl, tert-Butyl, 2-Pentyl (sec-Pentyl), 3-Pentyl, 2-Methyl-butyl, 3-Methylbutyl (Isopentyl), 3-Methyl-but-2-yl, 2-Methylbut-2-yl, 2,2-Dimethylpropyl (Neopentyl), 2-Methylpentyl, 3-Methylpentyl, 2,3-Dimethylbutyl, 2,2-Dimethylbutyl (Neohexyl) oder 3-Ethylpenty ist,
wobei die Glastemperatur des antimikrobiellen Polymers 60°C bis 200°C beträgt.

2. Antimikrobielles Polymer nach Anspruch 1, wobei das Polymer ein Homopolymer ist.

3. Antimikrobielles Polymer nach Anspruch 1, wobei das Polymer ein Copolymer ist, erhältlich durch die Umsetzung mindestens eines Monomers gemäß Formel (IIa-IIc), und mindestens einem weiteren Monomer, bevorzugt umfassend

   a) alkalische Monomere, ausgewählt aus Vinylimidazolen wie 1-Vinylimidazol, 2-Methyl-1-vinylimidazol, N-Vinyloxazolidon, N-tert.-Butylaminoethylmethacrylat, N,N-Dimethylaminoethylmethacrylat, N,N-Diethylaminoethylmethacrylat, N,N-Diisopropyl-aminoethylmethacrylat, 2-Vinylpyridin, 3-Vinylpyridin, 4-Vinylpyridin, N-Vinyltriazol, Aminalkylvinylether, sowie Gemischen daraus und/oder
   b) saure Monomere, ausgewählt aus Acrylsäure, Chloracrylsäure, Cyanacrylsäure, Methacrylsäure, Itaconsäure und deren Anhydrid, Mesaconsäure, Citraconsäure, Crotonsäure, Fumarsäure, Maleinsäure, Vinylbenzoesäure

und deren Isomeren, Zimtsäure, Stilbendicarbonsäure, Vinylphosphonsäure, Vinylbenzylphosphonsäure, Vinylbenzylsulfonsäure, Vinylsulfonsäure, 2-Styrolsulfonsäure, 3-Styrolsulfonsäure, 4-Styrolsulfonsäure, 2-Styrolphosphonsäure, 3-Styrolphosphonsäure, 4-Styrolphosphonsäure sowie Gemischen daraus und/oder

c) assoziierende Monomere ausgewählt aus Acrylnitril, Methacrylnitril, N,N-Dimethylacrylamid, N-Ethylacrylamid, N-tert.-Butylacrylamid, Vinyl-Methylacetamid, N-tert.-Octylacrylamid, Methylcyanacrylat, Dicyanoethylen, 1-Nitrovinylen, 1-Nitro-1-Methylvinyliden, Vinylpyrrolidon, Vinylcaprolactam, und Vinylbenzonitril und dessen Isomeren sowie Gemischen daraus und /oder

d) Standardmonomere ausgewählt aus Ethylen, Butadien, Isopren, Chloropren, Methacrylester, Acrylester, Vinylether (z.B. Ethylvinylether, Isobutylvinylether, tert.-Butylvinylether, Methylvinylether, Butylvinylether, Cyclohexylvinylether), Vinyl-carbazol, Vinylthioether, Vinylester, Vinylcyclohexan Vinylmethylchlorid, Vinyliden-fluorid, Vinylacetat, Vinylsilan, Vinylchlorid, Vinylfluorid, Vinylidenchlorid, Vinylbenzylchlorid, Vinylbenzylbromid, Diester der Fumarsäure, Diamide der Fumarsäure, Imide der Maleinsäure sowie Gemischen daraus,

wobei die Glastemperatur $T_G$ des Copolymers 65°C bis 200°C beträgt.

**4.** Antimikrobielles Polymer nach einem der Ansprüche 1 bis 3, wobei das zahlenmittlere Molekulargewicht $M_n$ 4'500 bis 2'000'000 Dalton beträgt, bestimmt mittels Gelpermeationschromatographie.

**5.** Antimikrobielles Polymer nach einem der Ansprüche 1 bis 4, wobei vor, während oder nach der Polymerisation eine Säuregruppen enthaltende Verbindung oder eine Säuregruppe bildende Verbindung oder Gemische daraus, zugegeben wird.

**6.** Antimikrobielles Polymer nach einem der Ansprüche 1 bis 5, wobei die maximale Wasseraufnahme des Polymers 35 Gew.-% beträgt, bezogen auf das Gewicht des Polymers.

**7.** Verfahren zur Herstellung eines antimikrobiellen Polymers nach einem der Ansprüche 1 bis 6, umfassend die Schritte

(i) Bereitstellen eines Monomers Formel (IIa-IIc),
(ii) gegebenenfalls Bereitstellen mindestens eines weiteren Monomers, und
(iii) Polymerisation der Monomere mit oder ohne Zugabe eines Polymerisationsinitiators.

**8.** Antimikrobieller Polymerblend, enthaltend ein antimikrobielles Polymer erhältlich durch Polymerisation eines Monomers mit Struktur gemäß Formel (I)

A-B-C'-D (I),

wobei das Polymer ein Homopolymer oder ein Copolymer ist, erhältlich durch die Umsetzung mindestens eines Monomers gemäß Formel (I), wobei

A eine radikalisch polymerisierbare Gruppe mit der Formel $-CR^{V1}=CR^{V2}R^{V3}$ ist, wobei $R^{V1,}$ $R^{V2}$ und $R^{V3}$ unabhängig voneinander Wasserstoff, Methyl, Chlorid-, Cyano- oder Estergruppen sind,
B ein aromatischer Abstandshalter ist,
C' ein aliphatischer Abstandshalter mit der Formel $-CR^{S1}R^{S2}$-ist, wobei $R^{S1}$ und $R^{S2}$unabhängig voneinander Wasserstoff oder Methyl sind, und
D ein Amin mit der Formel $-NR^{A1}R^{A2}$ ist, wobei
$R^{A1}$ eine nicht aromatische Gruppe mit 2 bis 7 Kohlenstoffatomen ist, und
$R^{A2}$ Wasserstoff, Methyl oder eine nicht aromatische Gruppe mit 2 bis 7 Kohlenstoffatomen, ist, oder wobei $R^{A1}$ und $R^{A2}$ miteinander verbunden sind und einen Ring zusammen mit dem Stickstoff bilden, wobei der Ring 3 bis 6 Kohlenstoffatome enthält, wobei der gebildete Ring bis zu 4 Methylgruppen tragen kann,,
und gegebenenfalls mindestens einem weiteren Monomer, bevorzugt umfassend

a) alkalische Monomere, ausgewählt aus Vinylimidazolen wie 1-Vinylimidazol, 2-Methyl-1-vinylimidazol, N-Vinyloxazolidon, N-tert.-Butylaminoethylmethacrylat, N,N-Dimethyl-aminoethylmethacrylat, N,N-Diethylaminoethylmethacrylat, N,N-Diisopropylamino-ethylmethacrylat, 2-Vinylpyridin, 3-Vinylpyridin, 4-Vinylpyridin, N-Vinyltriazol, Aminalkylvinylether, sowie Gemischen daraus und/oder

b) saure Monomere, ausgewählt aus Acrylsäure, Chloracrylsäure, Cyanacrylsäure, Methacrylsäure, Itaconsäure und deren Anhydrid, Mesaconsäure, Citraconsäure, Crotonsäure, Fumarsäure, Maleinsäure, Vinylbenzoesäure und deren Isomeren, Zimtsäure, Stilbendicarbonsäure, Vinylphosphonsäure, Vinylbenzylphosphonsäure, Vinylbenzylsulfonsäure, Vinylsulfonsäure, 2-Styrolsulfonsäure, 3-Styrolsulfonsäure, 4-Styrolsulfonsäure, 2-Styrolphosphonsäure, 3-Styrolphosphonsäure, 4-Styrolphosphonsäure sowie Gemischen daraus und/oder

c) assoziierende Monomere, ausgewählt aus Acrylnitril, Methacrylnitril, N,N-Dimethylacrylamid, N-Ethylacrylamid, N-tert.-Butylacrylamid, Vinyl-Methylacetamid, N-tert.-Octylacrylamid, Methylcyanacrylat, Dicyanoethylen, 1-Nitrovinylen, 1-Nitro-1-Methylvinyliden, Vinylpyrrolidon, Vinylcaprolactam, und Vinylbenzonitril und dessen Isomeren sowie Gemischen daraus und /oder

d) Standardmonomere, ausgewählt aus Ethylen, Butadien, Isopren, Chloropren, Methacrylester, Acrylester, Vinylether (z.B. Ethylvinylether, Isobutylvinylether, tert.-Butylvinylether, Methylvinylether, Butylvinylether, Cyclohexylvinylether), Vinylcarbazol, Vinylthioether, Vinylester, Vinylcyclohexan Vinylmethylchlorid, Vinylidenfluorid, Vinylacetat, Vinylsilan, Vinylchlorid, Vinylfluorid, Vinylidenchlorid, Vinylbenzylchlorid, Vinylbenzylbromid, Diester der Fumarsäure, Diamide der Fumarsäure, Imide der Maleinsäure sowie Gemischen daraus,

wobei bevorzugt die Glastemperatur $T_G$ des Copolymers 65 °C bis 230°C beträgt, und mindestens ein weiteres Polymer (BLEPO), und
wobei der antimikrobielle Polymerblend thermoplastisch verarbeitbar ist.

**9.** Antimikrobieller Polymerblend nach Anspruch 8, wobei vor, während oder nach der Polymerisation eine Säuregruppen enthaltende Verbindung oder eine Säuregruppe bildende Verbindung oder Gemische daraus, zugegeben wird.

**10.** Antimikrobieller Polymerblend nach einem der Ansprüche 8 bis 9, wobei die maximale Wasseraufnahme des Polymers 35 Gew.-% beträgt, bezogen auf das Gewicht des Polymers.

**11.** Antimikrobieller Polymerblend nach einem der Ansprüche 8 bis 10, wobei das weitere Polymer (BLEPO) ein thermoplastisch verarbeitbares Polymer ist.

**12.** Antimikrobieller Polymerblend nach einem der Ansprüche 8 bis 11, wobei das weitere Polymer (BLEPO) ausgewählt ist aus Polyvinylpyridin und dessen Copolymere, Polyvinylpyrrolidin, Polyvinylimidazole sowie deren Copolymere, Polyvinylcarbazol und dessen Copolymere, aromatisches und aliphatisches thermoplastisches Polyurethan (TPU), Polypyrrol, Polyacrylsäure (PAA), Polymethacrylsäure (PMAA), Polymethylmethacrylat (PMMA), MSA gepfropftes Polyethylen (MSA-PE), Polychloracrylsäure, und Polycyanacrylsäure, Polyester, Polybutylentherephthalat (PBT), Polyethylentherephthalat (PET), Polyamide (PA), Polyarylamide, Polyimide, Polyacrylamide (PARA), Polyamidimid(PAI), Polyether-Blockamide (PEBA), Polyphthalamide (PPA), Polyesteramid (PEA), Polyoxymethylen (POM), Polyetherketone, Polyphenylenether (PPE, PPO), Polyamide, Polycarbonate (PC), Polyethersulfone,), Poly(2,6-diphenyl-phenylenoxid), Polyarylether (PAE), Polyarylsulfone (PASU), Polycyclohexylendimethylenterephthalat (PCT), Polyethersulfone (PES), High Impact Polystyrol (HIPS), Polyolefine und deren Copolymere, Ethylen-Propylen-Dienkautschuk (EPDM), Polyoxymethylen (POM), Polyvinylchloride (PVC), Polyvinylacatet (PVA), Polyethylenvinylacate (EVA), Acrylnitril-Styrol-Copolymer (SAN), Acrylnitril-Butadien-Styrol (ABS), Acrylester-Styrol-Acrylnitril (ASA), Acrylnitril-Butadien-Acrylat (ABA) und Gemischen daraus.

**13.** Verwendung eines Polymers erhältlich durch Polymerisation eines Monomers mit Struktur gemäß Formel (I)

$$A\text{-}B\text{-}C'\text{-}D \qquad (I),$$

wobei

A eine radikalisch polymerisierbare Gruppe mit der Formel $-CR^{V1}=CR^{V2}R^{V3}$ ist, wobei $R^{V1,}$ $R^{V2}$ und $R^{V3}$ unabhängig voneinander Wasserstoff, Methyl, Chlorid-, Cyano- oder Estergruppen sind,
B ein aromatischer Abstandshalter ist,
C' ein aliphatischer Abstandshalter mit der Formel $-CR^{S1}R^{S2}$-ist, wobei $R^{S1}$ und $R^{S2}$unabhängig voneinander Wasserstoff oder Methyl sind, und
D ein Amin mit der Formel $-NR^{A1}R^{A2}$ ist, wobei
$R^{A1}$ eine nicht aromatische Gruppe mit 2 bis 7 Kohlenstoffatomen ist, und
$R^{A2}$ Wasserstoff, Methyl oder eine nicht aromatische Gruppe mit 2 bis 7 Kohlenstoffatomen, ist, oder wobei $R^{A1}$ und $R^{A2}$ miteinander verbunden sind und einen Ring zusammen mit dem Stickstoff bilden, wobei der Ring 3 bis 6 Kohlenstoffatome enthält, wobei der gebildete Ring bis zu 4 Methylgruppen tragen kann,
wobei bevorzugt die Glastemperatur $T_G$ des Polymers 60 °C bis 200 °C beträgt; und/oder

eines Copolymers, erhältlich durch die Umsetzung mindestens eines Monomers gemäß Formel (I), wobei die Gruppen A, B, C' und D wie vorstehend definiert sind, und mindestens einem weiteren Monomer, bevorzugt umfassend

a) alkalische Monomere, ausgewählt aus Vinylimidazolen wie 1-Vinylimidazol, 2-Methyl-1-vinylimidazol, N-Vinyloxazolidon, N-tert.-Butylaminoethylmethacrylat, N,N-Dimethyl-aminoethylmethacrylat, N,N-Diethylaminoethylmethacrylat, N,N-Diisopropyl-amino-ethylmethacrylat, 2-Vinylpyridin, 3-Vinylpyridin, 4-Vinylpyridin, N-Vinyltriazol, Aminalkylvinylether, sowie Gemischen daraus, und/oder
b) saure Monomere, ausgewählt aus Acrylsäure, Chloracrylsäure, Cyanacrylsäure, Methacrylsäure, Itaconsäure und deren Anhydrid, Mesaconsäure, Citraconsäure, Crotonsäure, Fumarsäure, Maleinsäure, Vinylbenzoesäure und deren Isomeren, Zimtsäure, Stilbendicarbonsäure, Vinylphosphonsäure, Vinylbenzylphosphonsäure, Vinylbenzylsulfonsäure, Vinylsulfonsäure, 2-Styrolsulfonsäure, 3-Styrolsulfonsäure, 4-Styrolsulfonsäure, 2-Styrolphosphonsäure, 3-Styrolphosphonsäure, 4-Styrolphosphonsäure sowie Gemischen daraus und/oder
c) assoziierende Monomere, ausgewählt aus Acrylnitril, Methacrylnitril, N,N-Dimethylacrylamid, N-Ethylacrylamid, N-tert.-Butylacrylamid, Vinyl-Methylacetamid, N-tert.-Octylacrylamid, Methylcyanacrylat, Dicyanoethylen, 1-Nitrovinylen, 1-Nitro-1-Methylvinyliden, Vinylpyrrolidon, Vinylcaprolactam, und Vinylbenzonitril und dessen Isomeren sowie Gemischen daraus, und /oder
d) Standardmonomere, ausgewählt aus Ethylen, Butadien, Isopren, Chloropren, Methacrylester, Acrylester, Vinylether (z.B. Ethylvinylether, Isobutylvinylether, tert.-Butylvinylether, Methylvinylether, Butylvinylether, Cyclohexylvinylether), Vinyl-carbazol, Vinylthioether, Vinylester, Vinylcyclohexan Vinylmethylchlorid, Vinylidenfluorid, Vinylacetat, Vinylsilan, Vinylchlorid, Vinylfluorid, Vinylidenchlorid, Vinylbenzylchlorid, Vinylbenzylbromid, Diester der Fumarsäure, Diamide der Fumarsäure, Imide der Maleinsäure sowie Gemischen daraus,

wobei bevorzugt die Glastemperatur $T_G$ des Copolymers 65 °C bis 230°C beträgt, oder eines Polymerblends gemäß Anspruch 8 bis 12 zur antimikrobiellen Ausrüstung, zur Herstellung antimikrobieller Erzeugnisse oder zur Herstellung antimikrobieller Verbundelemente, wobei das Polymer oder der Polymerblend thermoplastisch verarbeitbar sind.

**14.** Verwendung gemäß Anspruch 13, wobei antimikrobiellen Ausrüstung, die Herstellung antimikrobieller Erzeugnisse oder die Herstellung antimikrobieller Verbundelemente durch thermoplastische Verarbeitung erfolgt.

**15.** Verbundelement, enthaltend
Trägermaterial, und
antimikrobielles Polymer gemäß den Ansprüchen 1 bis 6 oder Polymerblend gemäß den Ansprüchen 8 bis 12, und gegebenenfalls Haftvermittler und/oder Kleber, wobei es sich um eine Verbundfolie handelt.

## Claims

**1.** Antimicrobial polymer obtainable by polymerizing a monomer, wherein the monomer is represented by the structural formulae (IIa to IIc) or mixtures thereof,

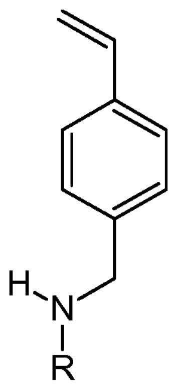

IIa

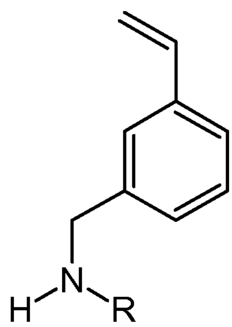

IIb

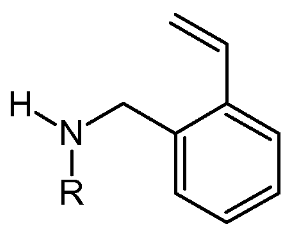

IIc

and wherein the residue R is ethyl, propyl, butyl, pentyl, hexyl and heptyl, cyclopropyl, cyclobutyl, cyclopentyl or cyclohexyl isopropyl, sec-butyl, iso-butyl, tert-butyl, 2-pentyl (sec. pentyl), 3-pentyl, 2-methyl-butyl, 3-methylbutyl (isopentyl), 3-methyl-but-2-yl, 2-methylbut-2-yl, 2,2-dimethylpropyl (neopentyl), 2-methylpentyl, 3-methylpentyl, 2,3-dimethylbutyl, 2,2-dimethylbutyl (neohexyl) or 3-ethylpentyl,
wherein the antimicrobial polymer's glass temperature is 60°C to 200°C.

**2.** Antimicrobial polymer according to claim 1, wherein the polymer is a homopolymer.

**3.** Antimicrobial polymer according to claim 1, wherein the polymer is a copolymer, obtainable by reacting at least one monomer of formulae (IIa to IIc), with at least one further monomer, preferably comprising

a) alkaline monomers selected from vinyl imidazoles such as 1-vinyl imidazole, 2-methyl-1-vinyl imidazole, N-vinyloxazolidone, N-tert.-butylaminoethylmethacrylate, N,N-dimethylaminoethylmethacrylate, N,N-diethylaminoethylmethacrylate, N,N-diisopropyl-aminoethylmethacrylate, 2-vinylpyridine, 3-vinylpyridine, 4-vinylpyridine, N-vinyltriazole, aminalkylvinylether, as well as mixtures thereof and/or
b) acidic monomers selected from acrylic acid, chloroacrylic acid, cyanoacrylic acid, methacrylic acid, itaconic acid and its anhydride, mesaconic acid, citraconic acid, crotonic acid, fumaric acid, maleic acid, vinylbenzoic acid and its isomers, cinnamic acid, stilbenedicarboxylic, vinylphosphonic acid, vinylbenzylphosphonic acid, vinylbenzylsulfoninc acid, vinylsulfonic acid, 2-styrenesulfonic acid, 3-styrenesulfonic acid, 4-styrenesulfonic acid, 2-styrenephosphonic acid, 3-styrenephosphonic acid, 4-styrenephosphonic acid as well as mixture thereof and/or
c) associating monomers selected from acrylonitrile, methacrylonitrile, N,N-dimethylacrylamide, N-ethacrylamide, N-tert-butylacrylamide, vinyl methylacetamide, N-tert-octylacrylamide, methyl cyanoacrylate, dicyanoethelyene, 1-nitrovinylene, 1-nitro-1-methylvinylidene, vinylpyrrolidone, vinylcaprolactam and vinylbenzonitrile and their isomers as well as mixtures thereof and /or
d) standard monomers selected from ethylene, butadiene, isoprene, chloroprene, methacrylic ester, acrylic ester, vinyl ether (e.g. ethyl vinyl ether, isobutyl vinyl ether, tert-butyl vinyl ether, methyl vinyl ether, butyl vinyl ether, cyclohexyl vinyl ether), vinyl carbazole, vinyl thioether, vinyl ester, vinyl cyclohexene vinyl methyl chloride, vinylidene fluoride, vinyl acetate, vinyl silane, vinyl chloride, vinyl fluoride, vinylidene chloride, vinyl benzyl chloride, vinyl benzyl bromide, diesters of fumaric acid, diamides of fumaric acid, imides of maleic acid and mixtures thereof,

wherein the copolymer's glass temperature $T_G$ is 65°C to 200°C.

**4.** Antimicrobial polymer according to one of claims 1 to 3, wherein the number average molecular weight $M_n$ is 4,500 to 2,000,000 daltons, determined via gel permeation chromatography.

**5.** Antimicrobial polymer according to one of claims 1 to 4, wherein an acid group-containing compound or an acid group-forming compound or mixtures thereof are added before, during or after polymerization.

**6.** Antimicrobial polymer according to one of claims 1 to 5, wherein the polymer's maximum water absorption is 35 wt. %, relative to the polymer's weight.

**7.** Method for preparing an antimicrobial polymer according to one of claims 1 to 6, comprising the following steps:

(I) providing a monomer in accordance with formulae (IIa to IIc),
(Ii) if necessary, providing at least one additional monomer, and
(Iii) polymerizing the monomers by or without adding a polymerization initiator.

**8.** Antimicrobial polymer blend containing an antimicrobial polymer obtainable by polymerizing a monomer having a structure according to formula I

A-B-C'-D (I),

wherein

A is a radically polymerizable group of the formula $-CR^{V1}=CR^{V2}R^{V3}$ist, wherein $R^{V1,}$ $R^{V2}$ and $R^{V3}$, independently of each other, are hydrogen, methyl, chloride, cyano or ester groups,

B is an aromatic spacer,
C' is an aliphatic spacer of the formula $-CR^{S1}R^{S2}-$, wherein $R^{S1}$ and $R^{S2}$, independently of each other, are hydrogen or methyl, and
D is an amine of the formula $-NR^{A1}R^{A2}$, wherein
$R^{A1}$ is a non-aromatic group with 2 to 7 carbon atoms, and
$R^{A2}$ is hydrogen, methyl or a non-aromatic group with 2 to 7 carbon atoms, wherein
$R^{A1}$ and $R^{A2}$ are connected to each other and form a ring together with the nitrogen, wherein the ring includes 3 to 6 carbon atoms, wherein the ring formed can carry up to 4 methyl groups,
wherein the polymer's glass temperature $T_G$ is preferably 60°C to 200°C,
and/or
a copolymer obtainable by reacting at least one monomer of the formula I, wherein groups A, B, C' and D are defined as set out above and at least one further monomer, preferably comprising

a) alkaline monomers selected from vinyl imidazoles such as 1-vinyl imidazole, 2-methyl-1-vinyl imidazole, N-vinyloxazolidone, N-tert.-butylaminoethylmethacrylate, N,N-dimethylaminoethylmethacrylate, N,N-diethylaminoethylmethacrylate, N,N-diisopropyl-aminoethylmethacrylate, 2-vinylpyridine, 3-vinylpyridine, 4-vinylpyridine, N-vinyltriazole, aminalkylvinylether, as well as mixtures thereof and/or
b) acidic monomers selected from acrylic acid, chloroacrylic acid, cyanoacrylic acid, methacrylic acid, itaconic acid and its anhydride, mesaconic acid, citraconic acid, crotonic acid, fumaric acid, maleic acid, vinylbenzoic acid and its isomers, cinnamic acid, stilbenedicarboxylic, vinylphosphonic acid, vinylbenzylphosphonic acid, vinylbenzylsulfoninc acid, vinylsulfonic acid, 2-styrenesulfonic acid, 3-styrenesulfonic acid, 4-styrenesulfonic acid, 2-styrenephosphonic acid, 3-styrenephosphonic acid, 4-styrenephosphonic acid as well as mixture thereof and/or
c) associating monomers selected from acrylonitrile, methacrylonitrile, N,N-dimethylacrylamide, N-ethacrylamide, N-tert-butylacrylamide, vinyl methylacetamide, N-tert-octylacrylamide, methyl cyanoacrylate, dicyanoethelyene, 1-nitrovinylene, 1-nitro-1-methylvinylidene, vinylpyrrolidone, vinylcaprolactam and vinylbenzonitrile and their isomers as well as mixtures thereof and /or
d) standard monomers selected from ethylene, butadiene, isoprene, chloroprene, methacrylic ester, acrylic ester, vinyl ether (e.g. ethyl vinyl ether, isobutyl vinyl ether, tert-butyl vinyl ether, methyl vinyl ether, butyl vinyl ether, cyclohexyl vinyl ether), vinyl carbazole, vinyl thioether, vinyl ester, vinyl cyclohexene vinyl methyl chloride, vinylidene fluoride, vinyl acetate, vinyl silane, vinyl chloride, vinyl fluoride, vinylidene chloride, vinyl benzyl chloride, vinyl benzyl bromide, diesters of fumaric acid, diamides of fumaric acid, imides of maleic acid and mixtures thereof,

wherein the copolymer's glass temperature $T_G$ is preferably 65°C to 230°C,
and at least one further polymer (BLEPO), and wherein the antimicrobial polymer blend is thermoplastically processable.

**9.** Antimicrobial polymer blend according to claim 8, wherein an acid group-containing compound or an acid group-forming compound or mixtures thereof are added before, during or after polymerization.

**10.** Antimicrobial polymer blend according to one of claims 8 to 9, wherein the polymer's maximum water absorption is 35 wt. %, relative to the polymer's weight.

**11.** Antimicrobial polymer blend according to one of claims 8 to 10, wherein the further polymer (BLEPO) is a thermoplastically processable polymer.

**12.** Antimicrobial polymer blend according to one of claims 8 to 11, wherein the further polymer (BLEPO) is selected from polyvinylpyridine and its copolymers, polyvinylpyrrolidine, polyvinylimidazoles, and their copolymers, polyvinylcarbazole and its copolymers, aromatic and aliphatic thermoplastic polyurethane (TPU), polypyrrole, polyacrylic acid (PAA), polymethacrylic acid (PMAA), polymethylmethacrylate (PMMA), MSA grafted polyethylene (MSA-PE), polychloroacrylic acid, and polycyanoacrylic acid, polyester, polybutylene therephthalate (PBT), polyethylene therephthalate (PET), polyamides (PA), polyarylamide, polyimide, polyacrylamides (PARA), polyamideimide (PAI), polyether block amides (PEBA), polyphthalamides (PPA), polyesteramide (PEA), polyoxymethylene (POM), polyetherketones, polyphenylene ether (PPE, PPO), polyamides, polycarbonates (PC), polyethersulfones, poly(2,6-diphenyl phenylene oxide), polyarylether (PAE), polyarylsulfones (PASU), polycyclohexylene dimethyleneterephthalate (PCT), polyethersulfones (PES), high-impact polystyrene (HIPS), polyolefines and their copolymers, ethylene propylene diene rubber (EPDM), polyoxymethylene (POM), polyvinylchlorides (PVC), polyvinylacetate (PVA), polyethylene vinylacetate (EVA), acrylonitrile styrene copolymer (SAN), acrylonitrile butadiene styrene (ABS), acrylic ester styrene acrylonitrile (ASA), acrylonitrile butadiene acrylate (ABA) and mixtures thereof.

**13.** Use of a polymer obtainable by polymerizing a monomer having a structure according to formula I

A-B-C'-D (I),

wherein

A is a radically polymerizable group of the formula $-CR^{V1}=CR^{V2}R^{V3}$, wherein $R^{V1}$, $R^{V2}$ and $R^{V3}$, independently of each other, are hydrogen, methyl, chloride, cyano or ester groups,
B is an aromatic spacer,
C' is an aliphatic spacer of the formula $-CR^{S1}R^{S2}-$, wherein $R^{S1}$ and $R^{S2}$, independently of each other, are hydrogen or methyl, and
D is an amine of the formula $-NR^{A1}R^{A2}$, wherein
$R^{A1}$ is a non-aromatic group with 2 to 7 carbon atoms, and
$R^{A2}$ is hydrogen, methyl or a non-aromatic group with 2 to 7 carbon atoms, wherein
$R^{A1}$ and $R^{A2}$ are connected to each other and form a ring together with the nitrogen, wherein the ring includes 3 to 6 carbon atoms, wherein the ring formed can carry up to 4 methyl groups,
wherein the polymer's glass temperature $T_G$ is preferably 60°C to 200°C,
and/or
a copolymer obtainable by reacting at least one monomer of the formula I, wherein groups A, B, C' and D are defined as set out above and at least one further monomer, preferably comprising

a) alkaline monomers selected from vinyl imidazoles such as 1-vinyl imidazole, 2-methyl-1-vinyl imidazole, N-vinyloxazolidone, N-tert.-butylaminoethylmethacrylate, N,N-dimethylaminoethylmethacrylate, N,N-diethylaminoethylmethacrylate, N,N-diisopropyl-aminoethylmethacrylate, 2-vinylpyridine, 3-vinylpyridine, 4-vinylpyridine, N-vinyltriazole, aminalkylvinylether, as well as mixtures thereof and/or
b) acidic monomers selected from acrylic acid, chloroacrylic acid, cyanoacrylic acid, methacrylic acid, itaconic acid and its anhydride, mesaconic acid, citraconic acid, crotonic acid, fumaric acid, maleic acid, vinylbenzoic acid and its isomers, cinnamic acid, stilbenedicarboxylic, vinylphosphonic acid, vinylbenzylphosphonic acid, vinylbenzylsulfoninc acid, vinylsulfonic acid, 2-styrenesulfonic acid, 3-styrenesulfonic acid, 4-styrenesulfonic acid, 2-styrenephosphonic acid, 3-styrenephosphonic acid, 4-styrenephosphonic acid as well as mixture thereof and/or
c) associating monomers selected from acrylonitrile, methacrylonitrile, N,N-dimethylacrylamide, N-ethacrylamide, N-tert-butylacrylamide, vinyl methylacetamide, N-tert-octylacrylamide, methyl cyanoacrylate, dicyanoethelyene, 1-nitrovinylene, 1-nitro-1-methylvinylidene, vinylpyrrolidone, vinylcaprolactam and vinylbenzonitrile and their isomers as well as mixtures thereof and /or
d) standard monomers selected from ethylene, butadiene, isoprene, chloroprene, methacrylic ester, acrylic ester, vinyl ether (e.g. ethyl vinyl ether, isobutyl vinyl ether, tert-butyl vinyl ether, methyl vinyl ether, butyl vinyl ether, cyclohexyl vinyl ether), vinyl carbazole, vinyl thioether, vinyl ester, vinyl cyclohexene vinyl methyl chloride, vinylidene fluoride, vinyl acetate, vinyl silane, vinyl chloride, vinyl fluoride, vinylidene chloride, vinyl benzyl chloride, vinyl benzyl bromide, diesters of fumaric acid, diamides of fumaric acid, imides of maleic acid and mixtures thereof,

wherein the copolymer's glass temperature $T_G$ is preferably 65°C to 230°C,
a polymer blend according to claims 8 to 12 for antimicrobial treatment, the preparation of antimicrobial products, or the production of antimicrobial composite elements, wherein the polymer or polymer blend can be processed thermoplastically.

**14.** Use according to claim 13, wherein the antimicrobial treatment, the preparation of antimicrobial products, or the production of antimicrobial composite elements is effected through thermoplastic processing.

**15.** Composite element containing
carrier material and
an antimicrobial polymer according to claims 1 to 6 or a polymer blend according to claims 8 to 12 and
if necessary an adhesive promoter and/or adhesive,
wherein this element is a composite film.

**Revendications**

1. Polymère antimicrobien pouvant être obtenu par polymérisation d'un monomère, dans lequel le monomère est représenté par les formules structurales (IIa à IIc) ou des mélanges de ceux-ci,

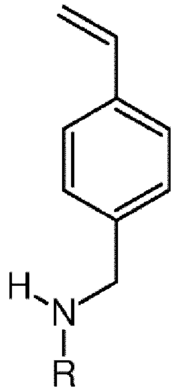

IIa

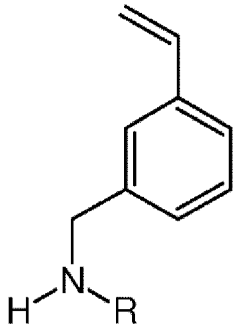

IIb

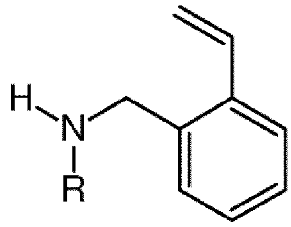

IIc

et dans lesquelles le radical R représente éthyle, propyle, butyle, pentyle, hexyle et heptyle, cyclopropyle, cyclobutyle, cyclopentyle ou cyclohexyle, isopropyle, sec-butyle, isobutyle, tert-butyle, 2-pentyle (sec-pentyle), 3-pentyle, 2-méthylbutyle, 3-méthylbutyle (isopentyle), 3-méthylbut-2-yle, 2-méthylbut-2-yle, 2,2-diméthylpropyle (néopentyle), 2-méthylpentyle, 3-méthylpentyle, 2,3-diméthylbutyle, 2,2-diméthylbutyle (néohexyle) ou 3-éthylpentyle,
dans lequel la température de transition vitreuse du polymère antimicrobien est de 60 °C à 200 °C.

2. Polymère antimicrobien selon la revendication 1, dans lequel le polymère est un homopolymère.

3. Polymère antimicrobien selon la revendication 1, dans lequel le polymère est un copolymère pouvant être obtenu par réaction d'au moins un monomère de formule (IIa-IIc), et d'au moins un autre monomère, comprenant de préférence

a) des monomères alcalins, choisis parmi les vinylimidazoles tels que le 1-vinylimidazole, le 2-méthyl-1-vinylimidazole, la N-vinyloxazolidone, le méthacrylate de N-tert-butylaminoéthyle, le méthacrylate de N,N-diméthylaminoéthyle, le méthacrylate de diéthylaminoéthyle, le méthacrylate de N,N-diisopropylaminoéthyle, la 2-vinylpyridine, la 3-vinylpyridine, la 4-vinylpyridine, le N-vinyltriazole, l'aminalkylvinyléther ainsi que des mélanges de ceux-ci, et / ou
b) des monomères acides, choisis parmi l'acide acrylique, l'acide chloroacrylique, l'acide cyanoacrylique, l'acide méthacrylique, l'acide itaconique et son anhydride, l'acide mésaconique, l'acide citraconique, l'acide crotonique, l'acide fumarique, l'acide maléique, l'acide vinylbenzoïque et ses isomères, l'acide cinnamique, l'acide stilbènedicarboxylique, l'acide vinylphosphonique, l'acide vinylbenzylphosphonique, l'acide vinylbenzylsulfonique, l'acide vinylsulfonique, l'acide 2-styrènesulfonique, l'acide 3-styrènesulfonique, l'acide 4-styrène-sulfonique, l'acide 2-styrène-cyclonique, l'acide 3-styrénophosphonique, l'acide 4-styrénophosphonique ainsi que des mélanges de ceux-ci, et / ou
c) des monomères associant choisis parmi l'acrylonitrile, le méthacrylonitrile, le N,N-diméthylacrylamide, le N-éthylacrylamide, le N-tert-butylacrylamide, le vinyl-méthyl-acétamide, le N-tert-octylacrylamide, le méthylcyanoacrylate, le dicyanoéthylène, le 1-nitrovinylène, le 1-nitro-1-méthylvinylidène, la vinylpyrrolidone, le vinylcaprolactame et le vinylbenzonitrile et ses isomères ainsi que des mélanges de ceux-ci, et / ou
d) des monomères standards choisis parmi l'éthylène, le butadiène, l'isoprène, le chloroprène, les esters méthacryliques, les esters acryliques, les éthers vinyliques (par exemple l'éther vinylique d'éthyle, l'éther vinylique d'isobutyle, l'éther vinylique de tert-butyle, l'éther vinylique de méthyle, l'éther vinylique de butyle, l'éther vinylique de cyclohexyle) le vinyl-carbazole, les thioéther vinyliques, les ester vinyliques, le vinylcyclohexane, le chlorure de vinylméthyle, le fluorure de vinylidène, l'acétate de vinyle, le vinylsilane, le chlorure de vinyle, le fluorure de vinyle, le chlorure de vinylidène, le chlorure de vinylbenzyle, le bromure de vinylbenzyle, des diesters de l'acide fumarique, des diamides de l'acide fumarique, des imides de l'acide maléique ainsi que des mélanges de ceux-ci,

dans lequel la température de transition vitreuse $T_G$ du copolymère est de 65 °C à 200 °C.

**4.** Polymère antimicrobien selon l'une quelconque des revendications 1 à 3, dans lequel la masse moléculaire moyenne en nombre $M_n$ est comprise entre 4'500 et 2'000'000 daltons, déterminée par chromatographie par perméation de gel.

**5.** Polymère antimicrobien selon l'une quelconque des revendications 1 à 4, dans lequel un composé contenant un groupe acide ou un composé formant un groupe acide ou des mélanges de ceux-ci est ajouté avant, pendant ou après la polymérisation.

**6.** Polymère antimicrobien selon l'une quelconque des revendications 1 à 5, dans lequel l'absorption maximale d'eau du polymère est de 35% en poids sur la base du poids du polymère.

**7.** Procédé de production d'un polymère antimicrobien selon l'une quelconque des revendications 1 à 6, comprenant les étapes consistant en

(i) la fourniture d'un monomère de formule (IIa-IIc),
(ii) éventuellement la fourniture d'au moins un autre monomère et
(iii) la polymérisation des monomères avec ou sans ajout d'un initiateur de polymérisation.

**8.** Mélange de polymères antimicrobiens contenant un polymère antimicrobien pouvant être obtenu par polymérisation d'un monomère ayant la structure selon la formule (I)

A-B-C'-D (I),

dans lequel le polymère est un homopolymère ou un copolymère pouvant être obtenu par polymérisation d'un monomère ayant la structure de formule (I), dans laquelle

A représente un groupe polymérisable par radicaux de formule $-CR^{V1}=CR^{V2}R^{V3}$, dans laquelle $R^{V1}$, $R^{V2}$ et $R^{V3}$ représentent indépendamment l'un de l'autre un atome d'hydrogène, du méthyle, des groupes chlorure, cyano ou ester,
B représente un espaceur aromatique,
C' représente un espaceur aliphatique de formule $-CR^{S1}R^{S2}-$, dans laquelle $R^{S1}$ et $R^{S2}$ représentent indépendamment l'un de l'autre un atome d'hydrogène ou du méthyle, et
D représente une amine de formule $-NR^{A1}R^{A2}$, dans laquelle
$R^{A1}$ représente un groupe non-aromatique ayant 2 à 7 atomes de carbone, et
$R^{A2}$ représente un atome d'hydrogène, du méthyle ou un groupe non aromatique ayant 2 à 7 atomes de carbone, ou dans laquelle
$R^{A1}$ et $R^{A2}$ sont liés ensemble et forment un cycle ensemble avec l'azote, dans lequel le cycle contient 3 à 6 atomes de carbone, dans lequel le cycle formé peut porter jusqu'à 4 groupes méthyle,
et facultativement au moins un autre monomère, de préférence comprenant

a) des monomères alcalins, choisis parmi les vinylimidazoles tels que le 1-vinylimidazole, le 2-méthyl-1-vinylimidazole, la N-vinyloxazolidone, le méthacrylate de N-tert-butylaminoéthyle, le méthacrylate de N,N-diméthyl-aminoéthyle, le méthacrylate de diéthylaminoéthyle, le méthacrylate de N,N-diisopropylaminoéthyle, la 2-vinylpyridine, la 3-vinylpyridine, la 4-vinylpyridine, le N-vinyltriazole, l'aminalkylvinyléther ainsi que des mélanges de ceux-ci, et / ou
b) des monomères acides, choisis parmi l'acide acrylique, l'acide chloroacrylique, l'acide cyanoacrylique, l'acide méthacrylique, l'acide itaconique et son anhydride, l'acide mésaconique, l'acide citraconique, l'acide crotonique, l'acide fumarique, l'acide maléique, l'acide vinylbenzoïque et ses isomères, l'acide cinnamique, l'acide stilbènedicarboxylique, l'acide vinylphosphonique, l'acide vinylbenzylphosphonique, l'acide vinylbenzylsulfonique, l'acide vinylsulfonique, l'acide 2-styrènesulfonique, l'acide 3-styrènesulfonique, l'acide 4-styrène-sulfonique, l'acide 2-styrène-cyclonique, l'acide 3-styrénophosphonique, l'acide 4-styrénophosphonique ainsi que des mélanges de ceux-ci, et / ou
c) des monomères associant choisis parmi l'acrylonitrile, le méthacrylonitrile, le N,N-diméthylacrylamide, le N-éthylacrylamide, le N-tert-butylacrylamide, le vinyl-méthyl-acétamide, le N-tert-octylacrylamide, le méthylcyanoacrylate, le dicyanoéthylène, le 1-nitrovinylène, le 1-nitro-1-méthylvinylidène, la vinylpyrrolidone, le vinylcaprolactame et le vinylbenzonitrile et ses isomères ainsi que des mélanges de ceux-ci, et / ou
d) des monomères standards choisis parmi l'éthylène, le butadiène, l'isoprène, le chloroprène, les esters

méthacryliques, les esters acryliques, les éthers vinyliques (par exemple l'éther vinylique d'éthyle, l'éther vinylique d'isobutyle, l'éther vinylique de tert-butyle, l'éther vinylique de méthyle, l'éther vinylique de butyle, l'éther vinylique de cyclohexyle) le vinyl-carbazole, les thioéther vinyliques, les ester vinyliques, le vinylcyclohexane, le chlorure de vinylméthyle, le fluorure de vinylidène, l'acétate de vinyle, le vinylsilane, le chlorure de vinyle, le fluorure de vinyle, le chlorure de vinylidène, le chlorure de vinylbenzyle, le bromure de vinylbenzyle, des diesters de l'acide fumarique, des diamides de l'acide fumarique, des imides de l'acide maléique ainsi que des mélanges de ceux-ci,

dans lequel la température de transition vitreuse $T_G$ du copolymère de préférence est de 65 °C à 230 °C,
et au moins un autre polymère (BLEPO), et
dans lequel le mélange de polymères antimicrobiens est susceptible d'être traité comme thermoplastique.

**9.** Mélange de polymères antimicrobiens selon la revendication 8, dans lequel un composé contenant un groupe acide ou un composé formant un groupe acide ou des mélanges de ceux-ci est ajouté avant, pendant ou après la polymérisation.

**10.** Mélange de polymères antimicrobiens selon l'une des revendications 8 ou 9, dans lequel l'absorption maximale d'eau du polymère est de 35% en poids sur la base du poids du polymère.

**11.** Mélange de polymères antimicrobiens selon l'une quelconque des revendications 8 à 10, dans lequel l'autre polymère (BLEPO) est un polymère qui est susceptible d'être traité comme thermoplastique.

**12.** Mélange de polymères antimicrobiens selon l'une quelconque des revendications 8 à 11, dans lequel l'autre polymère (BLEPO) est choisi parmi la polyvinylpyridine et ses copolymères, la polyvinylpyrrolidine, les polyvinylimidazoles ainsi que leurs copolymères, le polyvinylcarbazole et ses copolymères, le polyuréthane thermoplastique aliphatique et aromatique (TPU), le polypyrrole, l'acide polyacrylique (PAA), l'acide polyméthacrylique (PMAA), le polyméthacrylate de méthyle (PMMA), le MSA greffé au polyéthylène (MSA-PE), l'acide polychloroacrylique, et l'acide polycyanoacrylique, les polyesters, le téréphtalate de polybutylène (PBT), le téréphtalate de polyéthylène (PET), les polyamides (PA), les polyarylamides, les polyimides, les polyacrylamides (PARA), les polyamidimides (PAI), les block-amides de polyéther (PEBA), les polyphtalamides (PPA), polyesters-amides (PEA), les polyoxyméthylènes (POM), les polyéther-cétones, les éthers de polyphénylène (PPE, PPO), les polyamides, les polycarbonates (PC), les polyéthersulfones, le poly(2,6-diphénylphénylènoxyde), les polyaryléther (PAE), les polyarylsulfones (PASU), le polycyclohexyl-endéméthylène-téréphtalate (PCT), les polyethersulfones (PES), le polystyrène choc (HIPS), les polyoléfines et leurs copolymères, le caoutchouc éthylène-propylène-diène (EPDM), le polyoxyméthylène (POM), le chlorure de polyvinyle (PVC), le poly(acétate de vinyle) (PVA), le poly(éthylène-acétate de vinyle) (EVA), le copolymère acrylonitrile-styrène (SAN), l'acrylonitrile-butadiène-styrène (ABS), l'acrylonitrile-styrène-acrylate (ASA), l'acrylonitrile-butadiène-acrylate (ABA) et des mélanges de ceux-ci.

**13.** Utilisation d'un polymère pouvant être obtenu par polymérisation d'un monomère ayant la structure selon la formule (I)

A-B-C'-D (I),

dans laquelle

A représente un groupe polymérisable par radicaux de formule $-CR^{V1}=CR^{V2}R^{V3}$, dans laquelle $R^{V1}$, $R^{V2}$ et $R^{V3}$ représentent indépendamment l'un de l'autre un atome d'hydrogène, du méthyle, des groupes chlorure, cyano ou ester,
B représente un espaceur aromatique,
C' représente un espaceur aliphatique de formule $-CR^{S1}R^{S2}-$, dans laquelle $R^{S1}$ et $R^{S2}$ représentent indépendamment l'un de l'autre un atome d'hydrogène ou du méthyle, et
D représente une amine de formule $-NR^{A1}R^{A2}$, dans laquelle
$R^{A1}$ représente un groupe non-aromatique ayant 2 à 7 atomes de carbone, et
$R^{A2}$ représente un atome d'hydrogène, du méthyle ou un groupe non aromatique ayant 2 à 7 atomes de carbone, ou dans laquelle
$R^{A1}$ et $R^{A2}$ sont liés ensemble et forment un cycle ensemble avec l'azote, dans lequel le cycle contient 3 à 6 atomes de carbone, dans lequel le cycle formé peut porter jusqu'à 4 groupes méthyle,
dans laquelle la température de transition vitreuse $T_G$ du polymère de préférence est de 60 °C à 200 °C ;
et / ou

d'un copolymère, pouvant être obtenu par réaction d'un monomère ayant la structure selon la formule (I), dans lequel les groupes A, B, C' et D sont définis tels qu'en haut, et d'au moins un autre monomère, de préférence comprenant

a) des monomères alcalins, choisis parmi les vinylimidazoles tels que le 1-vinylimidazole, le 2-méthyl-1-vinylimidazole, la N-vinyloxazolidone, le méthacrylate de N-tert-butylaminoéthyle, le méthacrylate de N,N-diméthyl-aminoéthyle, le méthacrylate de diéthylaminoéthyle, le méthacrylate de N,N-diisopropylaminoéthyle, la 2-vinylpyridine, la 3-vinylpyridine, la 4-vinylpyridine, le N-vinyltriazole, l'aminalkylvinyléther ainsi que des mélanges de ceux-ci, et / ou
b) des monomères acides, choisis parmi l'acide acrylique, l'acide chloroacrylique, l'acide cyanoacrylique, l'acide méthacrylique, l'acide itaconique et son anhydride, l'acide mésaconique, l'acide citraconique, l'acide crotonique, l'acide fumarique, l'acide maléique, l'acide vinylbenzoïque et ses isomères, l'acide cinnamique, l'acide stilbènedicarboxylique, l'acide vinylphosphonique, l'acide vinylbenzylphosphonique, l'acide vinylbenzylsulfonique, l'acide vinylsulfonique, l'acide 2-styrènesulfonique, l'acide 3-styrènesulfonique, l'acide 4-styrène-sulfonique, l'acide 2-styrène-cyclonique, l'acide 3-styrénophosphonique, l'acide 4-styrénophosphonique ainsi que des mélanges de ceux-ci, et / ou
c) des monomères associant choisis parmi l'acrylonitrile, le méthacrylonitrile, le N,N-diméthylacrylamide, le N-éthylacrylamide, le N-tert-butylacrylamide, le vinyl-méthyl-acétamide, le N-tert-octylacrylamide, le méthylcyanoacrylate, le dicyanoéthylène, le 1-nitrovinylène, le 1-nitro-1-méthylvinylidène, la vinylpyrrolidone, le vinylcaprolactame et le vinylbenzonitrile et ses isomères ainsi que des mélanges de ceux-ci, et / ou
d) des monomères standards choisis parmi l'éthylène, le butadiène, l'isoprène, le chloroprène, les esters méthacryliques, les esters acryliques, les éthers vinyliques (par exemple l'éther vinylique d'éthyle, l'éther vinylique d'isobutyle, l'éther vinylique de tert-butyle, l'éther vinylique de méthyle, l'éther vinylique de butyle, l'éther vinylique de cyclohexyle) le vinyl-carbazole, les thioéther vinyliques, les ester vinyliques, le vinylcyclohexane, le chlorure de vinylméthyle, le fluorure de vinylidène, l'acétate de vinyle, le vinylsilane, le chlorure de vinyle, le fluorure de vinyle, le chlorure de vinylidène, le chlorure de vinylbenzyle, le bromure de vinylbenzyle, des diesters de l'acide fumarique, des diamides de l'acide fumarique, des imides de l'acide maléique ainsi que des mélanges de ceux-ci,

dans laquelle la température de transition vitreuse $T_G$ du copolymère de préférence est de 65 °C à 230 °C ; ou d'un mélange de polymères selon la revendication 8 à 12 pour l'équipement antimicrobien, pour la fabrication de produits antimicrobiens ou pour la fabrication d'éléments composites antimicrobiens, dans laquelle le polymère ou le mélange de polymères est susceptible d'être traité comme thermoplastique.

**14.** Utilisation selon la revendication 13, dans laquelle l'équipement antimicrobien, la fabrication de produits antimicrobiens ou la fabrication d'éléments composites antimicrobiens est effectué par traitement thermoplastique.

**15.** Elément composite, comportant
un matériau de substrat, et
un polymère antimicrobien selon les revendications 1 à 6 ou un mélange de polymères selon les revendications 8 à 12, et
facultativement un agent de liage et / ou de la colle, dans lequel il s'agit d'un film composite.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 102008062824 A1
- DE 102008013143 A1
- DE 102007035063 A1
- DE 102006006675 A1
- DE 10024270
- DE 19709076
- DE 19921903 A1
- EP 663409 A1
- DE 10008177 A1
- EP 0611782 A1
- EP 0663409 A1
- US 4482680 A
- US 2006228966 A1
- US 2006234059 A1
- US 4447580 A